(19)

Europäisches
Patentamt

European
Patent Office

Office européen
des brevets

(11) EP 3 297 794 B1

(12) **EUROPÄISCHE PATENTSCHRIFT**

(45) Veröffentlichungstag und Bekanntmachung des Hinweises auf die Patenterteilung:
**01.12.2021 Patentblatt 2021/48**

(21) Anmeldenummer: **16733277.4**

(22) Anmeldetag: **21.05.2016**

(51) Int Cl.:
**B25J 9/16** (2006.01)   **G05B 9/03** (2006.01)

(86) Internationale Anmeldenummer:
**PCT/DE2016/000219**

(87) Internationale Veröffentlichungsnummer:
**WO 2016/184451 (24.11.2016 Gazette 2016/47)**

(54) **VERFAHREN UND VORRICHTUNG ZUR STEUERUNG/REGELUNG EINES AKTORISCH ANGETRIEBENEN ROBOTERGELENKS**

METHOD AND DEVICE FOR OPEN-LOOP/CLOSED-LOOP CONTROL OF AN ACTUATOR-DRIVEN ROBOT JOINT

PROCÉDÉ ET DISPOSITIF DE COMMANDE/RÉGULATION D'UNE ARTICULATION DE ROBOT ENTRAÎNÉE PAR ACTIONNEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2015   DE 102015108097**

(43) Veröffentlichungstag der Anmeldung:
**28.03.2018   Patentblatt 2018/13**

(73) Patentinhaber: **Kastanienbaum GmbH**
**80538 München (DE)**

(72) Erfinder: **HADDADIN, Sami**
**30173 Hannover (DE)**

(74) Vertreter: **Rösler Rasch van der Heide & Partner**
**Bodenseestraße 18**
**81241 München (DE)**

(56) Entgegenhaltungen:
EP-A2- 1 600 833     WO-A1-2014/036138
WO-A2-2007/057390     US-A1- 2014 201 571

**Beschreibung**

Die Erfindung betrifft ein Verfahren und eine Vorrichtung zur Steuerung/Regelung eines aktorisch angetriebenen Robotergelenks mit einer Fehlererkennung und entsprechenden Reaktionen.

WO 2016/184451 A1 beschreibt ein Robotersystem mit Fehlerüberwachung. Dazu werden jeweils zwei oder mehrere physikalische Größen des Robotersystems zu einer oder mehreren Bedingungen zusammengefasst und die Einhaltung der Bedingungen während des Betriebes zu überwachen. Die zugrunde liegenden Bedingungen, die von einem fehlerfrei arbeitenden System einzuhalten sind, werden dabei entweder analytisch oder experimentell ermittelt.

US 2014/0201571 A1 beschreibt ein System zur Fehlerdiagnose bei Robotern, bei dem Daten über Zeitverläufe von ausgewählten Messwerten gesammelt werden. Ausgehend von diesen Zeitverläufen werden vorbestimmte Eigenschaften der Zeitverläufe berechnet und die berechneten Eigenschaften analysiert. Basierend auf dieser Analyse werden Hypothesen erstellt, auf Basis derer auf einen Zustand des Systems geschlossen werden kann.

In EP 1 600 833 A2 ist ein Verfahren zum Betreiben eines Mehrachs-Industrieroboters beschrieben, bei dem bewegungscharakteristische Betriebswerte kontinuierlich gemessen werden und diese mit gespeicherten Referenzwerten verglichen werden.

WO2014/036138 A1 offenbart ein Verfahren, eine Vorrichtung, Computersystem, und ein Computer-Programm Produkt zur Steuerung/Regelung eines mittels eines Elektromotors angetriebenen Robotergelenks . Es wird von einer Vielzahl von Sensorsignalen und auch von einem Modell Gebrauch gemacht um beim Abweichen von einem Normalwert einen Alarm auszulösen und den Roboter bzw. das Robotergelenk in seiner Bewegung abzubremsen.

Die Aufgabe der Erfindung ist es, ein Verfahren und eine Vorrichtung zur Steuerung/Regelung eines aktorisch angetriebenen Robotergelenks anzugeben, wobei eine robuste Fehlererkennung beim Betrieb des Robotergelenks mit einer 1-Fehlersicherheit kostengünstig ermöglicht werden soll.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Erfindung betrifft ein Verfahren zur Steuerung/Regelung eines mittels eines Elektromotors angetriebenen Robotergelenks, wobei das Robotergelenk einen Stromsensor mit einer ersten Sensorelektronik zur Erfassung eines ersten Betriebsstroms $i_{k,1}(t)$ des Elektromotors, mit k = 1, 2, ..., einen ersten Positionssensor zur Erfassung einer Antriebsposition $\theta_m(t)$ eines Antriebsstrangs des Robotergelenks, einen zweiten Positionssensor zur Erfassung einer Abtriebsposition $q(t)$ eines Abtriebsstrangs des Robotergelenks, und einen ersten Drehmomentsensor zur Erfassung eines Drehmoments $\tau_{J,1}(t)$ im Abtriebsstrang aufweist, wobei der Elektromotor auf Basis einer vorgegebenen Soll-Stellgröße $\tau_m(t)$ gesteuert/geregelt wird. Dabei ist unter dem Begriff "Sensorelektronik" vorliegend eine Sensor- Mess- und Kommunikationselektronik zu verstehen.

Das vorgeschlagene Verfahren umfasst folgende Schritte. In einem Schritt erfolgt ein Bereitstellen der Messwerte $\theta_m(t), i_{k,1}(t), \tau_J(t), q(t)$.

In einem weiteren Schritt erfolgt ein Prüfen auf Vorliegen eines Fehlers durch den ersten Fehlerdetektor, der das Vorliegen eines Fehlers dann detektiert, wenn die Messwerte $\theta_m(t), i_{k,1}(t), \tau_J(t), q(t)$ und/oder deren Zeitableitungen vorgegebene erste Grenzwertbedingungen nicht erfüllen. Vorteilhaft werden mindestens die erste und die zweite Zeitableitung der jeweiligen Messwerte ermittelt. Die ersten Grenzwertbedingungen können die Messwerte $\theta_m(t), i_{k,1}(t), \tau_J(t), q(t)$, deren Zeitableitungen und/oder daraus abgeleitete (gefilterte, interpolierte, beobachtete etc.) Größen betreffen.

In einem weiteren Schritt erfolgt ein Prüfen auf Vorliegen eines Fehlers durch den zweiten Fehlerdetektor, der das Vorliegen eines Fehlers auf Basis der Messwerte $\theta_m(t), i_{k,1}(t), \tau_J(t), q(t)$ einer Prozessmodell-gestützten Methode ermittelt, wobei das Prozessmodell ein vorgegebenes mathematisches dynamisches Modell des Robotergelenks ist, und wobei ein Fehler dann detektiert wird, wenn Parameter des Modells, Residuen zwischen vom Prozessmodell rekonstruierten Größen und den Messgrößen und/oder Modell-intern ermittelte Parameter vorgegebene zweite Grenzwertbedingungen nicht erfüllen. Dabei werden je nach Prozessmodell-gestützter Methode beispielsweise Zeitableitungen der Messwerte $\theta_m(t), i_{k,1}(t), \tau_J(t), q(t)$ und/oder aus den Messwerten $\theta_m(t), i_{k,1}(t), \tau_J(t), q(t)$ und/oder deren Zeitableitungen abgeleitete Größen genutzt. Zur Ermittlung eines Vorliegen eines Fehlers können je nach Prozessmodell auch ein oder mehrere der Messwerte $\theta_m(t), i_{k,1}(t), \tau_J(t), q(t)$ ungenutzt bleiben.

In einem weiteren Schritt erfolgt entweder ein Bereitstellen der Messwerte $\tau_J(t)$ an einen dritten Fehlerdetektor, der das Vorliegen eines Fehlers auf Basis einer Signal-gestützten Methode detektiert, wobei ein Fehler dann detektiert wird, wenn Signalgrößen, wie Amplituden und/oder charakteristische Frequenzen, der Messwerte $\tau_J(t)$ vorgegebene dritte Grenzwertbedingungen nicht erfüllen, oder ein Ermitteln eines Drehmoment $\tau_J(t)$ im Abtriebsstrang mit einem zweiten Drehmomentsensor oder mit einer redundant ausgelegten Sensorelektronik des ersten Drehmomentsensors und Detektieren eines Fehlers durch einen vierten Fehlerdetektor dann, wenn ein Vergleich von $\tau_{J,1}(t)$ und $\tau_{J,2}(t)$ vierten Grenzwertbedingungen nicht genügt. Sofern das Robotergelenk einen zweiten Drehmomentsensor oder einen ersten Drehmomentsensor mit einer redundant ausgelegten Sensorelektronik aufweist, erfolgt in diesem Schritt vorteilhaft lediglich die Auswertung der Drehmomente $\tau_{J,1}(t)$ und $\tau_{J,2}(t)$.

In einem weiteren Schritt erfolgt, sofern von einem der am Robotergelenk vorhandenen Fehlerdetektoren ein Fehler detektiert wird, ein Erzeugen eines Warnsignals und/oder ein Ansteuern des Elektromotors mit Stellgrößen $\tau_m^F(t)$, die das Robotergelenk in einen vorgegebenen Fehlerzustand FZ steuern, und/oder ein Aktivieren eines mechanischen Mechanismus zum Bremsen einer Bewegung des Robotergelenks. Bei letzterem kann das Bremsen aktiv oder durch Sicherheitsbremsen erfolgen.

Vorteilhaft wird das Warnsignal optisch und/oder akustisch ausgegeben.

Eine vorteilhafte Weiterbildung des vorgeschlagenen Verfahrens zeichnet sich dadurch aus, dass der erste Stromsensor eine zur ersten Sensorelektronik redundante zweite Sensorelektronik zur Ermittlung eines zweiten Betriebsstroms $i_{k,2}(t)$ des Elektromotors aufweist, mit k = 1, 2, ..., wobei durch einen fünften Fehlerdetektor ein Fehler dann detektiert wird, wenn ein Vergleich von $i_{k,1}(t)$ und $i_{k,2}(t)$ fünften Grenzwertbedingungen nicht genügt.

Vorteilhaft sind einige oder alle der mit den Sensoren des Robotergelenks verbundenen Fehlerdetektoren derart eingerichtet und ausgeführt, dass jeweils eine Art des jeweils detektierten Fehlers (insbesondere Arten von Fehlern, wie sie der nachfolgenden Beschreibung entnommen werden können) ermittelt wird.

Vorteilhaft hängen die Stellgrößen $\tau_m^F(t)$ und/oder der Fehlerzustand FZ von der Art des detektierten Fehlers F ab. So sind beispielsweise für verschiedene Arten von Fehlern verschiedene Fehlerzustände FZ vorgebbar bzw. die Stellgrößen $\tau_m^F(t)$ können für verschiedene Arten von Fehlern F unterschiedlich vorgegeben werden. Mit anderen Worten kann eine von der Art des detektierten Fehlers abhängige Reaktion vorgegeben werden.

Vorteilhaft nutzt der zweite Fehlerdetektor zur Fehlerdetektion eine Parameterschätzung auf Basis des Modells und/oder einen Zustandsgrößenbeobachter und/oder einen Kalmanfilter und/oder einen "extended" Kalmanfilter und/oder einen "unscented" Kalmanfilter und/oder eine Fehlerdetektion auf Basis von Paritätsgleichungen, (insbesondere wie sie in der nach folgenden Beschreibung angegeben sind) und/oder einen Störgrößenbeobachter und/oder einen reduzierten Störgrößenbeobachter und/oder einen reduzierten Zustandsgrößenbeobachter, dabei sind Störgrößenbeobachter im Grunde nichts anderes als Zustandsbeobachter. Besonders bevorzugt nutzt der zweite Fehlerdetektor zur Fehlerdetektion eine Kombination von Paritätsgleichungen und eines oder mehrere Zustandsbeobachter, wie sie der nachfolgenden Beschreibung genommen werden kann.

Vorteilhaft nutzt der dritte Fehlerdetektor zur Fehlerdetektion eine Fast Fourier Transformation und/oder ein Leistungsdichtespektrum und/oder eine Modalanalyse und/oder Korrelationsanalyse und/oder ein neuronales Netz und/oder einen statistischen Schätzer.

Die Erfindung betrifft weiterhin ein Computersystem, mit einer Datenverarbeitungsvorrichtung, wobei die Datenverarbeitungsvorrichtung derart ausgestaltet ist, dass ein Verfahren, wie vorstehend beschrieben, auf der Datenverarbeitungsvorrichtung ausgeführt wird.

Die Erfindung betrifft weiterhin ein digitales Speichermedium mit elektronisch auslesbaren Steuersignalen, wobei die Steuersignale so mit einem programmierbaren Computersystem zusammenwirken können, dass ein Verfahren, wie vorstehend beschrieben, ausgeführt wird.

Die Erfindung betrifft weiterhin ein Computer-Programm-Produkt mit auf einem maschinenlesbaren Träger gespeicherten Programmcode zur Durchführung des Verfahrens, wie vorstehend beschrieben, wenn der Programmcode auf einer Datenverarbeitungsvorrichtung ausgeführt wird.

Die Erfindung betrifft weiterhin ein Computer-Programm mit Programmcodes zur Durchführung des Verfahrens, wie vorstehend beschrieben, wenn das Programm auf einer Datenverarbeitungsvorrichtung abläuft.

Die Erfindung betrifft weiterhin eine Vorrichtung zur Steuerung/Regelung eines mittels eines Elektromotors angetriebenen Robotergelenks, wobei das Robotergelenk einen Stromsensor mit einer ersten Sensorelektronik zur Erfassung eines ersten Betriebsstroms $i_{k,1}(t)$ des Elektromotors, mit k = 1, 2, ..., einen ersten Positionssensor zur Erfassung einer Antriebsposition $\theta_m(t)$ eines Antriebsstrangs des Robotergelenks, einen zweiten Positionssensor zur Erfassung einer Abtriebsposition $q(t)$ eines Abtriebsstrangs des Robotergelenks, und einen ersten Drehmomentsensor zur Erfassung eines Drehmoments $\tau_{J,1}(t)$ im Abtriebsstrang aufweist, wobei der Elektromotor von einer Steuer- und Regeleinheit auf Basis einer vorgegebenen Soll-Stellgröße $\tau_m(t)$ gesteuert/geregelt wird. Die vorgeschlagene Vorrichtung umfasst eine Schnittstelle zum Bereitstellen der Messwerte $\theta_m(t), i_{k,1}(t), \tau_J(t), q(t)$; einen ersten Fehlerdetektor zum Prüfen auf Vorliegen eines Fehlers, wobei der erste Fehlerdetektor derart ausgelegt ist, dass das Vorliegen eines Fehlers dann detektiert wird, wenn die Messwerte $\theta_m(t), i_{k,1}(t), \tau_J(t), q(t)$ und/oder deren Zeitableitungen vorgegebene erste Grenzwertbedingungen nicht erfüllen;

einen zweiten Fehlerdetektor zum Prüfen auf Vorliegen eines Fehlers, wobei der der zweite Fehlerdetektor derart ausgelegt ist, dass das Vorliegen eines Fehlers auf Basis der Messwerte $\theta_m(t), i_{k,1}(t), \tau_J(t), q(t)$ und einer Prozessmodellgestützten Methode ermittelt wird, wobei das Prozessmodell ein vorgegebenes mathematisches dynamisches Modell des Robotergelenks ist, und wobei ein Fehler dann detektiert wird, wenn Parameter des Modells, Residuen zwischen vom Prozessmodell rekonstruierten Größen und den Messgrößen $\theta_m(t), i_{k,1}(t), \tau_J(t), q(t)$ und/oder Modell-intern ermittelte Parameter vorgegebene zweite Grenzwertbedingungen nicht erfüllen.

Weiterhin umfasst die Vorrichtung entweder einen dritten Fehlerdetektor zum Prüfen auf Vorliegen eines Fehlers, wobei der dritte Fehlerdetektor derart ausgelegt ist, dass das Vorliegen eines Fehlers auf Basis der Messwerte $\tau_J(t)$ und einer Signal-gestützten Methode ermittelt wird, wobei ein Fehler dann detektiert wird, wenn Amplituden und/oder charakteristische Frequenzen der Messwerte $\tau_J(t)$ vorgegebene dritte Grenzwertbedingungen nicht erfüllen, oder einen zweiten Drehmomentsensor zum Erfassen eines Drehmoments $\tau_{J,2}(t)$ im Abtriebsstrang und einen vierten Fehlerdetektor zum Prüfen auf Vorliegen eines Fehlers, wobei der vierte Fehlerdetektor derart ausgelegt ist, dass das Vorliegen eines Fehler auf Basis der Messwerte $\tau_{J,1}(t)$ und $\tau_{J,2}(t)$ ermittelt wird, wobei ein Fehler dann detektiert wird wenn ein Vergleich von $\tau_{J,1}(t)$ und $\tau_{J,2}(t)$ vierten Grenzwertbedingungen nicht genügt. Die Steuer- und Regeleinheit der Vorrichtung ist derart ausgeführt, dass sofern von einem der vorhandenen Fehlerdetektoren ein Fehler detektiert wird, ein Warnsignal erzeugt wird und/oder der Elektromotor Stellgrößen $\tau_m^F(t)$ angesteuert wird, die das Robotergelenk in einen vorgegebenen Fehlerzustand FZ steuern, und/oder ein am Robotergelenk vorhandener mechanischer Mechanismus zum Bremsen einer Bewegung des Robotergelenks aktiviert wird.

Vorteile und vorteilhafte Weiterbildungen der vorgeschlagenen Vorrichtung ergeben sich durch analoge und sinngemäße Übertragung der zum vorgeschlagenen Verfahren gemachten vorstehenden Ausführungen.

Die Erfindung betrifft weiterhin einen Robotermanipulator mit einer Vorrichtung wie vorstehend beschrieben. Die Erfindung betrifft schließlich einen Roboter mit einer Vorrichtung, wie vorstehend beschrieben.

Die vorgeschlagene Vorrichtung ermöglicht eine 1-Fehlersicherheit bei der Detektion von Fehlern während des Betriebs des Robotergelenks und die Auslösung von Reaktionen, sofern ein Fehler detektiert wurde, beispielsweise auf mechanischem Level beispielsweise "Aktivieren mechanischer Bremsen" oder "Einleiten eines geregelten Stopps") sowie auf Softwareebene, insbesondere multimodale Kommunikation eines Fehlerzustandes an einen Benutzer. Die vorgeschlagene Vorrichtung ist vorteilhaft eingesetzt bei Robotergelenken von Robotern, insbesondere bei humanoiden Systemen, Manipulatoren, fliegenden Systemen oder potentiell heterogenen Multirobotersystemen, welche über eine Daten-Cloud und entsprechender Datenbank miteinander in Verbindung stehen. Diese Systeme sind pro Antriebseinheit(Elektromotor) und/oder Gelenk jeweils mit einer Anzahl > 1 von verschiedenen und/oder unabhängigen Sensoren ausgestattet.

Eine bevorzugte Konfiguration des Robotergelenks umfasst folgende elektromechanische Antriebseinheiten auf Drehmomentsensorbasis: einen Antriebspositionssensor zur Erfassung einer Antriebsposition $\theta_m$, ein Abtriebspositionssensor zur Erfassung einer Abtriebsposition q, eine Anzahl von Stromsensoren, die typischerweise je nach Phasigkeit des Motors gewählt wird (Anzahl der Motorphasen: bspw. 3), zur Erfassung des jeweiligen Phasenstroms $i_k$, sowie einen Drehmomentsensor $\tau_J$. Die Erfindung erlaubt in jeder Antriebseinheit (Elektromoter) eine separate Fehlererkennung und -isolation, sowie dadurch natürlich im gesamten Roboter. Der Erfindungsgedanke erlaubt insbesondere die Umsetzung einer 1-Fehlersicherheit ohne explizite 2-Kanaligkeit aller Sensoren.

Das Ziel der Fehlerdetektion ist die Erkennung der Inkorrektheit der roboter-relevanten mechanischen und/oder elektrischen und/oder thermischen Variablen und Messgrößen wie z.B. Motorposition, Gelenkdrehmoment, Motormoment, Motorstrom, Abtriebsposition, Abtriebsbeschleunigung, insbesondere durch Veränderung einer und/oder mehrerer Beobachtungsgrößen. Diese Inkorrektheit kann durch genau einen Fehler verursacht werden. Insbesondere ist mit der vorgeschlagenen Vorrichtung sowie dem vorgeschlagenen Verfahren die Unterscheidung zwischen fehlerfreien nominellen Veränderungen der Variablen und entsprechenden fehlerinduzierten Veränderungen mit einer hohen garantierten Sicherheit und Robustheit möglich.

Fehlerfreie Veränderungen umfassen insbesondere Rauschen oder Quantisierung bzw. Modellungenauigkeiten der Daten und gewollte Veränderungen der Variablen z.B. aufgrund des gewünschten Regelverhaltens wie insbesondere das Folgeverhalten einer Position im Modus "Positionsregelung". Das Prinzip der Fehlererkennung/Fehlerdetektion basiert auf dem Vergleich mit mindestens einem fehlerfreien Variablenwert. Dieser könnte durch einen zweiten Sensor (dieselbe prinzipielle Messgröße, jedoch nicht zwingend notwendig dasselbe Messprinzip) erreicht werden, was jedoch dem klassischen Weg im Stand der Technik entspricht.

Für den Vergleich mit einem fehlerfreien Variablenwert eignen sich:

a) die Nutzung von Vorwissen über das Verhalten bzw. den zu erwartenden Wertebereich einer Größe
b) Verfahren, die eine Schätzung des fehlerfreien Variablenwertes beinhalten und so zum Vergleich herangezogen werden können.

a) Vorwissen

Zu den Verfahren die Vorwissen über das Verhalten/ den zu erwartenden Wertebereich nutzen zählen insbesondere Begrenzungen des erwarteten fehlerfreien Wertebereichs der Variablen (insbesondere konstante Begrenzungen, wie im nachfolgenden Kapitel 4 beschrieben, jedoch sind dynamische Begrenzungen genauso möglich).

b) Schätzung

Da eine 1-Fehlersicherheit erfüllt sein soll, kann der Vergleich insbesondere mit einem oder mehreren Schätzwerten durchgeführt werden, die aus den anderen Variablen berechnet werden. Solange eben nur 1 Fehler vorliegt, muss das System diesen dadurch erkennen können, dass ein Unterschied zwischen der gemessenen und der geschätzten Größe vorliegt und in die Berechnungen zur Erkennung einfließt. Dabei ist zu beachten, dass nicht zwangsläufig eine direkte Differenz zwischen dem gemessenen und dem geschätzten Wert gebildet werden muss, sondern andere zweckhafte mathematisch/physikalische Zusammenhänge herangezogen werden können. Es können gemäß einer anderen bevorzugten Weiterbildung Berechnungen verwendet werden, die anzeigen, dass ein Unterschied zwischen dem gemessenen und dem geschätzten Wert vorliegt, der nicht auf eine fehlerfreie Veränderung der Variablen (insbesondere Rauschen oder gewollte Veränderung der Variablen) zurückzuführen ist, mit anderen Worten eine nicht-nominelle Ursache haben.

Zu den vorgeschlagenen Schätz-Verfahren der fehlerfreien Variablenwerte zählen insbesondere Observer- und Paritätsgleichungen, die im nachfolgenden Kapitel 4 beschrieben werden. Weitere alternative bevorzugte Schätz-Verfahren basieren auf Kovarianz- oder Korrelationsverfahren. Auch informationstheoretische Hintergründe wie die Entropie oder das Maß des Information-Gains können gemäß einer vorteilhaften Weiterbildung als Schätzverfahren herangezogen werden. Im Grunde handelt es sich bei jeder dieser Größen um ein im entsprechenden Kontext zu interpretierendes Fehlermaß.

Die beschriebene Fehlererkennung erfordert entweder Vorwissen über die beschriebenen Sensoren oder Berechnungen für die Schätzung der beschriebenen Sensoren.

Vorwissen kann insbesondere durch Datenblätter/ Herstellerangaben und/oder Identifikationsversuche unter möglichst fehlerfreien Bedingungen erzielt werden. Komplexere Verfahren wie speziell auf diese Zwecke ausgelegte Algorithmen mit oder ohne Roboterinbetriebnahme können ebenfalls bevorzugt angewendet werden. Hinzu kommt die Möglichkeit, Variablen über Modellwissen des Roboters auch parallel auszurechnen (siehe Ausführungsbeispiel unten). Es werden dazu insbesondere zwei unterschiedliche Rechenwege verwendet, die jedoch das zumindest approximativ äquivalente Robotermodell wiederspiegeln.

Die Schätzung eines der genannten Sensorwerte unter Nutzung einer oder mehrerer anderer Sensorwerte erfolgt insbesondere durch den Einsatz von Modelwissen über das partikuläre Robotergelenk. Wichtig ist hierbei die Aufstellung/ Bereitstellung und Umformung von Modelgleichungen in einer Art und Weise, dass jeweils die Schätzung eines spezifischen Sensorwertes möglich ist, ohne jedoch die gemessenen Werte des zugehörigen Sensors direkt oder indirekt in die Gleichung(en) der Schätzung einfließen zu lassen. Dies bedeutet insbesondere, dass andere Variablen (sensorabhängig und sensorunabhängig sowie andere Sensorwerte) in der Gleichung für den spezifischen Sensorwert unabhängig von dem gemessenen Wert der zu schätzenden spezifischen Variable sein müssen. Es kann auch gemäß einer vorteilhaften Weiterbildung sinnvoll sein, mehrere marginale Unabhängigkeiten gleichzeitig zu verwenden, und somit auch zuzulassen um die 1-Fehlersicherheit zu gewährleisten. Offensichtlich kann die Detektion der Fehler bestimmten sinnhaften Fehlerklassen zugeordnet werden.

Das für eine Beobachtung zu Grunde liegende Model des jeweiligen Robotergelenks muss nicht einheitlich für jede beobachtete Größe sein, sondern ist dem Zweck jeweils anzupassen, so dass die entsprechend nötige Abstraktion und Effizienz/Kompaktheit der Darstellung gegeben ist. Dies ist insbesondere im Kontext der erforderlichen Rechenzeit von Relevanz. In den nachfolgenden Kapiteln wird als bevorzugtes Ausführungsbeispiel das Gelenkreibungsmodel des Roboters anhand unterschiedlicher mathematischer Abstraktionen/Modelle hinreichend genau beschrieben werden.

Das gewählte Model der Fehlererkennung determiniert die Möglichkeiten der Fehlerisolierung / Fehlerklassifikation und ermöglicht damit auch eine entsprechende Menge an sinnvollen bewegungs- und/oder softwaretechnischen Reaktion des Roboters.

Je genauer bzw. realistischer das Gelenk-Model definiert ist, desto genauer ist in der Regel auch die Fehlererkennung und Isolation. Eine exakte Wiedergabe des tatsächlichen Robotergelenkverhaltens ist jedoch in der Regel nur approximativ möglich. Daher wird ein entsprechendes Model benötigt, welches die wichtigsten Robotergelenkeigenschaften hinsichtlich des Ziels der Fehlererkennung, Fehlerisolierung und Reaktion beinhaltet. Hierfür können insbesondere folgende Aspekte berücksichtigt werden:

1. Zusammenfassung wichtiger Intertialkörper zu einem starren Körper (wenn möglich)
2. Zusammenfassung wichtiger Elastizitäten im System zu resultierenden Elastizitäten an sinnvollen Stellen (insbesondere Gelenknachgiebigkeit nach dem Getriebe anzunehmen und nicht davor, also auf Motorseite).

3. Sinnvolle Annahmen über die Kinematik des Roboters, wie insbesondere Denavit-Hartenberg-Konventionen.

4. Zusammenfassung wichtiger Reibungseffekte in einem gemeinsamen Drehmomentvektor statt jeden Effekt einem eigenen Intertialkörper oder ähnlichem zuzuweisen.

Anhand eines bevorzugten Ausführungsbeispiels sei dies anhand der Paritätsgleichungen erläutert. Paritätsgleichungen sind in der Regel besser geeignet für Drift-behaftete Systeme als konstante Schwellwerte typischerweise aus Differenzbildung zweier zu vergleichender Größen (v.a. in der Praxis wichtig). Ähnliche Ergebnisse sind den nachfolgenden Kapiteln für Limit und Paritätsgleichungen zu entnehmen, wobei nur sprunghafte Änderungen dargestellt sind. Grundlegende Methoden, die hier Anwendung finden können sind beispielhaft Verfahren insbesondere nach "Generalized likelihood test for FDI in redundant sensor configurations" (Daly, Kevin C and Gai, Eliezer and Harrison, James V) und Gleichungen insbesondere nach "Springer Handbook of Robotics", Kapitel 13.1 "Robots with flexible joints", die jedoch auf eine Art und Weise umgestellt wurden, um die beschriebene Art der Schätzung zu erzielen.

Bevorzugte Ausführungsbeispiele der der Fehlerdetektion zu Grunde liegenden Erfindung Modellgleichungen (des Robotergelenks) mit entsprechenden Alternativen können in insbesondere Kapitel 4 entnommen werden.

Ein zentrales bevorzugtes Ausführungsbeispiel, um Variablen parallel auszurechnen sei nun für die Berechnung des sogenannten Gelenkdrehmoments $\tau_J$ für einen Mehrachsmanipulator angeführt:

1. Linkseitig/Abtriebseitige Rechnung:

M(q)*q" + c(q,q') + g(q) + ggf. tau_ext oder tau_friction_link + oder tau_disturbance_link

2. Antriebseitige Rechnung: B*theta" - tau_m (controller input) + ggf tau_friction_motor

3. Kopplung beider Gleichungen durch: tau_J = K*(theta-q)

Hierbei haben die Zeichen folgende Bedeutung:

| | |
|---|---|
| M(q): | Trägheits- bzw. Massenmatrix des Manipulators in Abhänigkeit der Abtriebsposition |
| q": | Abtriebsgeschleunigung |
| c(q,q'): | Coriolisvector des Manipulators |
| g(q): | Gravitationsvektor des Manipulators |
| tau_ext: | Externes Gelenkdrehmoment (z.B. aufgrund von Kollision) |
| tau_friction_link: | Abtriebsseitige Reibung |
| tau_disturbance_link: | Abtiebsseitiges Störmoment (z.B Getrieberipple) |
| B: | Motorträgheit |
| theta": | Motorbeschleunigung |
| tau_m: | kommandiertes Motormoment (in der Regel über die Motorkonstante mit dem Motorstrom verbunden) |
| tau_friction_motor: | Motorseitiges Reibmoment |
| K: | Matrix der Gelenkseitigkeiten |
| theta: | Motorposition |
| q: | Abtriebsposition |

Eine gewisse Annahme/Einschränkung erlaubt eine redundante/unabhängige Berechnung von tau_J auf 2 Arten: Sofern gewisse Größen, wie Störung oder Reibungsterme, bzw. die echte Beschleunigung nicht vorhanden sind, können gewisse Abschätzungen getroffen werden. Dieses erlaubt nun nicht mehr tau_J exakt zu berechnen, jedoch ist es möglich einen Bereich mit einer oder mehrerer der oben genannten Möglichkeiten zu berechnen, um so auf die Konsistenz des real gemessenen Gelenkdrehmoments tau_J zu schließen. Gerade diese "Quasi"-Zweikanaligkeit ermöglicht es auf weitere (redundante) Sensoren zu verzichten, jedoch dem echten gemessenen Wert des Koppeldrehmoments zu vertrauen, sofern das gemessene Drehmoment die oben genannten Grenzen, welche durch die Abschätzung aufgestellt werden, nicht verlässt.

Im Bestfall ist eine Fehlerisolation möglich, andernfalls erfolgt vorteilhaft Fehlerklassifikation zur Weiterverarbeitung in der Reaktion des Roboters. Die Fehlerisolation kann nun insbesondere durch die Invertierung der Fehlerkausalität hergestellt werden. Die in der Fehlererkennung/Fehlerdetektion beschriebenen Gleichungen werden vorteilhaft genutzt, um den Fehler zu isolieren, mit anderen Worten seinen Ursprung zu erkennen. Das bedeutet insbesondere, dass die Berechnungen Abweichungen zwischen den erwarteten (durch Fehlermaß oder Schätzung) und den gemessenen Werten feststellen. Dabei handelt es sich nicht zwingend um eine direkte Differenzbildung, sondern um die beschriebenen Berechnungen/mathematisch-physikalische Maße, die entsprechende Abweichungen signalisieren und durch die Überschreitung entsprechender Schwellen indiziert werden. Wie bereits beschrieben, determiniert das gewählte Model der Fehlererkennung die Möglichkeiten der Fehlerisolierung / Fehlerklassifikation und hierdurch wiederum bestimmte sinnhaftige Reaktionen des Roboters (Ansteuerung des Elektromotors mit einer Soll-Stellgröße) wie insbesondere das geregelte Anhalten oder Umschalten im Sensorrückkopplung für die Regelung auf eine reine unabhängige Schätzgröße. Hinzu kommt, dass im realen Robotergelenk nicht nur die genannten Sensoren fehlerhaft sein können, sondern auch andere Störfaktoren auftreten können. Insbesondere die in Kapitel 1 genannten Fehler sind hinsichtlich des Ziels der Fehlererkennung, Fehlerisolierung und Reaktion relevant. Grundsätzlich gilt natürlich, je unabhängiger das Fehlermaß, bzw. die Schätzung für einen spezifischen Sensorwert von allen anderen Störgrößen ist (also auch andere Fehlerquellen als die anderen Sensoren), desto leichter ist auch die Isolation. In der Realität werden jedoch vorwiegend Fehlerklassen gebildet, die zwar nur einen der genannten Sensorausfälle beinhalten, jedoch auch andere Fehlerquellen beinhalten können. Das zur Isolation beschriebene erfindungsgemäße Verfahren kann also analog auf Fehlerklassen angewendet werden, wie sie insbesondere in Kapitel 4 beschrieben sind.

Die auf eine Fehlermeldung folgende Reaktion des Roboters (durch entsprechende Ansteuerung des Elektromotors des Gelenks) basiert nach Möglichkeit auf der Isolierung eines einzigen Sensorfehlers, ansonsten auf der Meldung des Auftretens einer Fehlerklasse.

Zusätzlich können weitere Fehlerklassen gebildet werden, die die gleiche Reaktion/ gleiche Reaktionen auslösen. Dabei kann ein Fehler bzw. die Meldung einer fehlerbedingten Veränderung der Robotergelenk-relevanten Variable auch mehreren möglicherweise disjunkten Fehlerklassen zugeordnet sein, die jeweils eine an den Fehler gebundene, oder über eine entsprechende Planungskomponente ausgewählte Reaktion auslösen. Insbesondere können zwei Fehlerklassen gebildet werden, die jeweils Fehler im Antrieb (Klasse 1) oder im Abtrieb (Klasse 2) anzeigen. Die Information, zu welcher der beiden Klassen ein aufgetretener Fehler zählt, wird dem Nutzer oder der Planungskomponente gemeldet. Dieser/diese kann allein aus dieser Information den Fehler wiederum eingrenzen.

Mögliche Vorgehensweisen zur Isolation sind typischerweise in folgende Klassen einzuteilen:

- Logisch: Wechselseitiger Ausschluss oder auch Entscheidungsbäume mit Schwellwerten basierend auf Beobachter- und Messwerten, sowie Vorwissen

- Wahrscheinlichkeitsbasierte Ansätze (z.B. Hidden Markov-Modelle, Gauß-Prozesse o.ä.)

- heuristische Ansätze wie z.B. Fuzzy-Logik.

Bevorzugte Ausführungsformen hierzu finden sich in Kapitel 5:
Beispielhaft kann in Table für den Fehler "shutdown theta_m" gesehen werden, dass kein Fehler entdeckt wird, solange die Berechnung mit der geschätzten Variable theta_m verwendet wird (Spalte "isolating theta_m"). Die anderen drei Berechnungen, die den fehlerharten Wert von theta_m nutzen "schlagen aus" und zeigen somit den Fehler an. Das zeigt an, dass der Fehler hier bei theta_m liegt.

Die beschriebene erfindungsgemäße Fehlererkennung ermöglicht einerseits die beschriebene Fehlerisolation bzw. Fehlerklassifikation, sowie eine Reaktion des Roboters, die bei Bedarf auch über das pure Abbremsen im Falle eines Fehlers hinausgehen kann. Da der Fehler bzw. die Fehlerklasse nun bekannt ist, kann insbesondere auch eine sicherheitsgerichtete Reaktion erfolgen. Das bedeutet, dass im Falle eines risikoreichen/ risikoreicheren Fehlers eine Reaktion ausgewählt und ausgeführt wird, die das Risiko minimiert. Das gilt insbesondere für das mögliche Risiko von Personenschäden bei Mensch-Roboter-Interaktionen, aber auch für materielle Schäden, insbesondere bei Sensorproblemen die nicht anderweitig kompensiert werden können (insbesondere durch die beschriebenen Werte zum Vergleich wie Schätzwerte oder Alternativrechnungen). In risikoreichen/ risikoreicheren Fällen wird gemäß einer bevorzugten Weiterbildung eine mechanische Reaktionen wie eine direkte Bremsung ausgelöst, die eine rein mechanische und/oder geregelte oder eine Kombination aus beiden ist. In anderen Fällen (je nach Sensorausfall und Risiko) kann ein langsames Runterbremsen/ ein geregelter Stop ausgelöst werden.

Wenn die Verwendung eines Ersatzes (insbesondere temporär Verwendung eines geschätzten Signals mit Hilfe anderer Sensoren, Verwendung eines anderen Reglers) möglich ist, erfolgt gemäß einer bevorzugen Weiterbildung ein (temporärer) weiterer Betrieb.

Hinzu kommt die Möglichkeit, den Nutzer zu involvieren und ihm den Fehler zu signalisieren (z.B. Kommunikation, E-Abschalten, rote Lampe, Signal zum Menschen). Dabei kann gemäß einer bevorzugen Weiterbildung allgemein ein Fehler signalisiert werden, aber auch genauere Information (genauer Fehler, Fehlerklasse, ...). weitergegeben werden. Die Möglichkeit kann gemäß einer bevorzugen Weiterbildung zusätzlich in Betracht gezogen werden oder aber auch allein. In beiden Fällen kann der Nutzer weiteres Vorgehen (zumindest teilweise) entscheiden. Je mehr Informationen für den Nutzer vorliegen und desto risikoärmer der Fehler, desto mehr kann der Nutzer selbst entscheiden.

In allen Fällen ist es von Vorteil, genauere Informationen über die Art des Fehlers bzw. den Fehler selbst zu haben, da Anzahl der möglichen Reaktionen sinnvoll eingeschränkt werden kann. So kann die Sicherheit erhöht werden, da mögliche Risiken nun in Abhängigkeit der Fehlers/ der Fehlerklassen reduziert werden können. Dies gilt auch im Falle von Nutzer-Interaktionen, da auch hier auf Grund der vorliegenden Informationen über den Fehler/ die Fehlerklassen gerade für weniger erfahrene Roboter-Nutzer die Auswahlmöglichkeit der Reaktionen eingeschränkt werden kann. So können risiko-steigernde Maßnahmen dem Nutzer gar nicht erst zur Auswahl gestellt werden.

Bei allen beschriebenen Fällen ist zu beachten, dass die Reaktionen auf Fehler oder FehlerKlassen je nach Bedarf (z.B. Roboter, Anwendung, Beachtung von möglichen Mensch-Roboter-Interaktionen) angepasst werden kann.

Nachfolgend wird in Kapiteln 1-5 die Erfindungsidee nochmals im Detail ausgeführt und an konkreten Beispielen erläutert.

**Kapitel 1**

**Begriffe und Definitionen**

Das engl. "Technical Committee on Fault Detection, Supervision and Safety for Technical Processes" (SAFEPROCESS) der engl. "International Federation of Automatic Control" (IFAC) hat eine Liste häufig verwendeter Begriffe zum Thema "Fehler/Fehlerdetektion etc." erstellt und diverse Definitionen festgelegt:

**Zustände und Signale**

Die verschiedenen Zustände und Signale sind wie folgt definiert.

**Fehler**

Eine unerlaubte Abweichung mindestens einer charakteristischen Eigenschaft oder eines Parameters des Systems von der akzeptablen / üblichen / Standard- Kondition.

**Ausfall**

Eine permanente Unterbrechung der Fähigkeit des Systems eine geforderte Funkti- on unter spezifizierten Betriebsbedingungen ausführen zu können.

**Fehlfunktion**

Eine diskontinuierliche Unregelmäßigkeit bei der Ausführung einer gewünschten Funktion des Systems.

**Error**

Eine Abweichung zwischen einem gemessenen oder errechneten Wert (einer Ausgangsvariable) und dem wahren, spezifizierten oder theoretisch korrekten Wert.

**Unruhe**

Ein unbekannter (und unkontrollierter) Eingang, der sich auf das System auswirkt.

**Störung**

Ein Eingang, der sich auf das System auswirkt und eine temporäre Abweichung vom aktuellen Zustand hervorruft.

**Residuum**

Ein Fehlerindikator, basierend auf der Abweichung zwischen Messungen und Berechnungen aus Modelgleichungen.

**Symptom**

Eine Änderung einer beobachtbaren Menge vom normalen Verhalten.

### Funktionen

Eine Überwachung und Verwaltung des Systemverhaltens kann mithilfe verschiedener Funktionen erreicht werden.

### Fehlererkennung

Bestimmung der Präsenz eines Fehlers und des Zeitpunktes der Detektion.

### Fehlerisolierung

Bestimmung von Art, Ort und Zeitpunkt der Detektion des Fehlers. Folgt der Fehlererkennung.

### Fehleridentifikation

Bestimmung der Größe und des zeitlichen Verhaltens des Fehlers. Folgt der Fehlerisolierung.

### Fehlerdiagnose

Bestimmung von Art, Größe, Ort und Zeitpunkt der Detektion des Fehlers. Folgt der Fehlererkennung. Beinhaltet Fehlerisolierung und -identifikation.

### Beobachtung

Eine kontinuierliche Tätigkeit in Echtzeit zur Bestimmung der Zustände eines physikalischen Systems durch Aufzeichnung von Informationen und Erkennen und An- zeigen von Verhaltensauffälligkeiten.

### Überwachung

Beobachtung eines physikalischen Systems und Einleitung passender Maßnahmen um den Betrieb im Fehlerfall beizubehalten.

### Schutz

Maßnahmen, durch welche potentiell gefährliches Verhalten des Systems wenn möglich unterdrückt wird, oder durch welche Konsequenzen von gefährlichem Ver- halten vermieden werden.

### Modelle

Ein zugrunde liegendes Systemmodell kann, abhängig von den Beziehungen zwischen Systemvariablen, auf verschiedene Weisen beschrieben werden.

### Quantitatives Modell

Der Gebrauch von statischen, sowie dynamischen Beziehungen zwischen System- variablen und -parametern um das Verhalten eines Systems mathematisch quantitativ auszudrücken.

### Qualitatives Modell

Der Gebrauch von statischen, sowie dynamischen Beziehungen zwischen System- variablen und -parametern um das Verhalten eines Systems mathematisch qualitativ auszudrücken. Zum Beispiel durch Kausalitäten oder wenn-dann-Regeln.

### Diagnostisches Modell

Ein Set statischer oder dynamischer Beziehungen, welche spezifische Eingangs- variablen - die Symptome - mit spezifischen Ausgangsvariablen - die Fehler - in Verbindung setzen.

### Analytische Redundanz

Der Gebrauch von zwei oder mehr (aber nicht unbedingt identischen) Wegen um eine Variable zu bestimmen, wobei einer der Wege ein mathematisches Prozessmodell in analytischer Form verwendet.

### Systemeigenschaften

Es können nicht nur Aussagen über einzelne Zustände und Signale eines Systems getroffen werden, sondern auch über das gesamte System selbst.

### Zuverlässigkeit

Fähigkeit eines Systems unter gegebenen Bedingungen in einer gewissen Zeitspanne und einem gewissen Rahmen zu arbeiten. Messe die Durchschnittzeit zwischen Ausfällen (MTBF) mit Ausfallrate $\lambda$ (z.B. Ausfälle pro Jahr), sodass gilt:

$$MTBF = \frac{1}{\lambda}$$

### Sicherheit

Fähigkeit des Systems keine Gefahr für Personen, Ausrüstung oder Umwelt zu verursachen.

### Verfügbarkeit

Wahrscheinlichkeit, dass ein System oder ein Ausrüstungsgegenstand zu jedem Zeitpunkt zufriedenstellend und effektiv funktioniert. Ein Maß erhält man mit

$$A = \frac{MTBF}{MTBF + MTTR}$$

Mit der Durchschnittzeit zwischen Reperaturen (MTTR = $1/\mu$) und der Reparaturrate $\mu$.

### Abhängigkeit

Eine Form der Verfügbarkeit, mit der Eigenschaft immer verfügbar zu sein, wenn es gebraucht wird. Es ist der Grad, zu welchem das System betriebsbereit ist und die Fähigkeit besitzt seine notwendigen Funktionen zu jedem zufälligen Zeitpunkt und in der festgelegten Ausführungszeit ausführen zu können. Vorausgesetzt ist, dass der Gegenstand zum Start der Periode verfügbar ist. Die Abhängigkeit ist gegeben durch

$$D = \frac{T_V}{T_V + T_R}$$

$T_V$ ist die verfügbare Zeit und $T_R$ die benötigte Zeit.

### Strategien der Fehlererkennung und -klassifizierung

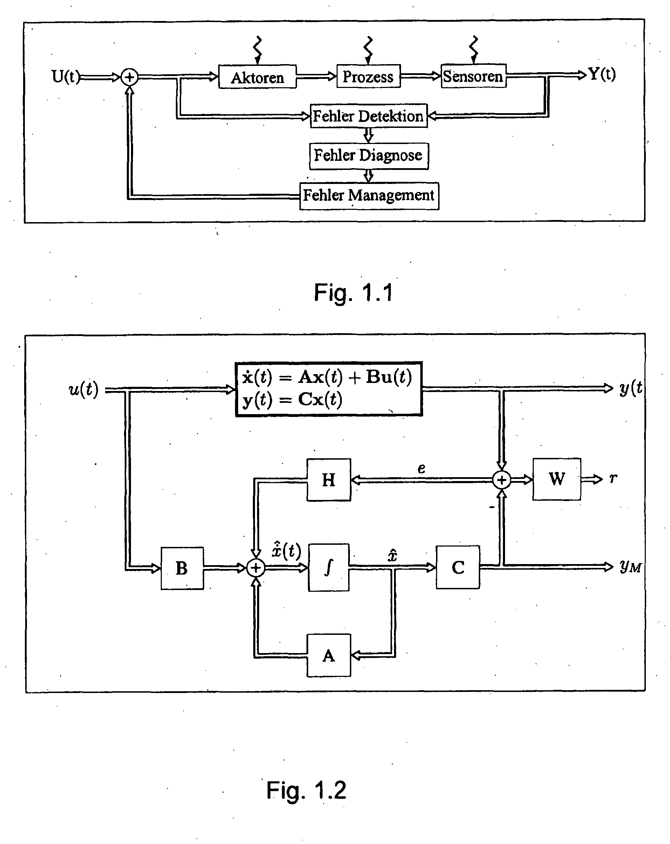

**Fig. 1.1.** zeigt hierzu ein Schema der Fehlererkennung, der Fehlerdiagnose und des Fehlermanagements. Üblicherweise wird zur Fehlererkennung und der korrekten Reaktion darauf folgender drei-Punkte-Plan verwendet:

1. Fehlererkennung (engl. Fault Detection)
2. Fehlerdiagnose (engl. Fault Diagnosis)
3. Reaktion auf Fehler (engl. Fault Management)

Die Umsetzung dieses drei-Stufen-Plans kann mit Hilfe verschiedener Vorgehensweisen realisiert werden.

Das folgende Kapitel zeigt einige der gebräuchlichsten Methoden auf.

**Model-basierte Fehlererkennung**

Model-basierte Methoden benötigen Kenntnisse über ein zugrunde liegendes Model um Unregelmäßigkeiten zu detektieren. Dabei kann es sich zum Beispiel um ein Model mit der physikalischen Struktur des Roboters handeln, oder um ein Model eines Signals, wel ches bestimmte Eigenschaften, wie eine gewisse Standardabweichung, besitzt.

**Prozess-Model-basierte Methoden**

Prozess-Model-basierte Methoden benötigen ein in der Regel dynamisches Prozessmodel in Form einer mathematischen Struktur mit bestimmten Parametern. Die Umsetzung erfolgt durch mit Hilfe von Messungen der Eingangsvariablen $\underline{U}(t)$ und der Ausgangsvariablen $\underline{Y}(t)$ des Systems.

**Paritätsgleichungen**

Basierend auf dem Wissen über die Struktur eines linearen mathematischen Models mit Ordnung $n$, können die Zustandsgleichungen wie folgt aufgestellt werden:

$$\underline{\dot{x}}(t) = \mathbf{A}\underline{x}(t) + \mathbf{B}\underline{u}(t), \tag{1.1}$$

$$\underline{y}(t) = \mathbf{C}\underline{x}(t). \tag{1.2}$$

Einsetzen von (1.1) in (1.2) und $p$-maliges Differenzieren ($p \leq n$) führt zu Gleichungen (1.3) und (1.4). Das optimale $p$ kann durch einen Beobachtbarkeitstest bestimmt werden.

$$\begin{bmatrix} \underline{y}(t) \\ \underline{\dot{y}}(t) \\ \underline{\ddot{y}}(t) \\ \vdots \end{bmatrix} = \begin{bmatrix} \mathbf{C} \\ \mathbf{CA} \\ \mathbf{CA^2} \\ \vdots \end{bmatrix} \underline{x}(t) + \begin{bmatrix} 0 & 0 & 0 & \dots \\ \mathbf{CB} & 0 & 0 & \dots \\ \mathbf{CAB} & \mathbf{CB} & 0 & \dots \\ \vdots & \vdots & \vdots & \ddots \end{bmatrix} \begin{bmatrix} \underline{u}(t) \\ \underline{\dot{u}}(t) \\ \underline{\ddot{u}}(t) \\ \vdots \end{bmatrix} \tag{1.3}$$

$$\underline{Y}(t) = \mathbf{T}\underline{x}(t) + \mathbf{Q}\underline{U}(t) \tag{1.4}$$

Im nicht linearen Fall wird Gleichung (1.4) mit Matrix **W** multipliziert, wobei **W** die Bedingung erfüllen muss

$$\mathbf{WT} = \underline{0}. \tag{1.5}$$

Mit diesem Schritt wird Gleichung (1.4) unabhängig vom Zustandsvektor $\underline{x}(t)$, welcher unbekannt sein kann. Weiter folgt die Paritätsbeziehung mit

$$\underline{r}(t) = \mathbf{W}\underline{Y}(t) - \mathbf{W}\mathbf{Q}\underline{U}(t). \tag{1.6}$$

Im fehlerfreien Fall ändern sich die Parameter nicht. Somit kann ein Fehler durch Beobachten des sogenannten Residuums $\underline{r}(f)$ detektiert werden:

- $\underline{r}(t) = \underline{0} \rightarrow$ fehlerfrei
- $\underline{r}(t) \neq \underline{0} \rightarrow$ ein Fehler ist aufgetreten

Durch kleinere Effekte, wie Rauschen oder andere Unsicherheiten, kann die Gleichung im fehlerfreien Fall auch ausgeweitet werden zu

$$\underline{r}(t) \approx \underline{0}.$$

## Zustands- und Ausgangsbeobachter

Wie der Name bereits andeutet, so kann ein klassischer Zustandsbeobachter Fehler detektieren, indem Änderungen der Zustandsvariablen $\Delta \mathbf{x_i}$ erkannt werden. Das Prozessmodel ist definiert als:

$$\dot{x}(t) = Ax(t) + Fv(t) + Lf_L(t) \tag{1.7}$$

$$\mathbf{y}(t) = \mathbf{C}\mathbf{x}(t) + \mathbf{N}\mathbf{n}(t) + \mathbf{M}\mathbf{f_M}(t), \tag{1.8}$$

wobei $\mathbf{v}(t)$ und $\mathbf{n}(t)$ Störsignale darstellen und $\mathbf{f_L}(t)$ und $\mathbf{f_M}(t)$ additive Fehlersignale sind. Weiter ergeben sich die resultierenden Gleichungen für Zustandsbeobachter (vgl. Fig. 1.2) zu

$$\dot{\hat{x}}(t) = A\hat{x}(t) + Bu(t) + He(t), \tag{1.9}$$

$$e(t) = y(t) - C\hat{x}(t). \tag{1.10}$$

Ähnlich den Paritätsgleichungen sind Residuen von Nöten um das Auftreten eines Fehlers zu detektieren. Für Zustandsbeobachter können diese mit
$\Delta \mathbf{x}(t) = \mathbf{x}(t) - \mathbf{x0}(t)$, $\mathbf{e}(t)$ oder $\mathbf{r}(t) = \mathbf{We}(t)$ beschrieben werden.

Im Falle von Multi-Output Prozessen, empfehlen sich spezielle Anordnungen der Beobachter. Beispielsweise kann ein Beobachter durch ein Sensorsignal betrieben werden. Die anderen Signale werden dabei rekonstruiert und mit den gemessenen Signalen verglichen. Dies erlaubt die Erkennung von Einzel-Sensor-Fehlern. Des weiteren ist auch der Betrieb einer Bank an Beobachtern möglich, angetrieben durch alle Outputs. Hierbei wird jeder Beobachter für ein konkretes Fehlersignal entworfen und durch alle Ausgangssignale angetrieben. Die Bank an Beobachtern kann ebenso durch einzelne Ausgangssignale angeregt werden, wobei jeder Beobachter nur ein Sensorsignal verwendet und geschätzte Ausgangssignale wiederum mit den Gemessenen verglichen werden. Eine weitere Möglichkeit ist es die Bank der Beobachter so zu betreiben, dass jeweils alle Ausgangssignale außer eines verwendet werden. Auf diese Weise können ebenfalls mehrere Fehler detektiert werden. Eine andere Herangehensweise ist die Anwendung fehlersensitiver Filter. Hier wird das Feedback $\mathbf{H}$ so gewählt, dass sich bestimmte Fehlersignale $\mathbf{f_L}(t)$ in eine bestimmte Richtung ändern und Fehlersignale $\mathbf{f_M}(t)$ in einer bestimmten Ebene.

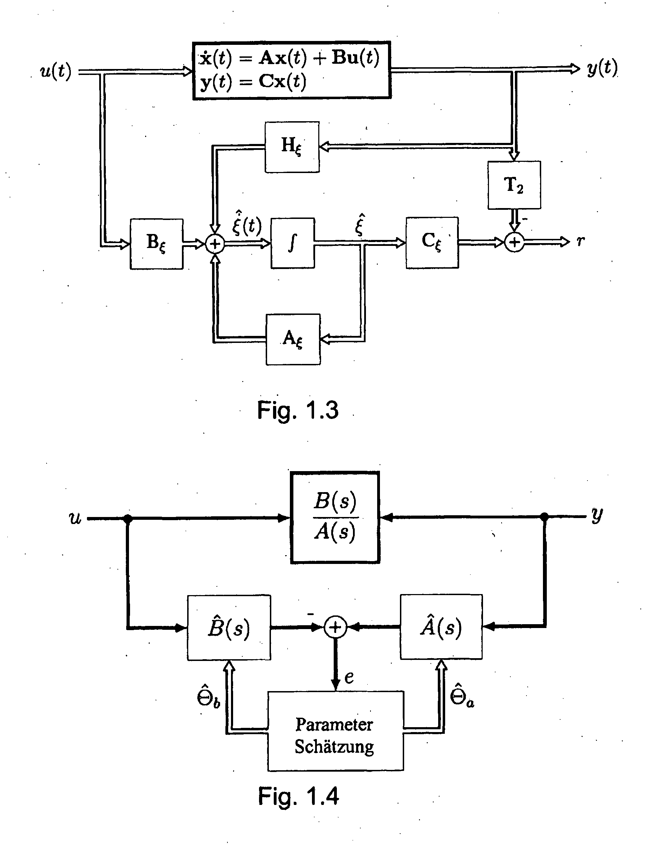

Ist der Eingang unbekannt oder die Rekonstruktion der Zustandsvariablen x(t) nicht von Interesse, so eignen sich besonders Ausgangsbeobachter. Eine Lineartransformation führt zu neuen Zustandsvariablen $\xi(t) = \mathbf{T_1}\mathbf{x}(t)$ und Beobachtergleichungen (vgl. Abb. 1.3)

Benötigte Gleichungen zur Transformation sind:

$$\mathbf{T_1}\mathbf{A} - \mathbf{A_\xi}\,\mathbf{T_1} = \mathbf{H_\xi}\,\mathbf{C}, \tag{1.13}$$

$$\mathbf{B_\xi} = \mathbf{T_1}\mathbf{B}, \tag{1.14}$$

$$\mathbf{T_1}\mathbf{V} = \mathbf{0}, \tag{1.15}$$

$$\mathbf{C_\xi}\,\mathbf{T1} - \mathbf{T_2}\mathbf{C} = \mathbf{0}. \tag{1.16}$$

Resultierende Residuen $\mathbf{r}(t)$ sind gegeben durch:

$$\mathbf{r}(t) = \mathbf{C_\xi}\xi(t) - \mathbf{T_2}\mathbf{M}\mathbf{f_M}(t). \tag{1.17}$$

Offensichtlich sind die Residuen unabhängig von x(t) und u(t) und hängen nur von $\mathbf{f_L}(t)$ und $\mathbf{f_M}(t)$ ab.

**Identifikation und Parameterschätzung**

Im Anwendungsfall sind die Parameter oft nur teilweise oder gar nicht bekannt. Ist allerdings eine einfache Modelstruktur vorhanden, so können Parameter abgeschätzt werden durch das Messen von Ein- und Ausgangssignalen. Hierbei gibt es im wesentlichen zwei Ansätze; einmal die Minimierung des Gleichungsfehlers und einmal die Minimierung des Ausgangsfehlers.

Für die Minimierung des Gleichungsfehlers (vgl. Abb. 1.4), ist jener folgendermaßen definiert

$$e(t) = y(t) - \underline{\Psi}^T(t)\underline{\Theta}, \qquad (1.18)$$

äquivalent zu:

$$e(s) = \hat{B}(s)u(s) - \hat{A}(s)y(s). \qquad (1.19)$$

Nach Abtasten mit der diskreten Zeit k = $t/T_0$ = 0, 1, 2 ... mit Abtastzeit $T_0$, ergibt sich für die Summe der kleinsten Fehlerquadrate [17]

$$V = \sum_{k=1}^{N} e^2(k) = \underline{e}^T \underline{e} \qquad (1.20)$$

mit

$$\frac{dV}{d\Theta} = 0 \qquad (1.21)$$

Da diese Methode linear ist, können die Parameter nun direkt bestimmt werden. Die Abschätzung kann entweder nicht rekursiv

$$\hat{\underline{\Theta}}(N) = \left[\underline{\Psi}^T \underline{\Psi}\right]^{-1} \Psi^T \underline{y} \qquad (1.22)$$

oder rekursiv

$$\hat{\underline{\Theta}}(k+1) = \hat{\underline{\Theta}}(k) + \gamma(k)e(k+1) \qquad (1.23)$$

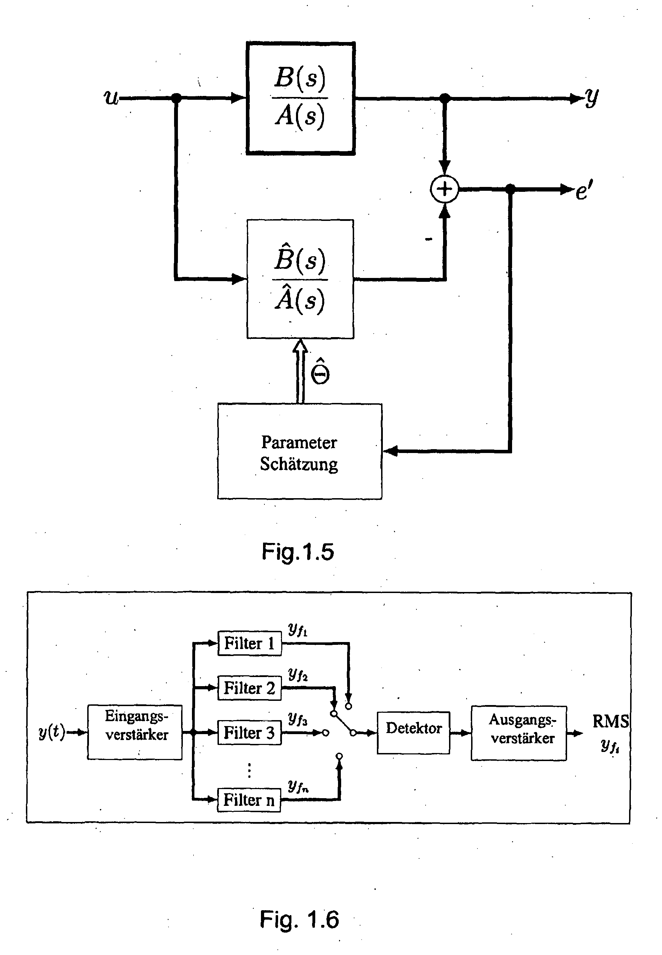

ausgeführt werden. Für die Minimierung des Ausgangsfehlers (Fig. 1.5) wird der Ausgangsfehler

$$e'(t) = y(t) - y_M(\hat{\Theta}, t) \qquad (1.24)$$

benötigt mit Modellausgang:

$$y_M(\hat{\Theta}, s) = \frac{\hat{B}(s)}{\hat{A}(s)} u(s) \qquad (1.25)$$

Da $e'(t)$ nichtlinear ist, ist keine direkte Berechnung der Parameterabschätzung $\underline{\Theta}$ möglich. Deshalb wird die Verlustfunktion (1.20) durch numerische Optimierungsmethoden minimiert. Dies bedeutet jedoch einen höheren Rechenaufwand. Fig. 1.5 zeigt ein Schema der Minimierung des Ausgangsfehlers bei der Parameterschätzung.

**Signal-Model-basierte Methoden**

Für Signal-Model-basierte Methoden ist kein Wissen über das zugrunde liegende Prozessmodel notwendig. Lediglich der Systemausgang $y(t)$ wird analysiert. Bei Systemen mit periodischem Ausgang wird davon Ausgegangen, dass das Ausgangssignale aus einem verwendbaren Anteil $yu(t)$ und einem Rauschanteil $n(t)$ besteht.

$$y(t) = yu(t) + n(t) \qquad (1.26)$$

Das verwendbare Signal soll dabei untersucht werden, wobei davon ausgegangen wird, dass der Mittelwert des Rauschens 0 beträgt und die beiden Signale unkorreliert sind. Nach der Theorie der Fourier-Reihen, kann jedes periodische Signal durch die Superposition harmonischer Komponenten ausgedrückt werden.

$$y_u(t) = \sum_{v=1}^{N} y_{0v} e^{-d_v t} \sin(\omega_v t + \varphi_v) \qquad (1.27)$$

Jede Komponente ist definiert durch die Amplitude $y_{0v}$, die Frequenz $\omega_v$, den Phasenwinkel $\phi_v$ und den Dämpfungsfaktor $d_v$. Die Bestimmung dieser Parameter kann bereits einen ersten Hinweis auf ein fehlerbehaftetes Signal liefern. Weiter Methoden um Anomalien bekannter Signalmodelle zu erkennen werden im Folgenden beschrieben.

**Bandpass Filter**

Um sicher zu gehen, dass sich das Ausgangssignal in einem gewissen Frequenzbereich aufhält, können auch Bandpass Filter zur Fehlererkennung eingesetzt werden. Diese können sowohl in analoger, als auch in digitaler Form umgesetzt werden. Einige Filteranordnungen erlauben es zudem das Leistungsspektrum zu beobachten. Das Signal wird dabei quadriert und integriert, um die Durchschnittsleistung zu berechnen. Nimmt man nun die Quadratwurzel, so erhält man die RMS-Amplitude. **Fig. 1.6** zeigt das Schema einer gestuften Filteranordnung.

**Spektralanalyse (Fast Fourier-Transformation)**

Mit der "Fast Fourier-Transformation, FFT" können die Spektren von Signalen hinsichtlich Fehler untersucht werden.

**Maximum-Entropie Schätzung**

Diese Methode ist ähnlich der Spektralanalyse. Sind allerdings nur wenige Frequenzen von Interesse, so führt diese Methode zu präziseren Ergebnissen als die FFT.

**Andere**

Abweichungen vom normalen Verhalten eines Systems können auch durch andere Methoden erkannt werden. Beispielsweise weisen Änderungen des Durchschnittswerts oder der Varianz eines zufälligen Signals auf Fehler hin, oder Parameteränderungen einer statischen Wahrscheinlichkeitsdichtefunktion ändern sich plötzlich [35].

**Methoden zur Fehlerdiagnose**

Die Aufgabe der Fehlerdiagnose besteht darin, Typ, Ausmaß, Ort und Zeitpunkt eines detektierten Fehlers genauer zu bestimmen. Ändern sich mehrere Symptome unterschiedlich für einen bestimmen Fehler, so können Klassifizierungsmethoden angewandt werden, welche auf Änderungen von Symptom-Vektoren beruhen. Gebräuchliche Methoden zur Klassifizierung sind geometrische Abstands- und Wahrscheinlichkeitsmethoden, künstliche neuronale Netze oder "Fuzzy Clustering". Ist mehr über die Zusammenhänge zwischen Symptomen und Fehlern bekannt, so können auch diagnostische Entscheidungsmodelle, wie ein Entscheidungsbaum, verwendet werden. Zusammenhänge können dann durch simple WENN-DANN Regeln ausgedrückt werden. Beispiel für "approximate-reasoning"-Methoden sind wahrscheinliches Denken und Denken mit künstlichen neuronalen Netzwerken.

### Kapitel 2

### Fehler eines flexiblen Robotergelenks

Robotersysteme werden verschiedensten äußeren Einflüssen ausgesetzt, wie Hitze, Feuchtigkeit oder elektromagnetischer Strahlung. Ebenso können auch interne Probleme auftreten, wie Undichtigkeiten, fehlende Schmierung oder Kurzschlüssen. Dies kann zu Änderungen internen Prozessparameter oder Zustandsvariablen führen, was oft in ein Fehlverhalten des Roboters resultiert. Wie bereits erwähnt, werden diese Änderungen Fehler genannt. Im Folgenden werden nun eine Reihe möglicher Fehler eines flexiblen Robotergelenks mit dem Versuch einer Kategorisierung präsentiert.

### Fehler Kategorisierung

Fehler können entweder nach ihrer Form, ihrem zeitlichen Verhalten, oder ihrem Ausmaß kategorisiert werden.

### Form

Die Form eines Fehlers kann entweder systematisch oder zufällig sein. Sind die Struktur und Parameter eines Systems bekannt, so kann ein systematischer Fehler vorhergesagt werden. Dazu zählen auch Fehler, die eine Folge anderer Fehler darstellen, oder einfach nach einer gewissen Zeit eintreten (Verschleiß). Zufällige Fehler können jederzeit auftreten und sind nicht vorhersagbar.

### Zeitliches Verhalten

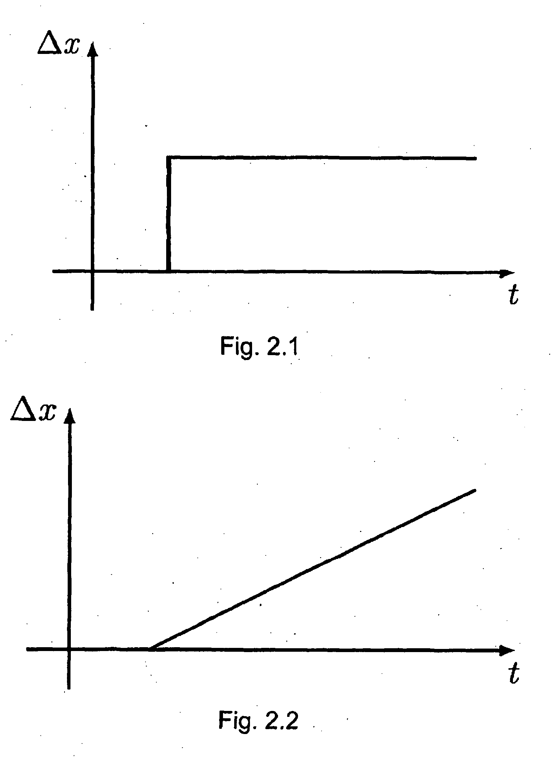

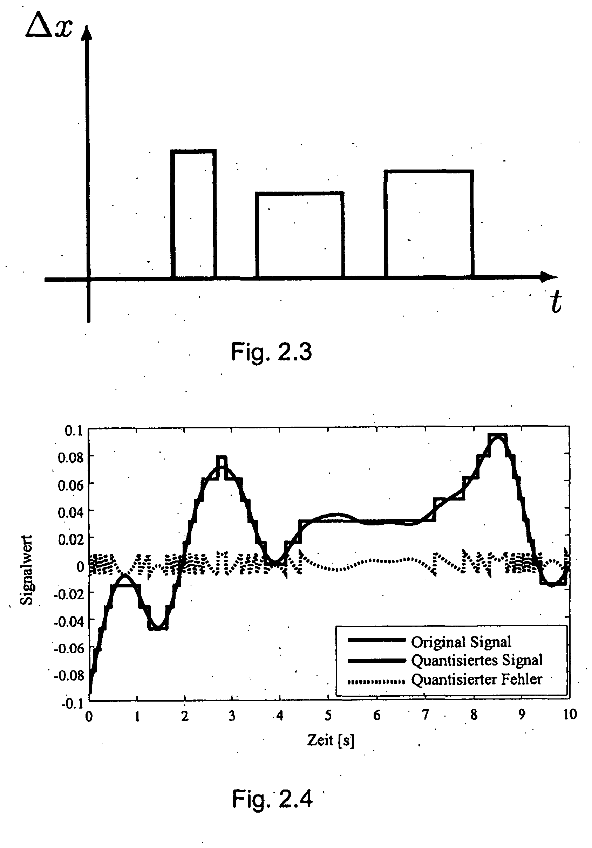

Eine weitere Variante der Kategorisierung stellen verschiedenen zeitliche Verhaltensmuster dar. Grob unterscheidet man hier zwischen abrupten und driftenden Fehlern. Abrupte, oder abgestufter Fehler, entfaltet plötzlich sein volles Ausmaß und können dann als konstant betrachtet werden (Fig. 2.1), während sich ein driftender Fehler langsam immer stärker ausprägt (Fig. 2.2). Eine Spezial- form des abrupten Fehlers ist der intermittierende Fehler, welcher zwischenzeitlich Aussetzer haben kann und bei Wiedereintritt seine Amplitude variieren kann (Fig. 2.3). Ein Beispiel wäre hier der klassische Wackelkontakt.

### Ausmaß

Eine Kategorisierung nach dem Ausmaß ist sehr einfach. Die Effekte eines Fehlers können sich entweder im System-Internen auswirken (lokal) oder im Externen (global). In Robotersystemen wäre ein lokales Ausmaß lediglich die Erhöhung der Temperatur im Inneren, welche innere Komponenten beeinflusst, während ein Fehler mit globalen Ausmaß die Interaktion des Roboters mit seiner Umwelt verhindert.

### Sammlung möglicher Fehler

Nachfolgend wird eine nicht abschließende Liste möglicher Fehler aufgeführt, welche in einem Robotergelenk auftreten können.

### Lagerabnutzung und -Fehler

In jedem Konzept mechanischer Aktoren spielen Lager eine signifikante Rolle um beispielsweise Rotationsenergie möglichst verlustarm auf weitere Komponenten zu übertragen. Rotationsachsen werden hierbei exakt in Position gehalten um konzentrische Rotationen zu ermöglichen. Aus der Sicht der Fehleranalyse, stellen Lager den häufigsten Störungsgrund für Robotersysteme dar. 51% aller Störungen in Wechselstrom-Motor-Systemen lassen sich auf Lagerfehler zurückführen. Folgende Fehler können auftreten:

**Lagerabnutzung:** Da bei einem Lager die Komponenten aneinander schleifen, sind Abschabungen an diesen Stellen unvermeidbar. Diese mögen mit bloßem Auge kaum sichtbar sein, können sich jedoch gravierend auf das System auswirken. Eine Abnutzung kann sich im Betrieb durch Vibrationen, und somit auch durch erhöhtes Rauschen verschiedener Sensoren, einer Reduktion des übertragenen Moments bzw. der Geschwindigkeit oder Moment-Riffel äußern. Die Abnutzung wird durch unzureichende oder fehlende Schmierung, Überlastung, Stößen, Fremdpartikel oder schlechtes Gelenksdesign beschleunigt.

**Lagerbruch:** Komponenten wie der Lagerkäfig oder der innere oder äußere Ring können unter hoher mechanischer Belastung schnell brechen. Die Auswirkungen sind im Grunde dieselben wie bei der Abnutzung, jedoch in weitaus größerem Ausmaß bis hin zur kompletten Blockade des Gelenks.

**Getriebefehler**

In Robotergelenken kommen Getriebe zum Einsatz um die schnellen Bewegungen des Motors in langsamere, jedoch Drehmoment-stärkere Bewegungen des nächsten Gliedes umzusetzen. Durch ihr kompaktes Design kommen dabei häufig Harmonic Drive (HD) zum Einsatz. Mögliche Getriebefehler sind:

**Wave-Generator Lagerabnutzung:** Wie bereits erwähnt, können sich auch im Wave-Generator des HD Abnutzungserscheinungen bemerkbar machen.

**Ratcheting-Effekt:** Der Ratcheting-Effekt tritt in der Regel bei Überschreitung des maximalen Drehmoments auf. Dabei kommt es zu einer kurzzeitigen Moment-Entlastung und der Circular-Spine und der Flex-Spine verschieben sich zueinander um einige Zähne. Dies kommt einem kleinen Offset zwischen Antriebs- und Abtriebsseite gleich. Bei häufigerem Auftreten des Effekts können sich die Zähne verformen, was zu Vibrationen oder sogar dem Bruch der Flex-Spine führt.

**"Flex spine breakage":** Beim Überschreiten des zulässigen Maximalmoments, kann das Flex-Spine brechen, was die Kraftübertragung über das Getriebe verhindert.

**Kabelbrüche**

Elektronische Komponenten arbeiten häufig nicht ordnungsgemäß oder gar nicht, wenn Kabel gebrochen oder nicht richtig eingesteckt sind. Signale können dabei verloren gehen, oder die Komponenten schalten sich aufgrund fehlender Stromzufuhr komplett ab.

**BLDC Fehler**

Durch mehrere Vorzüge finden in der Robotik oft bürstenlose Gleichstrommotoren (BLDC) Einsatz. Neben den bereits angesprochenen mechanischen Fehlern, können folgende Fehler auftreten:

**Seitenströme:** Bei schlechter Isolierung können zusätzlich Ströme zwischen einer Phase des BLDC und seinem Gehäuse fließen. Das äußert sich in erhöhten Phasenströmen und die Phasenströme addieren sich nicht mehr zu null. Im schlimmsten Fall werden durch einen Kurzschluss andere Komponenten, wie beispielsweise die Stromsensoren, beschädigt oder Menschen in der Nähe der Maschine verletzt.

**Phasenbruch:** Ein Materialschaden, ausgelöst durch mechanische oder thermische Belastung oder zu hohen Strömen, kann zum Bruch einer Phase des Motors führen, was einem Leerlauf gleich kommt. Dadurch sind nur noch zwei der drei Phasen betriebsbereit, was zur Reduktion des erzeugten Drehmoments, sowie zu erhöhten Moment-Rippeln führt. Manchmal handelt es sich bei einem vermuteten Phasenbruch lediglich um ein loses Kabel.

**Windungsschluss:** Ein Windungsschluss ist ein Kurzschluss zwischen zwei Windungen in einer Spule einer Phase, zwischen Wicklungen zweier Spulen einer Phase oder zwischen zwei Spulen verschiedener Phasen.

**Phasenschluss:** Bei einem Phasenschluss besteht ein Kurzschluss zwischen zwei Phasen des Motors. Das kann den Motor daran hindern anzulaufen.

**Fehler an einem ADC**

Jeder zu messende reale Prozess spielt sich in der analogen Welt ab. Um das Signal nun für den Einsatz von Mikrocontrollern oder DSPs nutzbar zu machen, ist die Verwendung von Analog-zu-digital-Konverter (ADC) nötig. Diese können entweder im Prozessor oder den Sensoren integriert sein oder als eigenständiges Bauteil exisitieren. Der Nachteil bei ADCs besteht im unvermeidbaren Quantisierungsrauschen (Fig. 2.4). Daher muss immer eine ausreichende Auflösung gewählt werden.

Ein wahrscheinlicher Fehler für einen ADC wäre der Verlust eines Bits. Dabei verliert der ADC die Kontrolle über ein oder mehrere Bits am Ausgang. Diese bleiben dann auf ihrem Zustand (HIGH oder LOW) stehen. Dies führt zu einem permanenten Offset oder einem Überspringen einiger Quantisierungsstufen.

**Allgemeine Sensorfehler**

Einige Fehler sind für alle Sensoren gültig, unabhängig davon, was gemessen wird. Lediglich die Ursache des Fehlers kann von Sensor zu Sensor variieren.

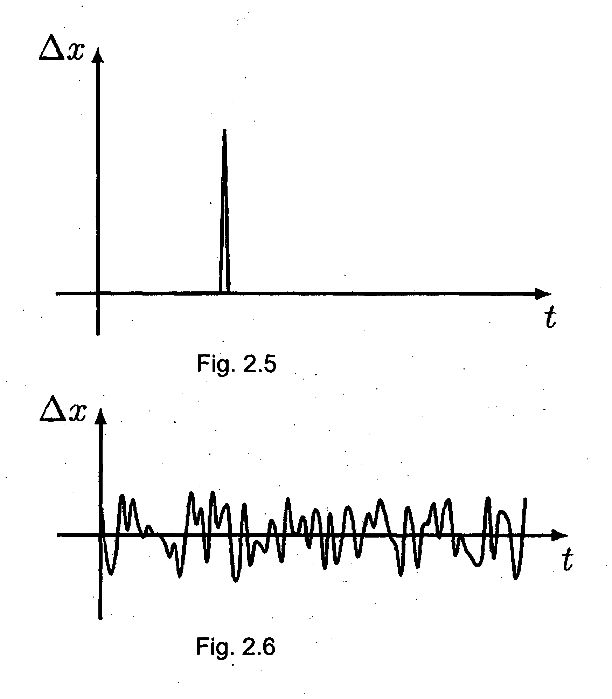

**Einzelspitze:** Ein einziges Sample kann plötzlich einen zufälligen Wert annehmen, der sich von den anderen Werten stark unterscheidet (Fig. 2.5).

**Rauschen:** Durch elektromagnetische Strahlung oder andere Einflüsse kann ein Signal rauschen (zusätzlich zum Quantisierungsrauschen). Das bedeutet, dass das Signal in einem gewissen Bereich um den eigentlichen Wert schwankt (Fig. 2.6).

**Konstanter Fehler:** Ein konstanter Fehler ist permanent und höchstwahrscheinlich falscher Kalibrierung oder Anbringung des Sensors geschuldet. Der Wert des Signals hat da- bei einen falschen Offset oder eine falsche Verstärkung.

### Fehler der Stromsensoren

Es gibt in der Regel einen Stromsensor für jede der drei Phasen des BLDC. Zusätzlich zu den allgemeinen Sensorfehlern, können diese auch noch durchbrennen. Dies zerstört einen Sensor komplett und wird durch zu hohe Temperaturen im System oder zu hohe Ströme verursacht.

### Fehler der Positionssensoren

Für diese Art der Positionssensoren sind folgende Fehler möglich:
**Schleichende Verschiebung der Position:** Ist der Sensor schlecht montiert worden, so kann dieser langsam verrutschen, was zu einem driftenden Offset führt. Dieser Vorgang wird durch Vibrationen und harte Stöße begünstigt.

**Quantisierungseffekte:** Quantisierungsrauschen ist streng genommen kein Fehler. Da dieses jedoch großen Einfluss auf das System und weitere Komponenten (Controller, etc.) hat, sei es an dieser Stelle noch einmal erwähnt.

**Verlust von Signal "A", "B" oder "Z":** Ein Positionssensor mit Inkrementalgeber stützt sich in der Regel auf die drei Signale "A", "B" und "Z". Verliert man eines oder mehrere dieser Signale (vor allem "A" und "B"), gibt der Sensor falsche Werte aus. Der temporäre Verlust der Signale kann auch durch bspw. durch Verschmutzung auf der Inkrementenscheibe hervorgerufen werden.

### Fehler des Drehmomentsensors

Durch die große Vielfalt an Konzepten eines Drehmomentsensors, ist es schwer spezifische Fehler festzulegen. Allgemeine Fehler werden in angesprochen. Exemplarisch werden hier einige aufgezählt:
**Positionierungsfehler:** Ist der Sensor nicht korrekt montiert oder sich Achsen nicht richtig ausgerichtet sind, werden die Messungen ungenau.

**Überschreiten des maximalen Drehmoments:** Hierbei kann der Sensoraufbau entwe- der brechen oder sich verformen, was zu einem Offset oder einer Verstärkung der Werte führt (Erweichen/Verhärten von Material).

### Fehlerhafte Spannungsquelle

Folgendes kann für eine Spannungsquelle nicht in Ordnung sein:
**Rauschen:** Die Versorgungsspannung kann ebenfalls rauschen. Ist das Rauschen zu stark, können elektronische Bauteile durch Überspannung beschädigt werden oder durch eine Unterversorgung zeitweise Ausfallen. In der Regel ist die Versorgungsspannung allerdings als konstant anzusehen.

**Komplettausfall:** Fällt die Spannungsquelle aus, funktioniert keines der elektronischen Komponenten mehr, die Notbremsen greifen und der Roboter steht still.

### Fehler des Wechselrichters

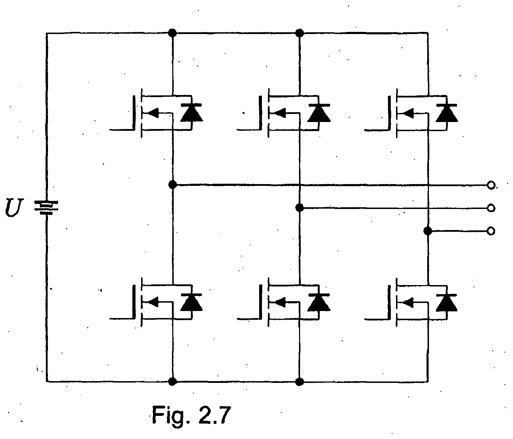

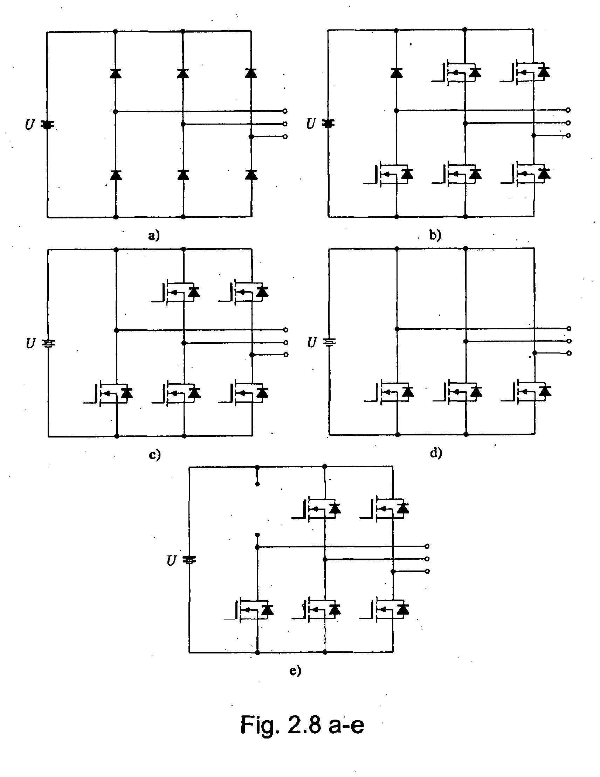

Der Wechselrichter steuert den Stromfluss durch den BLDC. Vorliegend ist ohne Beschränkung des Erfindergedankens von einem drei-Phasen-Wechselrichter die Rede. Er besteht aus drei Zweigen mit jeweils einem Schalter für den oberen und den unteren Teil. Typischerweise werden MOSFETs als Schalter verwendet (Fig. 2.7). Es können folgende Fehler auftreten:
**"Inverter shutdown":** Ein Totalausfall des Wechselrichters (Fig. 2.8 a)) führt dazu, dass alle Schalter offen bleiben und kein Strom fließt. Der Motor kann somit nicht ge- steuert werden.

**"Single switch open":** Einer der Schalter bleibt permanent geöffnet (Fig. 2.8 b)). Der Motor kann zwar betrieben werden, was allerdings zu einem unsteten Drehmoment führt. Das ist vor allem beim Anfahren des Motors problematisch.

**"Single phase short circuit":** Einer der Schalter bleibt immer geschlossen (Fig. 2.8 c)). Dabei handelt es sich dabei um einen schwerwiegenden Fehler. Die sehr hohen Ströme können sogar eine Entmagnetisierung der Rotormagnete bewirken.

**"Balanced short circuit":** Drei der Schalter bleiben stets geschlossen, allerdings entweder alle oberen oder alle unteren (Fig. 2.8 d)). Hier kommt es auch wieder zu hohen Strömen, allerdings ist dieser Fehler nicht so schwerwiegend, wie der **"Single** phase short circuit". Der Motor kann betrieben werden.

**"Single Phase Open Circuit":** Hier fehlt ein MOSFET (Fig. 2.8 e)). Eine Phase kann nun nur noch in eine Richtung betrieben werden.

**Kapitel 3**

**Simulation eines Robotergelenks**

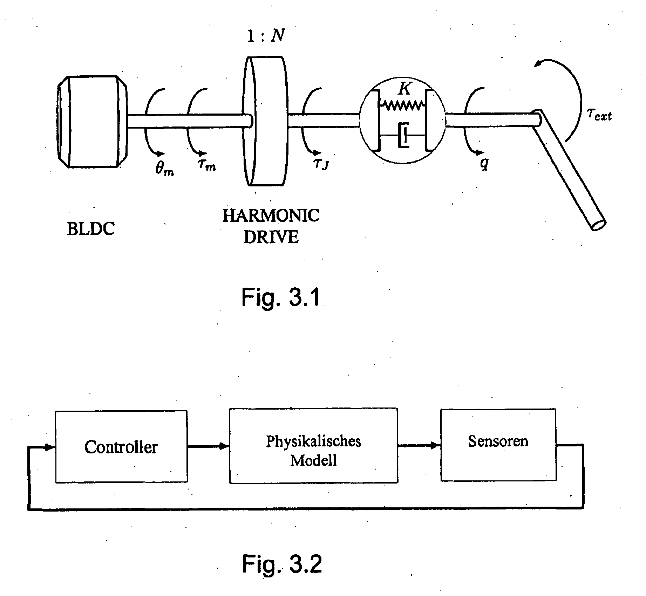

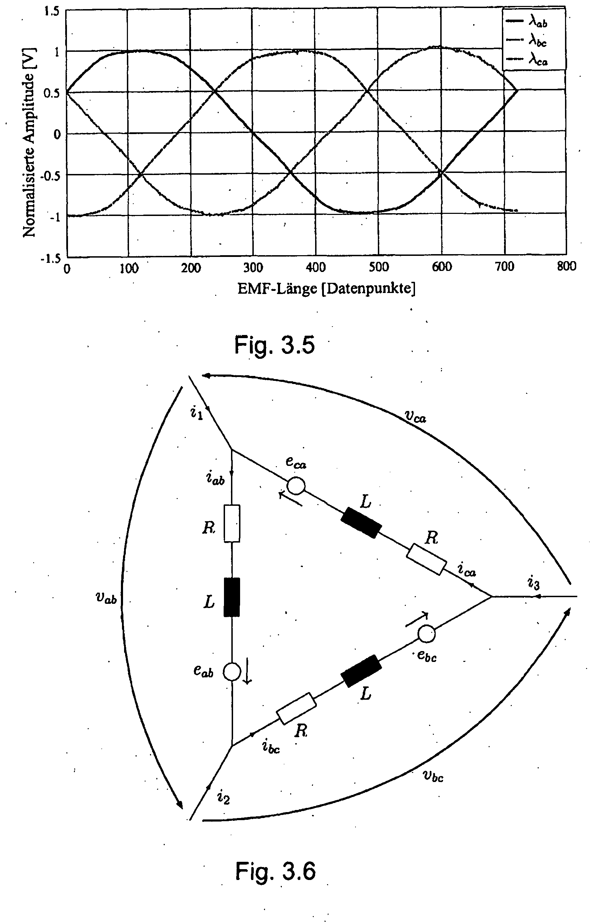

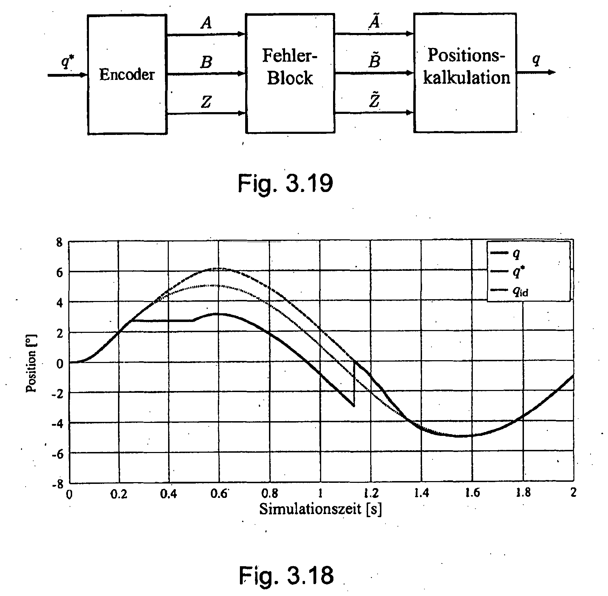

Vorliegend wird FDI auf Gelenksebene betrachtet. Deshalb soll ein einzelnes Gelenk, wie in Fig. 3.1 schematisch dargestellt, untersucht werden.

**Modellierung eines flexiblen Robotergelenks**

Das Gelenk sei als Simulink-Model gegeben und kann grob in den Controller, das physikalische Model und die Sensorik unterteilt werden (Fig. 3.2). Einige Signale dieser Simulationen existieren sowohl als "realer" Wert, als auch als "gemessener" Wert. Werden beide Versionen einer Variablen im selben Kontext genannt, so ist der "reale" Wert mit einem "*"markiert, um Verwechslungen vorzubeugen. So handelt es sich beispielsweise $\dot{\theta}_m^*$ um die tatsächliche Position des Motors, und $\theta_m$ ist die gemessene Variante, also der Output des Positionssensors. Da der Controller hier nicht von größerer Bedeutung ist, wird dieser nicht bis ins Detail beschrieben, vielmehr wird hierzu auf den Stand der Technik verwiesen. Er berechnet lediglich das benötigte Drehmoment des Motors um einer ihm vorgegebenen Trajektorie folgen zu können. Dafür stehen ihm die Ausgänge der Sensoren zur Verfügung. Der Controller gibt aus, wie der Wechselrichter schalten muss um den Motor mit dem gewünschten Drehmoment zu betreiben. Diese Schaltzustände sind als Vektor

$$S = \begin{bmatrix} s_1, s_2, s_3 \end{bmatrix}^T$$

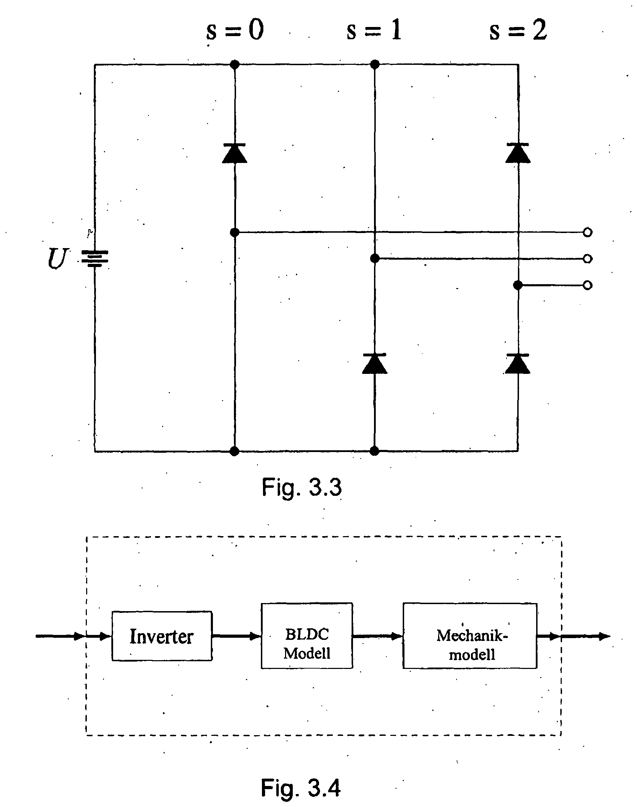

gegeben, mit möglichen Zuständen wie in Fig. 3.3 gezeigt.

Das physikalische Model ist aufgeteilt in den Wechselrichter, ein Model des BLDC und ein mechanisches Model (Fig. 3.4). Beim Wechselrichter handelt es sich um einen drei-Phasen-Wechselrichter, welcher, wie mit Fig. 2.7 beschrieben, als Simscape-Model rea lisiert ist. Das Wechselrichter-Model gibt die berechneten Phasenspannungen $v_{ab}$, $v_{bc}$ und $v_{ca}$ an das Model des BLDC weiter, welcher als Dreiecksschaltung umgesetzt ist. Mit Hilfe der "realen" Geschwindigkeit $\dot{\theta}_m^*$ und Position $\theta_m^*$ des Motors, werden die induzierten Spannungen $e_{ab}$, $e_{bc}$ und $e_{ca}$ berechnet:

$$e_{pahse}(\theta_e) = \dot{\theta}_m^* k_m \lambda_{phase}(\theta_e) \tag{3.1}$$

mit dem elektrischen Winkel

$$\theta_e = p\theta_m \qquad mod\ 2\pi \tag{3.2}$$

wobei $p$ die Anzahl der Polpaare darstellt. Die genormte BEMF $\lambda_{phase}$ ist das Ergebnisse vorhergegangener Messungen an einem realen Motor (Fig. 3.5). Mit bekannten Parametern L (Induktivität) und R (Widerstand) und den induzierten Spannungen, können nun die Phasenströme $i_{ab}$, $i_{bc}$ und $i_{ca}$ berechnet werden. Die Netzströme, welche anschließend noch gemessen werden, ergeben sich aus

$$i_{line}^* = \begin{bmatrix} i_1^* \\ i_2^* \\ i_3^* \end{bmatrix} = \begin{bmatrix} 1 & 0 & -1 \\ -1 & 1 & 0 \\ 0 & -1 & 1 \end{bmatrix} \begin{bmatrix} i_{ab} \\ i_{bc} \\ i_{ca} \end{bmatrix} . \tag{3.3}$$

Das BLDC-Model gibt außerdem das Motormoment

$$\tau_m = k_m i_{phase}^T \lambda_{phase} + \tau_C \tag{3.4}$$

aus, mit der Momentkonstanten $k_m$ und Rastmoment $\tau_C$. Das Rastmoment hängt nur von $\theta_m$ ab und kann einer lookup-Tabelle entnommen werden, welche zuvor mit Messergebnissen befüllt worden ist.

Das mechanische Model berechnet die Motorposition $\theta_m^*$ und $m$ und $m$ -geschwindigkeit $\dot{\theta}_m^*$, die Koppelposition $q^*$ und -geschwindigkeit $\dot{q}^*$ sowie das Kupplungsmoment $\tau_J^*$. Da das Gelenk stets aus der Nullposition startet, kann die Motorposition und -geschwindigkeit mit

$$\ddot{\theta}_m^* = \frac{1}{B_m}\left(\tau_m - \frac{\tau_J^*}{N} - \frac{\tau_D}{N} - \tau_f\right) \qquad (3.5)$$

berechnet werden; mit Motorträgheit $B_m$ in Motorkoordinaten, Getriebeübersetzung N, Dämpfungsmoment $\tau_D$

$$\tau_D = d\left(\frac{\dot{\theta}_m^*}{N} - \dot{q}\right) \qquad (3.6)$$

mit Dämpfungskonstante d und dem Reibungsmoment $\tau_f$. Für die Abtriebsseite gilt die Gleichung

$$\ddot{q}^* = \frac{1}{M}\left(\tau_J^* + \tau_D - \tau_f - \tau_{ext}\right) \qquad (3.7)$$

mit abtriebsseitiger Trägheit $M$. Das externe Drehmoment $\tau ext$ besteht aus dem Schwerkraftmoment $\tau_g$ und dem Lastmoment $\tau_L$.

Das Reibungsmodel basiert auf einem Lund-Grenoble-Model [1] und kann mit y

$$\tau_f = \sigma_0 z + \sigma_1 \dot{z} + \sigma_2 \dot{\theta}_m^*, \qquad (3.8)$$

$$\dot{z} = \dot{\theta}_m^* - \sigma_0 \frac{|\dot{\theta}_m^*|}{g(\dot{\theta}_m^*)}, \qquad (3.9)$$

$$g(\dot{\theta}_m) = \tau_C + (\tau_S - \tau_C)e^{-(\dot{\theta}_m^*/\dot{\theta}_m^*)^2} \qquad (3.10)$$

ausgedrückt werden. Das Gelenksmoment wird berechnet mit Hilfe der Steifigkeits-Koeffizienten $a_1$, $a_2$ und $a_3$ und Gleichungen

$$\tau_J^* = a_1(\Delta\theta) + a_2(\Delta\theta)^3 + a_3(\Delta\theta)^5 + \tau_h, \qquad (3.11)$$

$$\dot{\tau}_h = -\alpha|\Delta\dot{\theta}|\tau_h + A\Delta\dot{\theta}, \qquad (3.12)$$

$$\Delta\theta = \frac{\theta_m^*}{N} - q^*. \qquad (3.13)$$

$\tau_h$ ist das Hysterese-Moment mit Koeffizienten $A$ und $\alpha$ (nach [10]).

Die Sensormodelle werden mit den "realen "Werten $\theta_m^*$ $\dot{\theta}_m^*$ gespeist, welche im mechanischen und im BLDC-Model berechnet werden. Implementierte Sensoren sind unter anderem zwei Positionssensoren, welche aus den Positionen $q^*$ und $\theta^*$ die gemessenen Positionen q und $\theta_m$ sowie die gemessenen Geschwindigkeiten $\dot{q}$ und $\dot{\theta}$ ermitteln. Diese beiden Sensoren verwenden ein Messgeber-Model nach [14]. Hierbei wird ein Inkrementalgeber simuliert, welcher positionsabhängig zwei Signale A und B, die um 90° zueinander verschoben sind, emuliert. Dadurch können sowohl die aktuelle Position, als auch die Bewegungsrichtung ermittelt werden. Zusätzlich wird noch ein Indexsignal Z generiert, welches einen Nulldurchgang des Gelenks signalisiert. Ein weiterer implementierter Sensor ist der Drehmomentsensor, welcher das "reale" $\tau_J^*$ misst und $\tau_J$ ausgibt. Hierbei wird zunächst ein zusätzliches Rauschen addiert und anschließend das Signal quantisiert und gesättigt. Zu guter Letzt werden noch die Netzströme $i_1^*$, $i_2^*$ und $i_3^*$ gemessen. Die Vorgehensweise ist hier Deckungsgleich mit der des Drehmomentsensors.

Dem Controller wird eine Trajektorie vorgegeben, der das Gelenk folgen soll. Im Folgenden ist diese definiert als

$$q_{id} = 5sin(\frac{t}{2}2\pi),$$

mit Referenzposition $q_{id}$ in [°] und Zeit t. Der Controller versucht die Abweichung $\Delta q = q_{id} - q$ zu minimieren. Die Motorposition in abtriebsseitigen Koordinaten $\theta$ sei definiert als

$$\theta = \frac{\theta_m}{N} \hspace{4cm} (3.15)$$

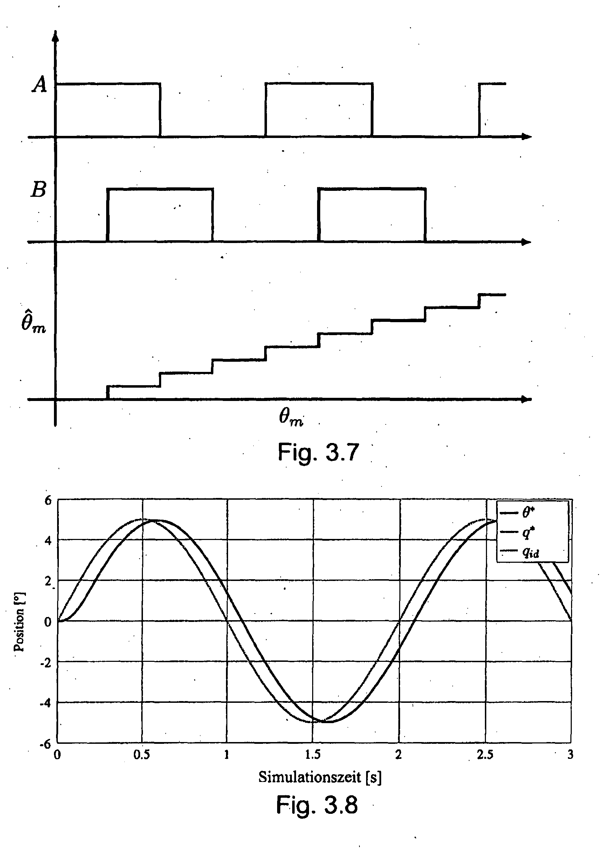

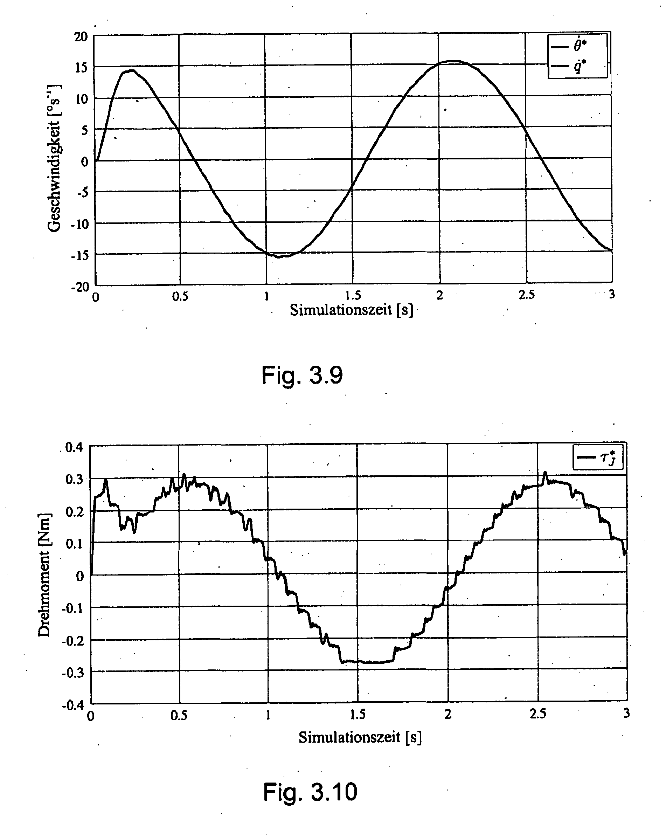

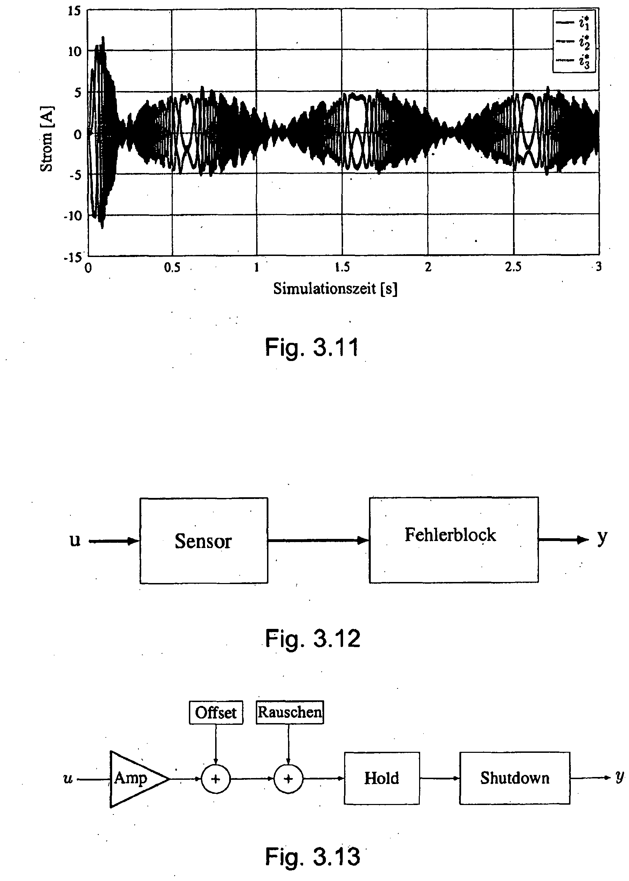

mit Getriebeübersetzung N. Fig. 3.7 zeigt hierzu Messgeber-Signale und berechnete Positionen. In einem fehlerfreien Lauf mit Laufzeit t = 3 s sehen die Outputs des physikalischen Models aus wie dargestellt in Fig. 3.8, 3.9, 3.10 und 3.11. Hier sind $\theta$ und $q$ nahezu deckungsgleich. Durch Trägheit, Verzögerungen und Einstellungen des Controllers hinkt die aktuelle Position der Wunschposition immer etwas hinterher. Das Rauschen der Sensorik ist hier so klein gewählt, dass mit dem bloßen Auge im Vergleich zu den tatsächlichen Werten kein Unterschied festzustellen ist.

## Fehlermodellierung

Um eine Fehlererkennung in der Simulation testen zu können, wurden Fehler in Simulink implementiert. Alle Fehler können in einem "parameter Skript" eingestellt und zu jedem Zeitpunkt ein- bzw. ausgeschaltet werden. Der Controller bleibt unangetastet, wohingegen Fehler im physikalischen und im Sensormodell eingebaut werden. Im folgenden steht der Index id (zum Beispiel in $q_{id}$) für ideal und beschreibt den Verlauf einer Variable im fehlerfreien Fall.

### Sensor Fehler

Fig. 3.12 zeigt ein Schema der Signalmanipulation für allgemeine Sensorfehler. Fehlerblöcke der Sensoren sitzen direkt hinter den Sensormodellen (Fig. 3.12). Messergebnisse werden manipuliert und anschließend an den Controller weitergeleitet. Ein Schema der Signalmanipulation zeigt Fig. 3.13.

### Allgemeine Sensorfehler

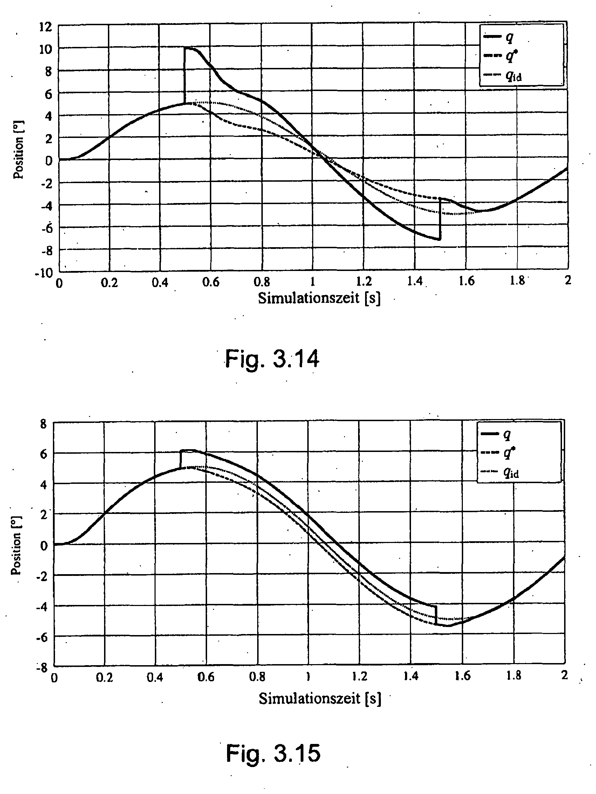

**Verstärkung:** Der Sensorwert wird mit einem bestimmten Wert multipliziert. Fig. 3.14 zeigt einen fehlerbehafteten Positionssensor q mit einer Verstärkung von 2 für 0.5 s ≤ $t$ < 1.5 s. $q$ ist der Sensormesswert, $q^*$ die "reale" Position und $q_{id}$ die Position ohne Fehler. q* weicht von $q_{id}$ ab, da der Controller mit falschen Werten rechnet.

**Offset:** Addieren bzw. Subtrahieren eines bestimmten Wertes vom Sensormesswert. Z.B. fehlerbehafteter Positionssensor q mit einem Offset von 0.02 rad für 0.5 s ≤ t < 1.5 s (Fig. 3.15).

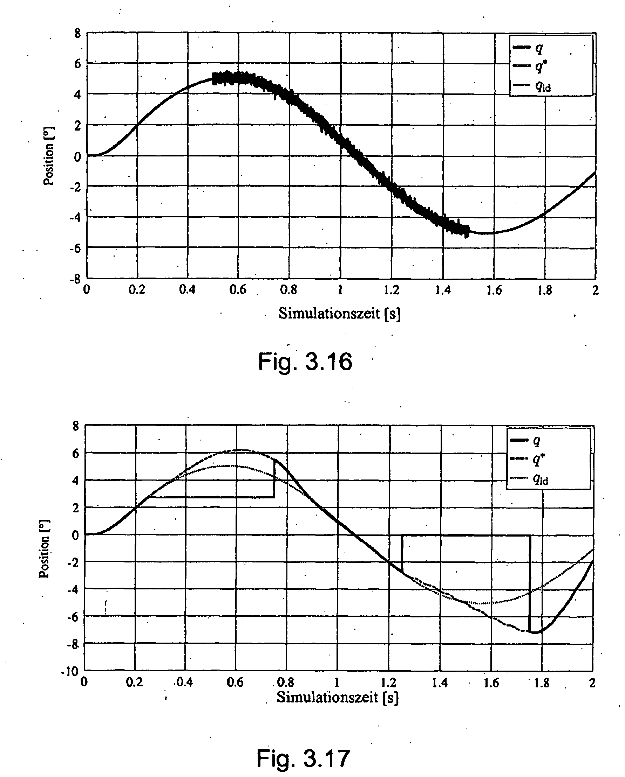

**Rauschen:** Zusätzlich zum normalen Rauschen des Sensors wird ein weiteres Rauschen addiert. Hier wird eine Rauschverstärkung eingestellt. Ist der eingestellt Wert 0, so verschwindet nur das zusätzliche Rauschen, jedoch nicht das Standardrauschen. Ein Beispiel gibt Fig. 3.16 mit Rauschen (verstärkt um Faktor 1) für 0.5 s ≤ $t$ < 2 s.

**"Hold/Shutdown":** Je nachdem, wie der Controller eingestellt ist, kann ein Verbindungsverlust zu einem Sensor auf zwei verschiedene Weisen gehandhabt werden. Entweder wird der Sensormesswert einfach auf 0 gesetzt ("Shutdown") oder der letzte gültige Wert wird behalten bis die Verbindung wieder hergestellt wird und ein neuer gültiger Wert erfasst wird ("Hold"). Zu sehen am Beispiel eines defekten Positionssensors q (Fig. 3.17) mit Hold aktiv für 0.5 s ≤ $t$ < 0.75 s und "Shutdown" aktiv für 1.5 s ≤ $t$ < 1.75 s.

Das obige Schema (Fig. 3.13) wird für jedes der Sensormodelle angewandt. Durch ihre spezifischen Eigenschaften wurden für einige Sensoren noch zusätzliche Fehler implementiert.

**Positionssensoren**

**Inkrement-Skip:** Wie bereits beschrieben können bei Positionssensoren auch Inkremente überspringen werden. Wenn dieser Fehler aktiv ist, kann keine weitere Änderung des Positionssignals detektiert werden. Wird dieser Fehler wieder deaktiviert, bleibt ein Offset auf dem Signal. Eine steigende Flanke von Signal Z setzt diesen Offset wieder zurück. Fig. 3.18 zeigt diesen Fehler für $0.25$ s $\leq t < 0.5$ s.

Normalerweise werden nicht so viele Inkremente übersprungen, jedoch ist der Effekt des Fehlers so deutlicher zu sehen.

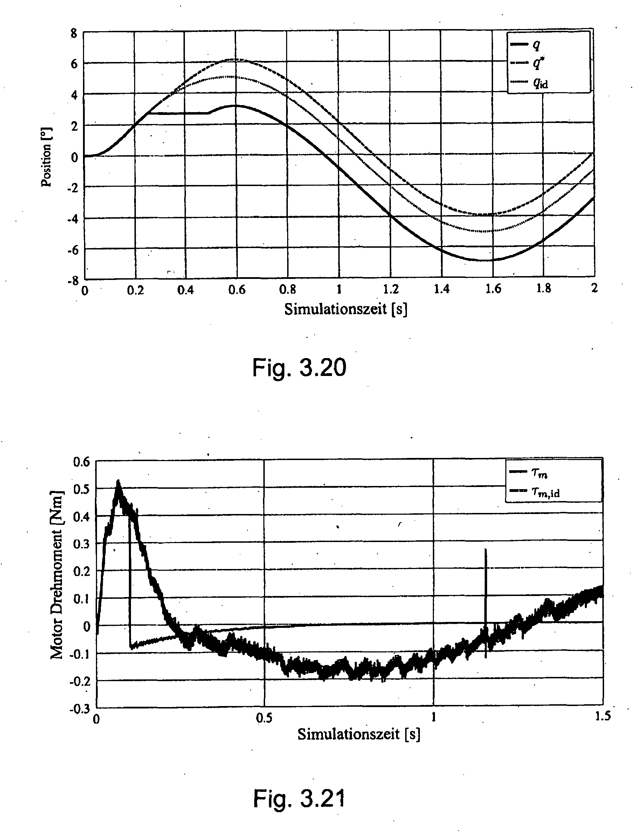

**Verlust der Signale A, B oder Z:** Zusätzlich zum Standard Fehlerblock ist ein weiterer Fehlerblock in den Positionssensoren implementiert, welcher die Signale A, B und Z abfängt und nur weitergibt, falls keiner dieser Fehler aktiv ist. Fig. 3.20 zeigt den Verlust von A für $0.25$ s $\leq t < 0.5$ s. Im Gegensatz zu "Hold" wird der entstehende Offset nicht durch Z zurückgesetzt.

**Stromsensoren**

Für die Stromsensoren wurden keine weiteren Fehler implementiert. Jeder der allgemeinen Sensorfehler kann für jeden der Stromsensoren einzeln eingestellt werden.

**Drehmoment-Sensor**

Außer den allgemeinen Sensorfehlern wurden keine weiteren Fehler für diesen Sensor eingepflegt.

**Fehler des Wechselrichters**

Folgende Fehler wurden für den Wechselrichter eingebunden:

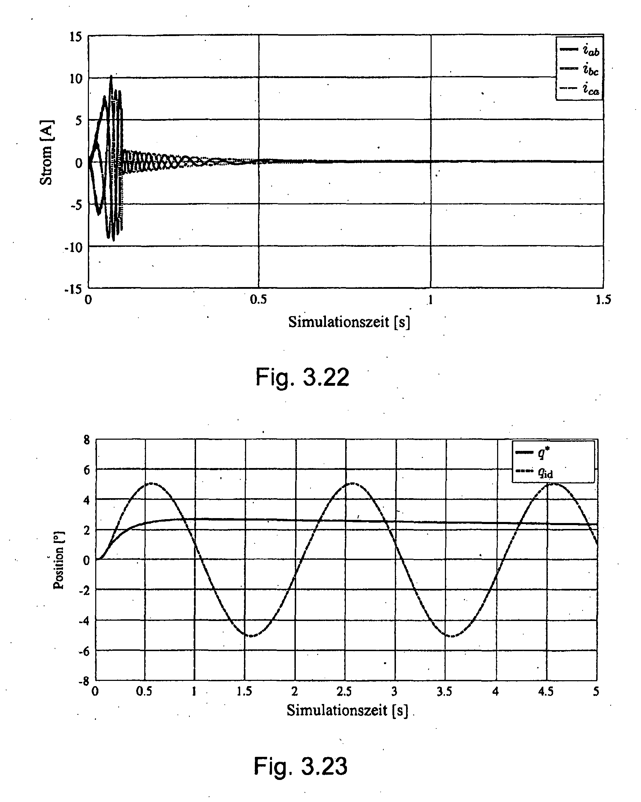

**"Shutdown":** Alle Schalter sind offen. Dieser Fehler ist in Fig. 2.8 a) skizziert. Fig. 3.21, 3.22 und 3.23 zeigen die Auswirkungen des Fehlers auf das Gelenk. Das System kommt nicht direkt zum Stillstand. Durch restliche kinetische Energie und die Schwerkraft pendelt sich das Gelenk langsam aus, bis es wieder in der Nullposition ankommt. Abgebremst wird das Gelenk nur durch Reibung $\tau_f$ und durch BEMF induziertes Motormoment $\tau_m$. Die induzierten Ströme sind in Fig. 3.22 für t $\geq 0.1$ s dargestellt.

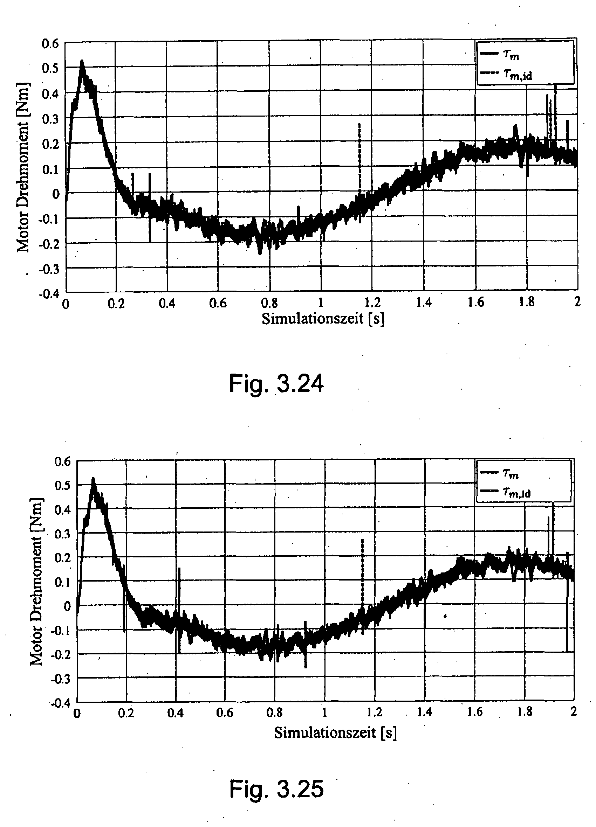

**"Single open":** Ein Schalter bleibt stets geöffnet, wie in Fig. 2.8 b) dargestellt. Dieser Fehler kann für jeden der sechs MOSFETs eingestellt werden. Das Verhalten des Gelenks wird hier kaum beeinflusst, vgl. mit Fig. 3.24, in der MOSFET eins für $t \geq 0.1$ s geöffnet bleibt.

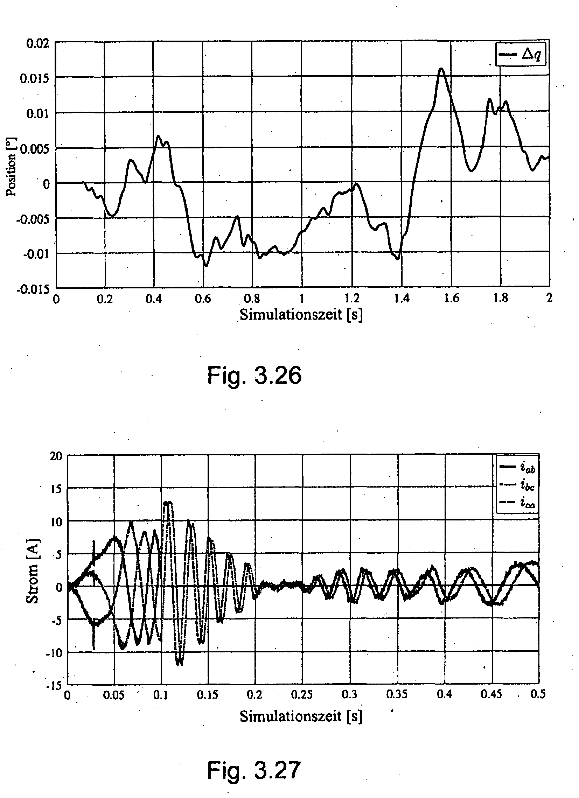

**"Single closed":** Einer der Schalter bleibt geschlossen. Die Auswirkungen dieses Fehlers sind mit bloßem Auge kaum zu erkennen. Fig. 3.25 und 3.26 zeigen den Effekt des Fehlers für $t \geq 0.1$ s.

**"Balanced closed":** Drei der sechs Schalter bleiben geschlossen (entweder die oberen oder die unteren). Die Auswirkungen decken sich weitestgehend mit denen des Fehlers single switch closed".

**"Single short":** Einer der MOSFETs wird überbrückt. Der Fehler ist weitestgehend äquivalent zu "single switch closed".

**"Balanced short":** Drei der sechs MOSFETs werden überbrückt. Der Fehler ist äquivalent zu "balanced closed".

**"Single idle":** Einer der MOSFETs wird komplett entfernt, was zu einem Leerlauf an dessen Stelle führt. Dieser Fehler ist somit äquivalent zu "single switch open" (abgesehen von der Freilauf-Diode). Keine zusätzlichen Effekte ergeben sich durch diesen Fehler.

**Fehler des BLDC**

Die implementierten Fehler des BLDC umfassen folgendes:

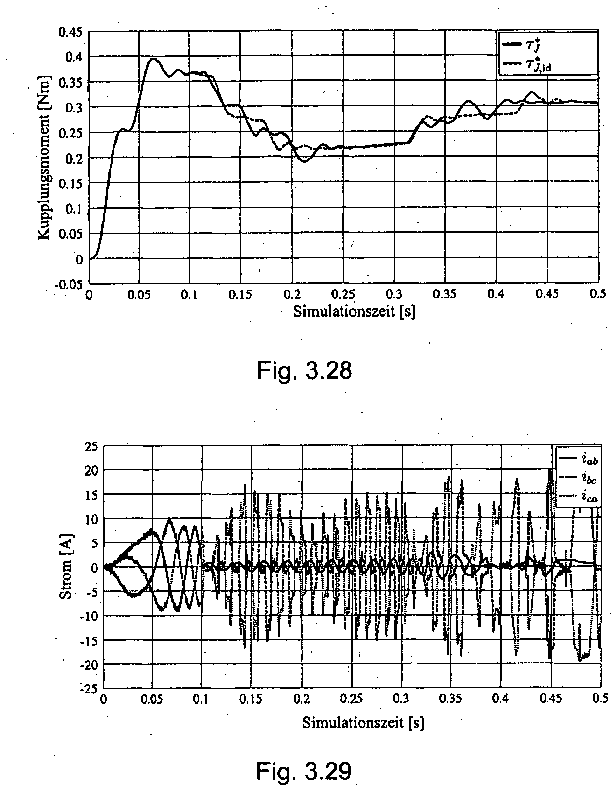

**Phasenbruch:** Einer der Phasenströme wird auf 0 gesetzt. Fig. 3.27 zeigt die Auswirkungen beim Bruch von Phase 1 für $t \geq 0.1$ s. Im Gelenksmoment können nur kleine Abweichungen beobachtet werden (Fig. 3.28).

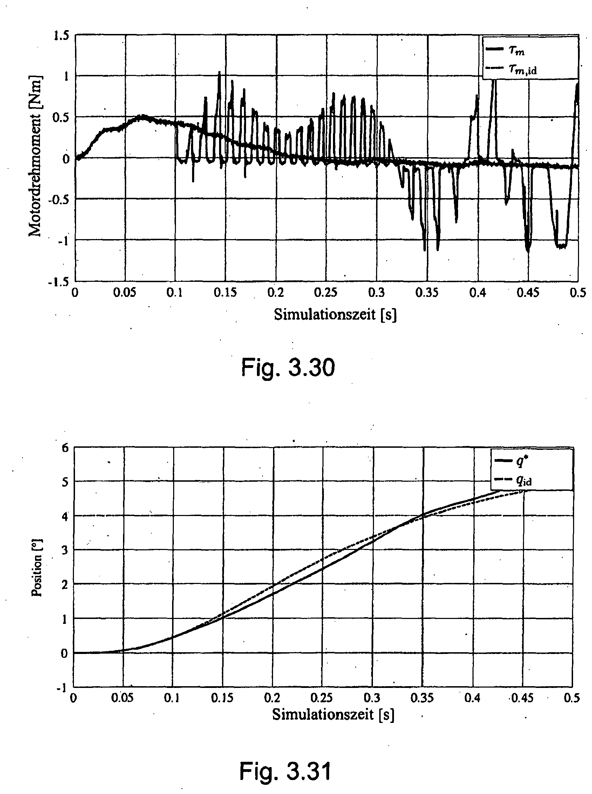

**Phasenschluss:** Zwei der drei Phasen werden gebrückt. Es ergeben sich dabei drei mögliche Kombinationen. Dieser Fehler ist im Model des Wechselrichters implementiert. Fig. 3.29, 3.29, 3.31 und 3.30 zeigen die Folgen dieses Fehlers ($v_{ab} = 0$) für $t \geq 0.1$ s. Ist der Fehler in diesem Beispiel aktiv, wird der Phasenstrom $i_{ab}$ lediglich durch die BEMF erzeugt.

**Mechanische Fehler**

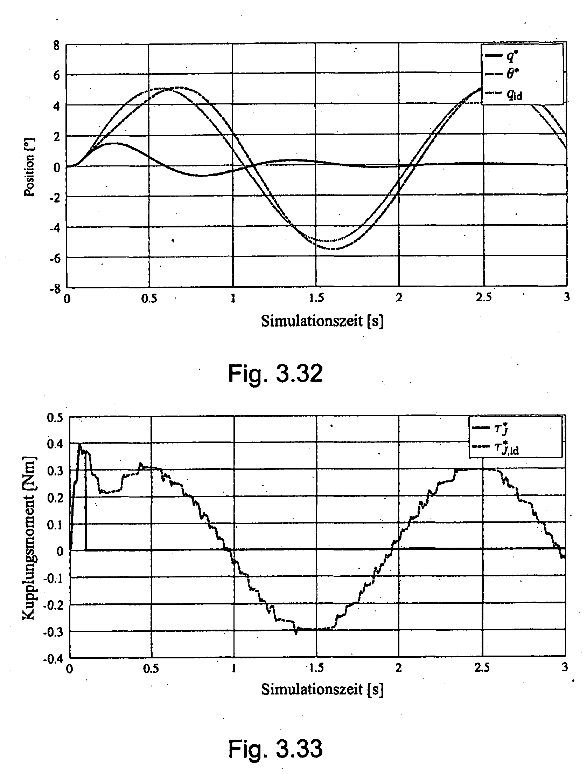

Mechanische Fehler umfassen:
**Getriebebruch:** Motor und Rest des Gelenks sind komplett entkoppelt. Das Gelenkmoment $\tau_J{}^*$ und das Dämpfungsmoment $\tau_D$ sind gleich 0. Das Gelenk oszilliert um die Nullposition, abgebremst durch die Reibung $\tau_f$. In Fig. 3.32 und 3.33 bricht das Getriebe ab 0.1 s.

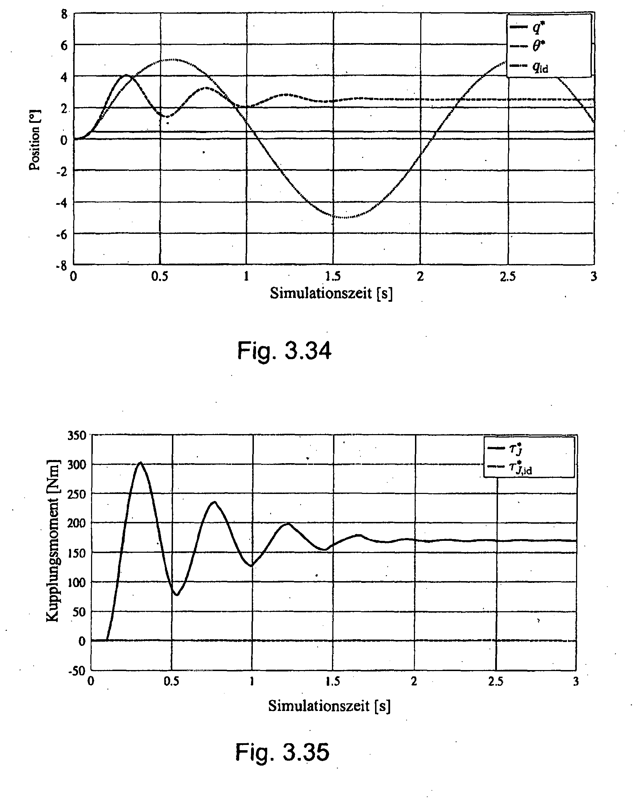

**Blockiertes Gelenk:** Die Gelenksgeschwindigkeit wird auf 0 gesetzt und das Getriebe verhält sich wie eine Feder gegen die der Motor arbeitet. Die Folge ist ein hohes Gelenksdrehmoment. Durch diese hohen Drehmomente kann das Getriebe auch schnell brechen. Üblicherweise fällt dieses Szenario nicht unter den Aspekt der FDI, sondern wird von der Kollisionserkennung abgedeckt. In Fig. 3.34 und 3.35 wird das Gelenk ab $t \geq 0.1$ s blockiert.

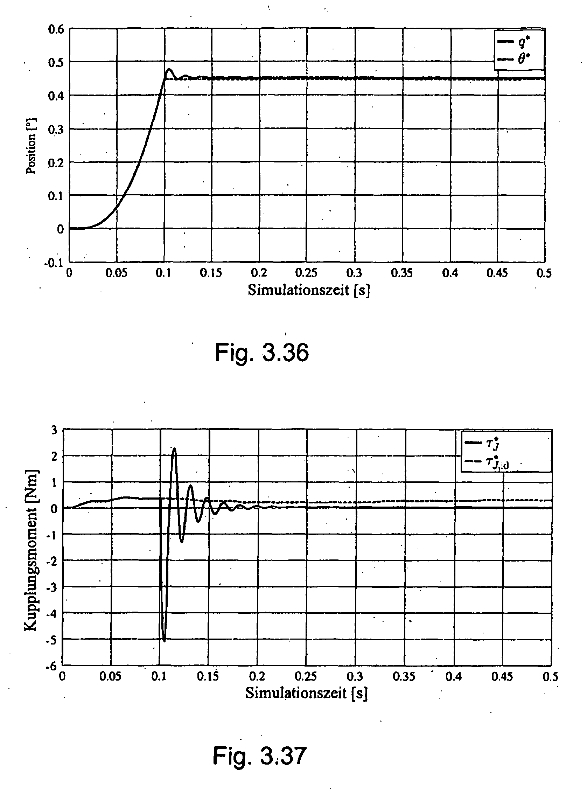

**Blockierter Motor:** Die Geschwindigkeit des Motors wird auf 0 gesetzt. Blockieren des Motors bringt das gesamte Gelenk zum Stillstand. Da das Getriebe wie eine Feder wirkt, schwingt das Gelenk allerdings noch kurz nach. In Fig. 3.36 und 3.37 blockiert der Motor für $t \geq 0.1$ s.

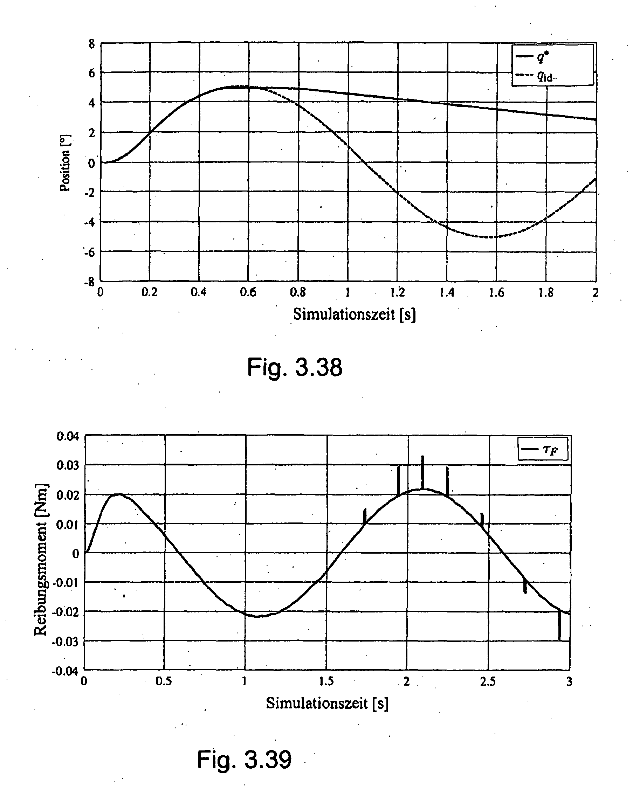

**Erhöhung der Reibung:** Eine Erhöhung der Reibung führt zu höheren Strömen, da der Motor nun mehr Kraft benötigt um das Gelenk zu bewegen. In Fig. 3.38 wird die Reibung auf das 100-fache erhöht für $t \geq 0.5$ s.

**Momentwelligkeit:** Drehmoment-Rippel sind als Erhöhung der Reibung in Abhängigkeit von der Motorposition in der Simulation umgesetzt. Die Position und Breite der Rippel kann eingestellt werden. Fig. 3.39 zeigt die Drehmomentwelligkeit für $t \geq 1.5$ s.

**Kapitel 4**

**Implementierung von FDI-Methoden in der Simulation**

Ziel ist es hierbei die implementierten Fehler, welche zuvor beschrieben wurden, während der laufenden Simulation des Robotergelenks zu detektieren. Dabei gibt es verschiedene Ansätze, welchen eine Zahl an Sensorsignalen zur Verfügung steht. Diese Sensorsignale umfassen Ausgaben der Positionssensoren $\theta_m$ und q, sowie der Stromsensoren $i_1$, $i_2$ und $i_3$, und des Drehmomentsensors $\tau_J$. Zusätzlich besteht auch die Möglichkeit einige Signale der Regelung ab zugreifen, da Regelung und Fehlererkennung später auf ein und demselben Chip implementiert werden sollen. Zur Fehlererkennung in der Simulation werden zudem folgende Parameter benötigt (Tab. 4.1):

| Beschreibung | Variable |
| --- | --- |
| Getriebeübersetzung | $N$ |
| Gelenk-Steifigkeit | $K$ |
| Antriebs seitige Trägheit | $B_m$ |
| Abtriebs seitige Trägheit | M |
| Beobachter gain (friction observer) | $L_f$ |
| Dämpfungskonstante | d |
| Versorgungsspannung | $U_{dc}$ |
| Anzahl Polpaare (BLDC) | $p$ |
| Induktivität des Motors | L |
| Mutual Inductance | $M_{ind}$ |
| Drehmomentkonstante | $k_m$ |
| Form der BEMF (normiert) | $\lambda(\theta_m)$ |

Die vorgestellten Methoden sind so gewählt, dass sie möglichst einfach und ressourcenschonend sind, sodass es zu keinen Störungen oder Verzögerungen im Regler kommt, wenn diese auf dem selben DSP laufen.

**Limit Checking**

Die einfachste und zugleich ressourcenschonendste Methode ist das "limit checking". Hierbei wird überprüft, ob sich der Wert eines Sensorsignals *y* innerhalb eines Grenzwerts ε befindet. Wird der Grenzwert ε über-/unterschritten, so wird ein Fehler signalisiert.

$$\varepsilon_{y,min} < y < \varepsilon_{y,min} \qquad (4.1)$$

Oft ist es unnötig sowohl einen unteren als auch einen oberen Grenzwert festzulegen, und man kann sich auf einen Grenzwert für den Betrag des Sensorsignals festlegen.

$$|y| < \varepsilon. \tag{4.2}$$

Die in diesem Fall überprüften Sensorsignale sind die Signale der einzelnen Stromsensoren $i_k$ ( $\forall k \in \{1, 2, 3\}$ ), das Drehmoment $\tau_J$ und die antriebs-/abtriebsseitigen Geschwindigkeiten $\dot\theta$ und q, mit den jeweils einem eigenen Grenzwert:

$$|i_k| < \varepsilon_{i_{line}} \tag{4.3}$$

$$|\tau_J| < \varepsilon_{\tau_J} \tag{4.4}$$

$$|\dot q| < \varepsilon_{\dot q} \tag{4.5}$$

$$|\dot\theta| < \varepsilon_{\dot\theta} \tag{4.6}$$

Die Positionen $\theta$ and q werden nicht direkt überprüft, da sie in absoluten Winkeln angegeben werden und somit nicht an die Grenzen von $\pm360°$ gebunden sind. Eine weitere Charakteristik des Systems ist, dass sich alle Ströme zu Null addieren.

$$i_1 + i_2 + i_3 = 0 \tag{4.7}$$

Durch Rauschen der Sensorsignale ist die Summe natürlich nie genau Null, und es kann ein weiterer Grenzwert zur Fehlererkennung eingeführt werden.

$$|i1 + i2 + i3| < \varepsilon_{iline,sum}. \tag{4.8}$$

Jeder Grenzwert muss individuell eingestellt werden und ist abhängig von der Stärke des Rauschens, sowie des Messbereichs und des zugrunde liegenden physikalischen Models. Diese Einstellungen sollten so vorgenommen worden sein, dass im fehlerfreien Fall kein Fehlalarm ausgelöst wird ("zero false positive"), gleichzeitig jedoch auftretende Fehler zuverlässig erkannt werden ("zero false negative").

| Limit-gecheckte Werte | Detektierte Fehler |
|---|---|
| $\dot q$ | noise gain (sensor $q$) |
| | Verstärkung (sensor q) |
| | offset (sensor q) |
| | shutdown (sensor q) |
| $\dot\theta$ | noise gain (sensor $\theta_m$) |
| | Verstärkung (sensor $\theta_m$) |
| | offset (sensor $\theta_m$) |
| | shutdown (sensor $\theta_m$) |
| $\tau_J$ | blockiertes Gelenk |
| $i_{line}$ | keine zuverlässige Erfassung |
| sum $i_{line}$ | noise gain (jeder Stromsensor) |
| | Verstärkung (jeder Stromsensor) |
| | offset (jeder Stromsensor) |
| | hold/shutdown (jeder Stromsensor) |

Offensichtlich lassen sich mit diesen einfachen Methoden nicht alle Fehler erkennen. Da sie jedoch sehr ressourcenschonend sind, können sie eine nützliche Ergänzung zu komplizierteren Methoden darstellen. Nichtsdestotrotz konnten auch mit diesen rudimentären Methoden einige Fehler erkannt werden. Unter anderem werden abrupte Änderungen in den Positionssignalen detektiert. Beim überprüfen des Drehmoments konnte lediglich der Fehler "blockiertes Gelenk" detektiert werden. Dies ist somit eine einfache Version der Kollisionserkennung. Mithilfe der Summe der Ströme können auch die meisten Fehler der Stromsensoren erkannt werden. Die vorstehende Tabelle zeigt eine Liste von erkannten Fehlern zu jedem nach Grenzwerten überprüften Sensorsignal.

**Parameterschätzung**

Sobald das zugrundeliegende Prozess-Model des Gelenks bekannt ist, können einige Prozessparameter geschätzt und mit zuvor gemessenen oder eingestellten werten verglichen werden.

Ein Prozess Model kann wie folgt geschrieben werden:

$$y(t) = \underline{\Psi}^T(t)\underline{\Theta} \qquad (4.9)$$

Die geschätzten Parameter sind somit

$$\hat{\underline{\Theta}} = \left[\underline{\Psi}^T\underline{\Psi}\right]^{-1}\underline{\Psi}^T\underline{y} \qquad (4.10)$$

Um nun mögliche Fehler zu detektieren, wird für jeden Parameter $\Theta$ ein Residuum gebildet mit

$$r = \hat{\Theta} - \Theta \qquad (4.11)$$

Wird wiederum ein Grenzwert $\varepsilon$ überschritten, wird ein Fehler signalisiert.

$$|r| < \varepsilon \qquad (4.12)$$

Im vorliegendem Gelenkmodel ist für die meisten Parameter schwierig eine Gleichung zu finden, die sich leicht und Kostengünstig lösen lässt. Da die Ressourcen später im realen Roboter begrenzt sind, werden im Folgenden lediglich zwei sehr simple Parameter abgeschätzt um das Prinzip zu verdeutlichen. Geschätzte Parameter sind die Steifigkeit des Roboters

$$\hat{K} = \tau_J\left(\frac{\theta_m}{N} - q\right)^{-1} \qquad (4.13)$$

mit der Getriebeübersetzung

$$\hat{N} = \theta_m\left(\frac{\tau_J}{K} + q\right)^{-1} \qquad (4.14)$$

Die geschätzten Parameter $K^{\wedge}$ und $N^{\wedge}$ müssen sich wiederum in einem vordefinierten Wertebereich um die bekannten realen Parameter befinden.

$$\left|\hat{K} - K\right| < \varepsilon_K \qquad (4.15)$$

$$\left| \hat{N} - N \right| < \varepsilon_N \qquad\qquad (4.16)$$

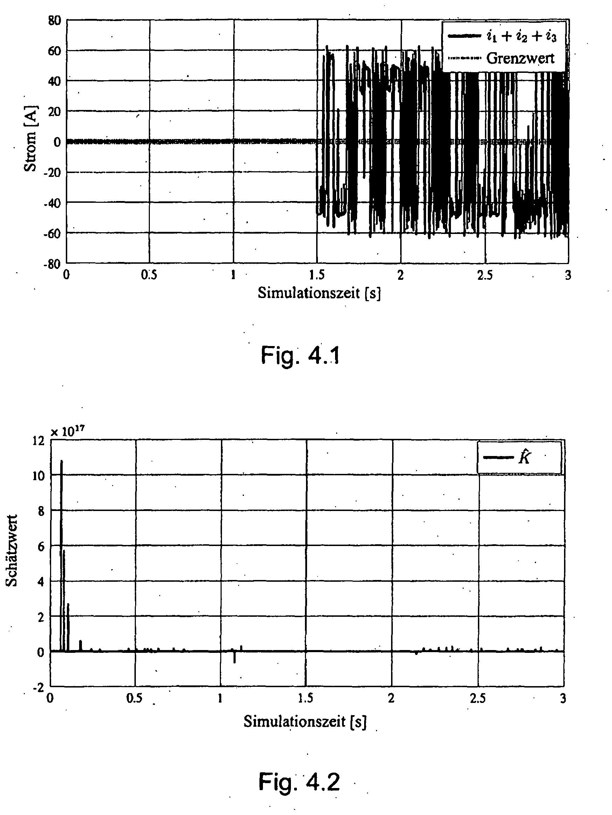

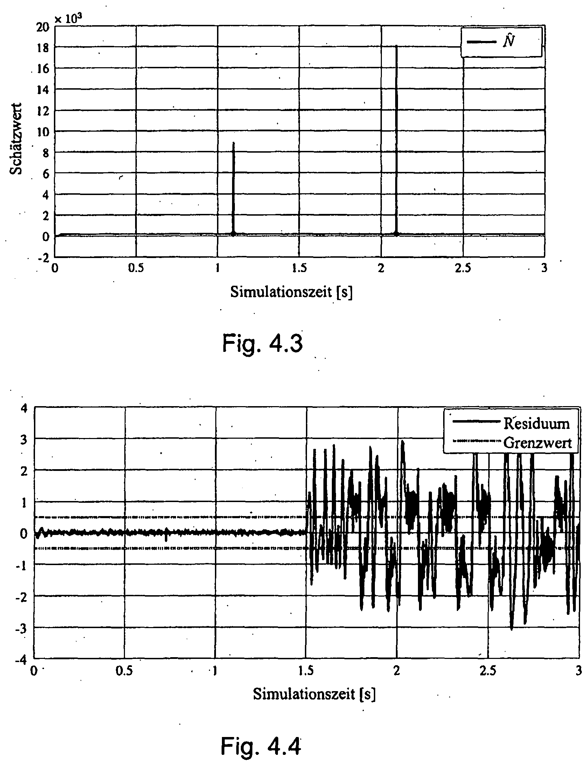

Die gewählten Parameter sind in diesem Fall für die Fehlererkennung ungeeignet. Da hier durch verrauschte Signale geteilt wird, ist auch die Abschätzung der Parameter sehr verrauscht (vgl. Fig. 4.2 und Fig. 4.3). Die Wahl anderer Parameter zur Abschätzung wäre unter Umständen wesentlich komplexer und könnte später auf der Hardware zu rechenintensiv sein.

**Beobachter**

Eine weitere Möglichkeit zur Fehlererkennung besteht darin, einen Zustand zu beobachten, zu dem man keinen Vergleichswert hat. Diese Beobachter eignen sich in dem Moment zur FDI, wenn die Fehler den Verlauf der Beobachtung extrem verändern oder der beobachtete Wert durch den Fehler Werte annimmt, die mit dem bekannten physikalischen Model nicht mehr vereinbar sind.

Die beobachteten Zustände beinhalten:

- das Dämpfungsmoment $\tau_D$
- das Motormoment $\tau_m$
- das Reibungsmoment $\tau_f$
- und das externe Drehmoment $\tau_{ext}$.

Eine Beobachtung des Dämpfungsmomentes $\tau_D$ wird erreicht durch

$$\hat{\tau}_D = d\left( \frac{\dot{\theta}_m}{N} - \dot{q} \right) \qquad\qquad (4.17)$$

mit der Dämpfungskonstanten d. Für die Berechnung des Motormoments ist eine d/q-Transformation notwendig. Dafür benötigen wir die elektrische Position $\theta_e$ des Motors, sowie die Phasenströme $i_{phase}$. Mit der Anzahl der Polpaare $p$ ergibt sich für die elektrische Position $\theta_e$

$$\theta_e = (p\theta_m) \quad \mod 2\pi. \qquad\qquad (4.18)$$

$$i_{phase} = \begin{bmatrix} i_{ab} \\ i_{bc} \\ i_{ca} \end{bmatrix} = \begin{bmatrix} 1 & 0 & -1 \\ -1 & 1 & 0 \\ -1 & -2 & 0 \end{bmatrix}^{-1} \begin{bmatrix} i_1 \\ i_2 \\ i_3 \end{bmatrix} \qquad\qquad (4.19)$$

angenähert werden.

Die Phasenströme $i_{phase}$ werden zu $i_d$ und $i_q$ transformiert (d/q-Transformation). Das Motormoment $\hat{\tau}_m$ ergibt sich somit zu

$$\hat{\tau}_m = k_m i_q \qquad\qquad (4.20)$$

mit Momentkonstante $k_m$.

Das Reibungsmoment $\tau_f$ kann beobachtet werden mit

$$\hat{\tau}_f = L_f\left( \int (\hat{\tau}_m - \tau_J - \hat{\tau}_f)dt - B_m \dot{\theta}_m \right) \qquad\qquad (4.21)$$

Dabei ist L der Beobachter gain, $B_m$ die Motorträgheit, $\tau_J$ das gemessene Drehmoment und $\dot{\theta}_m$, die gemessene Motorgeschwindigkeit. $\hat{\tau}_m$ ergibt sich aus dem Beobachter des Motormoments. Nimmt man nun die Beobachter des Reibungs- und des Dämpfungsmoments zu Hilfe, so lässt sich auch das externe Moment beobachten.

$$\hat{\tau}_{ext} = \tau_J + \hat{\tau}_D - \hat{\tau}_f - M\ddot{q} \qquad (4.22)$$

Die Beschleunigung $\ddot{q}$ erhält man durch Ableiten der gemessenen Geschwindigkeit $\dot{q}$. Da man das Positionssignal somit zweimal ableiten muss, um die Beschleunigung zu erhalten, braucht man einen sehr genauen, rauscharmen Positionssensor, da $\ddot{q}$ sonst durch starkes Rauschen unbrauchbar wird. In der Simulation stellt dies natürlich kein Problem dar. Wenn keine zusätzliche Last am Gelenk wirkt, besteht das externe Drehmoment ausschließlich aus dem Gravitationsmoment, welches allein durch das Eigengewicht des Roboters hervorgerufen wird.

Eine weitere Möglichkeit der Detektion von Fehlern ist es, die Sensorsignale selbst zu beobachten und anschließend mit den gemessenen Werten zu vergleichen. Die abtriebsseitige Position kann beobachtet werden durch

$$\hat{q} = \frac{\theta_m}{N} - \frac{\tau_J}{N} \qquad (4.23)$$

Im fehlerfreien Fall sollte sich das Residuum r wiederum innerhalb eines bestimmten Wertebereichs befinden.

$$|\hat{q} - q| < \varepsilon_q \qquad (4.24)$$

Sobald Gleichung 4.24 verwendet wird, ist es nicht mehr nötig auch $\theta_m$ und $\tau_J$ zu beobachten. Durch die starken Abhängigkeiten zwischen diesen drei Signalen, schlägt das Residuum aus sobald eines dieser Signale fehlerhaft ist. Letztlich bleiben nun noch die Ströme $i_1$, $i_2$ und $i_3$ zur Beobachtung übrig. Dies ist ein wenig aufwendiger und benötigt zusätzlich das Signal S vom Regler, welches den Inverter schaltet und mit dessen Hilfe man die Phasenspannungen $v_{phase}$ berechnen kann (vgl. Fig. 3.3).

$$v_{phase} = \begin{bmatrix} v_{ab} \\ v_{bc} \\ v_{ca} \end{bmatrix} = S \begin{bmatrix} 1 & -1 & 0 \\ 0 & 1 & -1 \\ -1 & 0 & 1 \end{bmatrix} U_{dc} \qquad (4.25)$$

Ebenso wird die BEMF $v_{BEMF}$ benötigt, welche zuvor gemessen, normiert und als $\lambda(\theta_m)$ in einem "lookup-table" gespeichert wurde.

$$v_{BEMF} = \dot{\theta}_m k_m \lambda(\theta_m) \qquad (4.26)$$

$k_m$ ist die Momentkonstante des Motors. Die Phasenströme $i_{ab}$, $i_{bc}$ und $i_{ca}$ werden berechnet durch lösen des Zustandsraumes:

$$\dot{x} = Ax + Bu \qquad (4.27)$$

$$y = Cx + du \qquad (4.28)$$

$$x = \hat{i}_{phase} = \begin{bmatrix} i_{ab} \\ i_{bc} \\ i_{ca} \end{bmatrix} \qquad (4.29)$$

$$u = \left( v_{phase} - v_{BEMF} \right) \qquad (4.30)$$

$$A = \begin{bmatrix} \dfrac{-R}{L - M_{ind}} & 0 & 0 \\ 0 & \dfrac{-R}{L - M_{ind}} & 0 \\ 0 & 0 & \dfrac{-R}{L - M_{ind}} \end{bmatrix} \qquad (4.31)$$

$$B = \begin{bmatrix} \dfrac{1}{L - M_{ind}} & 0 & 0 \\ 0 & \dfrac{1}{L - M_{ind}} & 0 \\ 0 & 0 & \dfrac{1}{L - M_{ind}} \end{bmatrix} \qquad (4.32)$$

$$C = \begin{bmatrix} 1 & 0 & 0 \\ 0 & 1 & 0 \\ 0 & 0 & 1 \end{bmatrix} \qquad (4.33)$$

$$d = 0 \qquad (4.34)$$

Die beobachteten Ströme $\hat{i}_{line}$ sind somit

$$\hat{i}_{line} = \begin{bmatrix} 1 & 0 & -1 \\ -1 & 1 & 0 \\ 0 & -1 & 1 \end{bmatrix} \hat{i}_{phase} \qquad (4.35)$$

Auch hier sollen sich die Residuen im fehlerfreien Fall in einem gewissen Wertebereich bewegen.

$$\left| \hat{i}_k - i_k \right| < \varepsilon_{i_{line},obs} \quad \forall k \in \{1,2,3\} \qquad (4.36)$$

In der Praxis hat sich herausgestellt, dass die präsentierten Beobachter für $\tau_m$ und $\tau_f$ nicht besonders gut geeignet sind um Fehler zu detektieren. Jedoch werden sie benötigt um andere Zustände zu beobachten. Der Beobachter des externen Drehmoments eignet sich lediglich zur Kollisionserkennung (blockiertes Gelenk). Vielversprechender sind dagegen die Beobachter von Gelenkposition q und der Ströme $i_{line}$. In der Simulation konnten mit Hilfe von Gleichung 4.24 jegliche Fehler beider Positionssensoren erkannt werden. Ebenso konnten durch Gleichung 4.36 alle getesteten Fehler des BLDC, sowie der Stromsensoren und des Inverters entdeckt werden.

Tabelle: Liste der von Beobachtern erkannten Fehler

| Beobachteter Wert | Detektierte Fehler |
| --- | --- |
| $\tau_m$ | keine Zuverlässige Erkennung |
| $\tau_D$ | jeder Fehler des Positionssensors $\theta_m$ |
| | jeder Fehler des Positionssensors q |
| | Kollision |
| | Getriebebruch |
| $\tau_f$ | keine zuverlässige Erkennung |
| $\tau_{ext}$ | plötzliche, starke Änderungen in Signal q |
| | Kollision |
| q | jeder Fehler des Positionssensors q |
| | jeder Fehler des Positionssensors $\theta_m$ |
| $\hat{i}_{line}$ | jeder Fehler der Stromsensoren |

(fortgesetzt)

**Beobachteter Wert Detektierte Fehler**

jeder Fehler des Inverters

jeder Fehler des BLDC

## Paritätsgleichungen und Isolation einzelner Sensorsignale

Diese Methode basiert auf der Theorie der Paritätsgleichungen kombiniert mit Beobachtern.

Das zugrundeliegende Modell liefert

$$B_m\ddot{\theta}_m + \frac{\tau_J}{N} + \frac{\hat{\tau}_D}{N} + \hat{\tau}_f - \hat{\tau}_m = 0. \qquad (4.37)$$

Durch verschiedene Unsicherheiten wird wiederum ein gültiger Wertebereich mit einem Grenzwert $\varepsilon$ festgelegt.

$$B_m\ddot{\theta}_m + \frac{\tau_J}{N} + \frac{\hat{\tau}_D}{N} + \hat{\tau}_f - \hat{\tau}_m < \epsilon \qquad (4.38)$$

Abhängigkeiten zwischen einzelner Summanden der Gleichung 4.38 und den Sensorsignalen werden in der nachfolgenden Tabelle aufgeführt. Die Tabelle zeigt Abhängigkeiten zwischen Summanden der Paritätsgleichung und Sensorsignalen ohne Isolierung einzelner Signale. Im Folgenden wird nun jeweils ein Sensorsignal isoliert und durch einen Beobachter ersetzt. Die Idee hierbei ist, dass die Residuen der damit entstehenden verschiedenen Paritätsgleichungen verschiedene Abhängigkeiten zu

|  |  | Summanden der Paritätsgleichung | | | | |
|---|---|---|---|---|---|---|
|  |  | $\ddot{\theta}_m$ | $\tau_J$ | $\tau_D$ | $\tau_f$ | $\tau_m$ |
| Sensor Signale | $\theta_m$ | ✓ | - | ✓ | ✓ | ✓ |
|  | $q$ | - | - | ✓ | - | - |
|  | $\tau_J$ | - | ✓ | - | ✓ | - |
|  | $i_1$ | - | - | - | ✓ | ✓ |
|  | $i_2$ | - | - | - | ✓ | ✓ |
|  | $i_3$ | - | - | - | ✓ | ✓ |

den Sensorsignalen besitzen. Somit kann anhand der Veränderung der Residuen ein Fehler nicht nur detektiert, sonder auch grob lokalisiert werden. Schlagen beispielsweise alle

Residuen außer einem aus, so liegt der Verdacht nahe, dass der Fehler in jenem Signal liegt, das im unveränderten Residuum isoliert wird. Manchmal schlägt ein Residuum je- doch auch aus, obwohl das fehlerbehaftete Signal isoliert wird. Dies ist auf Nebeneffekte zurückzuführen, die durch ein fehlerhaftes Signal im Regler ausgelöst werden. Bereits ohne Isolation der Signale, können mithilfe von (4.38) Fehler erkannt werden (vgl. Fig. 4.4). In der Simulation ist es mit dieser Gleichung möglich, plötzliche Änderungen im Positionssignal $q$ zu detektieren, welche für kurze Zeit zu hohen Geschwindigkeiten $\dot{q}$ führen. Ebenso konnten alle getesteten Fehler des Positionssignal $\theta_m$ und der Stromsensoren detektiert werden, ebenso wie starkes Rauschen, falsche Verstärkung oder Offset des Signals $\tau_J$, ein Phase-zu-Phase-Kurzschluss, ein blockierter Motor und eine Kollision.

## Isolation von Strompfaden (Line Currents)

Für die Ströme gilt die Beziehung:

$$i_1 + i_2 + i_3 = 0. \tag{4.39}$$

Somit kann jeweils einer der Ströme durch die beiden anderen ausgedrückt werden,

$$\hat{i}_1 = -i_2 - i_3 \tag{4.40}$$

$$\hat{i}_2 = -i_1 - i_3 \tag{4.41}$$

$$\hat{i}_3 = -i_1 - i_2 \tag{4.42}$$

Dies führt zu drei verschiedenen Versionen des Stromvektors $\hat{i}_{line}$

$$\begin{bmatrix} \hat{i}_1 \\ i_2 \\ i_3 \end{bmatrix}, \begin{bmatrix} i_1 \\ \hat{i}_2 \\ i_3 \end{bmatrix}, \begin{bmatrix} i_1 \\ i_2 \\ \hat{i}_3 \end{bmatrix} \tag{4.43}$$

Das Residuum kann nun, wie mit Gleichung 4.38 beschrieben gebildet werden.

$$\varepsilon > B_m \ddot{\theta}_m + \frac{\tau_J}{N} + \frac{\hat{\tau}_D}{N} + \hat{\tau}_f - \hat{\tau}_m \tag{4.44}$$

$$\hat{\tau}_m = k_m \hat{i}_q \tag{4.45}$$

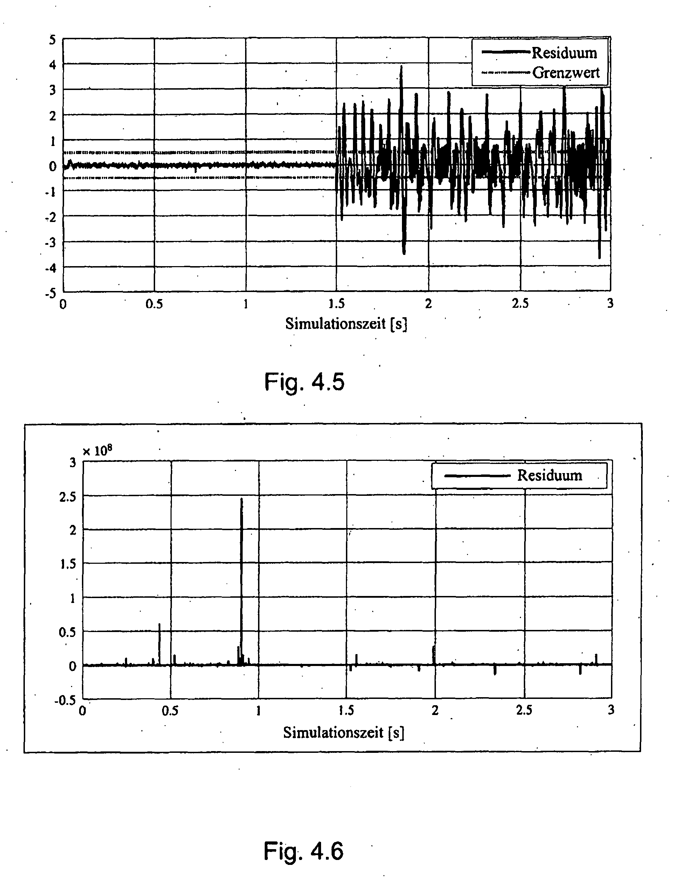

wobei $\hat{i}_q$ durch d/q-Transformation von $\hat{i}_{line}$ berechnet wird. Hier können ebenso plötzliche Änderungen der Signals $q$, sowie jegliche Fehler des Signals $\theta_m$ oder der Stromsensoren und falsche Verstärkung oder Offset des Drehmoment-sensors $\tau_J$ auftreten. Ebenso detektierbar sind Phase-zu-Phase-Kurzschluss, ein blockierter Motor und eine Kollision. Wie vorher bereits angesprochen schlägt hier das Residuum auch bei Fehlern des Signals $i_1$ aus, ob wohl dieses isoliert wird. Das ist darauf zurückzuführen, dass das fehlerbehaftete Signal im Regler Seiteneffekte auslöst, auf die wiederum das Residuum reagiert (vgl. Fig. 4.5).

**Isolation des Positionssignals $q$**

Das Positionssignal kann auch ersetzt werden durch

$$\hat{q} = \frac{\theta_m}{N} - \frac{\tau_J}{K} \tag{4.46}$$

Die Geschwindigkeit $\dot{\hat{q}}$ erhält man durch Ableiten der beobachteten Position q^, was zur Paritätsgleichung

$$\epsilon > B_m \ddot{\theta}_m + \frac{\tau_J}{N} + \frac{\hat{\tau}_D}{N} + \hat{\tau}_f - \hat{\tau}_m, \tag{4.47}$$

führt, mit

$$\hat{\tau}_D = d\left(\frac{\dot{\theta}_m}{N} - \dot{\hat{q}}\right). \tag{4.48}$$

Das Reibungsmoment $\tau_f$ und das Motormoment $\tau_m$ erhält man mit Gleichungen 4.21 und 4.20. Mit Isolation von $q$ ändern sich auch die Abhängigkeiten zwischen Residuum und Sensorsignalen (vgl. nachfolgende Tabelle). Trotz alledem gleicht das Ergebnis dieser Simulation auch in diesem Fall den Ergebnissen von oben. Selbst Fehler des Signals $q$ konnten detektiert werden, da der Regler offensichtlich stark darauf reagiert.

**Isolation des Positionssignals $\theta_m$**

Die Position $\theta_m$ kann ersetzt werden durch

$$\hat{\theta}_m = N(q + \frac{\tau_J}{K}). \qquad (4.49)$$

Geschwindigkeit $\dot{\hat{\theta}}_m$ und Beschleunigung $\ddot{\hat{\theta}}_m$ erhält man durch ableiten der beobachteten Position $\hat{\theta}_m$ und Strom $\hat{i}_q$ mittels d/q-Transformation von $i_1$, $i_2$, $i_3$ und der beobachteten Position $\hat{\theta}_m$. Die Paritätsgleichung ist somit gegeben durch

$$\varepsilon > B_m \ddot{\hat{\theta}}_m + \frac{\tau_J}{N} + \frac{\hat{\tau}_D}{N} + \hat{\tau}_f - \hat{\tau}_m \qquad (4.50)$$

mit

$$\hat{\tau}_D = d\left(\frac{\dot{\hat{\theta}}_m}{N} - q\right) \qquad (4.51)$$

$$\hat{\tau}_m = k_m \hat{i}_q \qquad (4.52)$$

$$\hat{\tau}_f = L_f\left(\int (\hat{\tau}_m - \tau_J - \hat{\tau}_f) dt - B_m \dot{\hat{\theta}}_m\right) \qquad (4.53)$$

### Summanden der Paritätsgleichungen

| | | $\ddot{\theta}_m$ | $\tau_J$ | $\tau_D$ | $\tau_f$ | $\tau_m$ |
|---|---|:---:|:---:|:---:|:---:|:---:|
| | $\theta_m$ | ✓ | - | ✓ | ✓ | ✓ |
| | $q$ | - | - | - | - | - |
| Sensor Signale | $\tau_J$ | - | ✓ | ✓ | ✓ | - |
| | $\dot{i}_1$ | - | - | - | ✓ | ✓ |
| | $\dot{i}_2$ | - | - | - | ✓ | ✓ |
| | $\dot{i}_3$ | - | - | - | ✓ | ✓ |

Tabelle Abhängigkeiten zwischen Summanden der Paritätsgleichung und Sensorsignalen bei Isolation der abtriebsseitigen Position $q$

In der Simulation wird eine Getriebeübersetzung $N$ von 160 verwendet, was zusammen mit Gleichung 4.49 dazu führt, dass die beobachtete Position $\hat{\theta}_m$ eine wesentlich geringere Auflösung besitzt als das tatsächliche Signal.

Diese erhöhten Unsicherheiten pflanzen sich auch in den Ableitungen $\hat{\dot{\theta}}_m$ und $\hat{\ddot{\theta}}_m$ fort. Dadurch ist das Residuum in diesem Fall unbrauchbar. Selbst im fehlerfreien Fall stellt sich eine Wahrscheinlichkeit von über 25% für Fehlalarme ein (Fig. 4.6).

**Isolation des Drehmoments $\tau_J$**

Bei Isolierung von $\tau_J$, kann das Drehmoment angenähert werden durch

$$\hat{\tau}_J = K\left(\frac{\theta_m}{N} - q\right) \qquad (4.54)$$

Für das Residuum ergibt sich somit

$$\varepsilon > B_m\ddot{\theta}_m + \frac{\hat{\tau}_J}{N} + \frac{\hat{\tau}_D}{N} + \hat{\tau}_f - \hat{\tau}_m \qquad (4.55)$$

mit

$$\hat{\tau}_f = L_f\left(\int (\hat{\tau}_m - \hat{\tau}_J - \hat{\tau}_f)dt - B_m\dot{\theta}_m\right). \qquad (4.56)$$

Diese Version des Residuums reagiert im Grunde genauso, wie die bei Isolation eines Stromsensors oder der Position $q$. Die detektierten Fehler sind dieselben.

<div align="center">

**Summands
of parity equation**

</div>

| | | $\ddot{\theta}_m$ | $\tau_J$ | $\tau_D$ | $\tau_f$ | $\tau_m$ |
|---|---|---|---|---|---|---|
| | $\theta_m$ | - | - | - | - | - |
| Sensor signals | $q$ | ✓ | - | ✓ | ✓ | ✓ |
| | $\tau_J$ | ✓ | ✓ | ✓ | ✓ | ✓ |
| | $\dot{i}_{line}$ | - | - | - | ✓ | ✓ |

Tabelle: Abhängigkeiten zwischen Summanden der Paritätsgleichung und Sensorsignalen bei Isolation des antriebsseitigen Positionssensors

| | | Summanden der Paritätsgleichungen | | | | |
|---|---|---|---|---|---|---|
| | | $\ddot{\theta}_m$ | $\tau_J$ | $\tau_D$ | $\tau_f$ | $\tau_m$ |
| Sensor Signale | $\theta_m$ | ✓ | ✓ | ✓ | ✓ | ✓ |
| | $q$ | - | ✓ | ✓ | ✓ | - |
| | $\tau_J$ | - | - | - | - | - |
| | $\dot{i}_{line}$ | - | - | - | ✓ | ✓ |

Tabelle: Abhängigkeiten zwischen Summanden der Paritäts- gleichung und den Sensorsignalen bei Isolation von $\tau_J$

**Kapitel 5**

**Evaluierung von Fehlererkennungsmethoden an einem Prototypen eines flexiblen Robotergelenks**

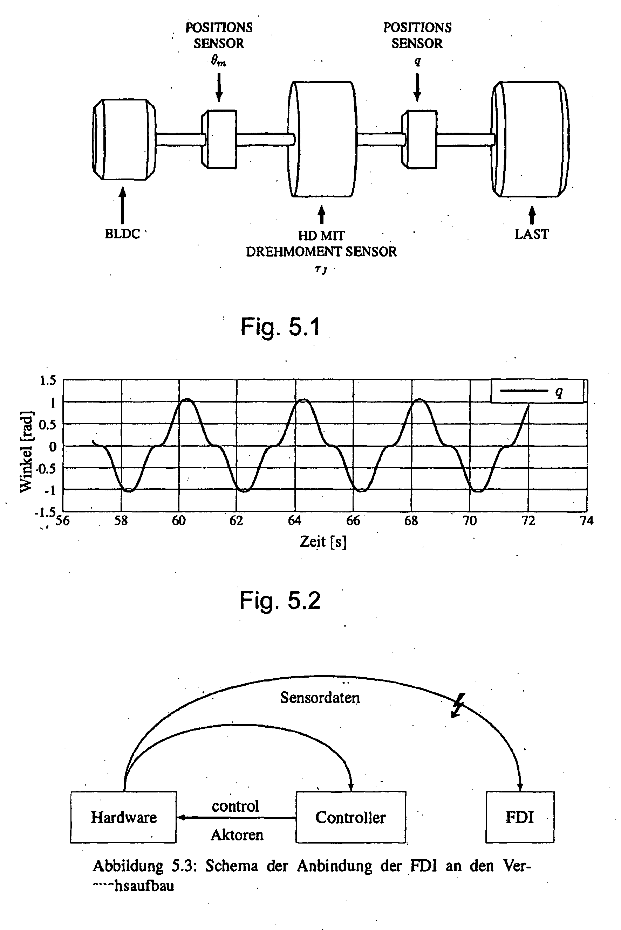

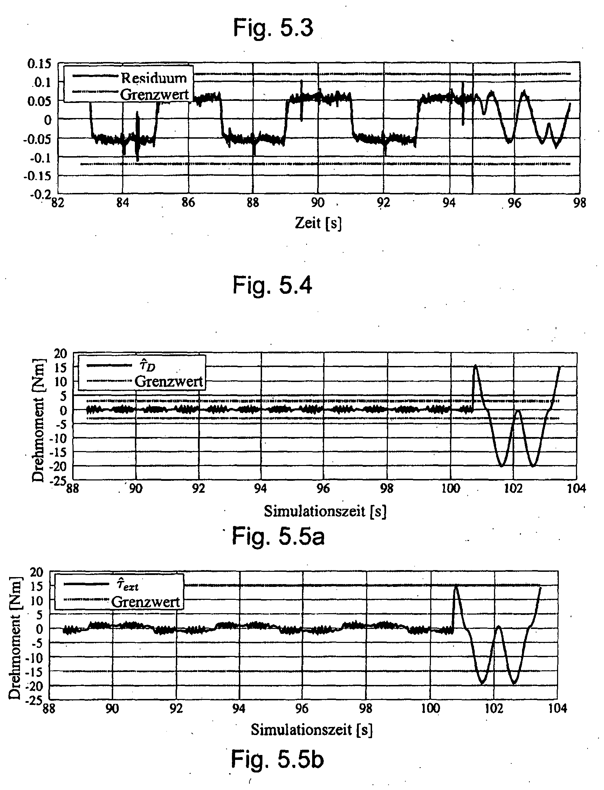

Um die Ergebnisse der Simulation zu bestätigen wurden die vorgestellten Methoden zur Fehlererkennung an einem Prototypen eines flexiblen Robotergelenks getestet. Herzu zeigt Fig. 5.1 einen zugrunde liegenden Gelenkaufbau.

Bei dem Prototypen des flexiblen Robotergelenks handelt es sich um ein Gelenk mit einem Freiheitsgrad. Mittels eines BLDC wird das erzeugte Drehmoment über ein HD mit Übertragungsrate $N$ auf das nächste Glied übertragen (vgl. Fig. 5.1). Verwendete Sensoren sind ein motorseitiger Positionssensor $\theta_m$, ein abtriebsseitiger Positionssensor $q$ und ein Drehmomentsensor $\tau_J$, welcher im HD integriert ist und das Moment in abtriebsseitigen Koordinaten misst. Abtriebsseitig ist zudem ein zweiter Motor montiert, welcher eine konstante Last simuliert. Gesteuert wird der Aufbau über einen digitaler Signalprozessor (DSP), dessen Platine außerdem noch Stromsensoren beherbergt, mit deren Hilfe der Motorstrom ausgelesen werden kann. Da der DSP bereits den q-Strom $i_q$ (nach d/q-Transformation) berechnet, wird zur Fehlererkennung auch dieser genutzt anstatt der Phasenströme. Alle Sensorsignale werden vom DSP an einen weiteren PC gesendet, der diese graphisch darstellt und eine Trajektorie, welche abgefahren werden soll, wiederum an den DSP zurückschickt. Als Trajektorie sind drei unterschiedliche Winkel des abtriebsseitigen Gliedes vorgegeben (vgl. Fig. 5.2). Diese Punkte werden nacheinander in einer weichen Kurve abgefahren.

Tabelle: Liste der benötigten Parameter zum Testen der Fehlererkennungsmethoden an einem Gelenkprototypen

| Beschreibung | Variable |
|---|---|
| Getriebeübersetzung | $N$ |
| Steifigkeit des Gelenks | $K$ |
| Antriebsseitige Trägheit | $B_m$ |
| Abtriebsseitige Trägheit | $M$ |
| Observer gain (Reibungsmoment) | $L_f$ |
| Dämpfungskonstante | $d$ |
| Momentskonstante | $k_m$ |

**Getestete FDI-Methoden am Gelenkprototypen**

Zur Validierung der Fehlererkennungsmethoden, wurden die meisten der vorgestellten Vorgehensweisen aus Kapitel 4 auch im Prototypen des flexiblen Robotergelenks implementiert. Zu aller erst wird "limit checking" getestet. Hier werden die Geschwindigkeiten $\dot{q}$ und $\dot{\theta}_m$, sowie das Drehmoment $\tau_J$ überwacht. Anstelle der Phasenströme wird allerdings der Strom $i_q$ überprüft. Ebenso sind auch Beobachter umgesetzt worden, beginnend mit dem Beobachter für das Motormoment

$$\hat{\tau}_m = k_m i_q \tag{5.1}$$

mit Momentkonstanter $k_m$. Zudem wird das Reibungmoment

$$\hat{\tau}_f = L_f(\int (\hat{\tau}_m - \tau_J - \hat{\tau}_f)dt - B_m\dot{\theta}_m), \qquad (5.2)$$

beobachtet mit Beobachter gain $L_f$, genau so wie das Dämpfungsmoment

$$\hat{\tau}_D = d\left(\frac{\dot{\theta}_m}{N} - \dot{q}\right) \qquad (5.3)$$

mit Dämpfungskonstanter $d$ und das externe Moment

$$\tilde{\tau}_{ext} = \tau_J + \hat{\tau}_D - \hat{\tau}_f - M\ddot{q} \qquad (5.4)$$

Weiter wird auch die abtriebsseitige Position $q$ angenähert mittels

$$\hat{q} = \frac{\theta_m}{N} - \frac{\tau_J}{N}. \qquad (5.5)$$

Die geschätzte Position $\hat{q}$ sollte im fehlerfreien Betrieb nicht groß von den Messungen des eigentlichen Positionssensors abweichen.

$$|\Delta q| = |\hat{q} - q| < \varepsilon$$

Der Methode der Sensorisolierung liegt abermals die Paritätsgleichung

$$\left|B_m\ddot{\theta}_m + \frac{\tau_J}{N} + \frac{\hat{\tau}_D}{N} + \hat{\tau}_f - \hat{\tau}_m\right| < \epsilon \qquad (5.7)$$

zugrunde. Dieses Verfahren der Sensorisolierung (oder auch Paritätsgleichungen) ist im Grunde wie zuvor beschrieben umgesetzt. Es besteht lediglich die Ausnahme, dass die Isolierung der Phasenströme nicht realisiert wurde, da anstelle dieser Strom der Strom $i_q$ in der Fehlererkennung Verwendung findet. Die Fehlererkennung ist eigenständig und führt erworbene Erkenntnisse nicht zur Regelung zurück (vgl. Fig. 5.3).

**Getestete Fehler**

In einer Simulation kann nahezu jeder Fehler ohne großen Aufwand realisiert werden, wohingegen die Umsetzung der Fehlersimulation in der Hardware einige Beschränkun- gen mit sich bringt. Es werden daher nur ausgewählte Fehler an dem Prototypen getestet. Eine Abdeckung aller möglichen Fehler würde den Rahmen dieser Arbeit sprengen. Softwareseitig sind Sensorfehler implementiert, indem eingehende Sensorsignale erst manipuliert und danach erst durch die FDI ausgewertet werden. Diese manipulierten Signale werden allerdings nicht erneut der Regelung zugeführt. Fig. 5.3 zeigt noch einmal die Funktionsweise der Sensorsignal-Manipulation. Eingehende Signale sind die beiden Positionen $q$ und $\theta_m$, sowie das Drehmoment $\tau_J$ und der Strom $i_q$. Für jedes dieser Signale kann ein Offset beziehungsweise eine Verstärkung eingestellt werden und der Fehler "Shutdown" setzt das Signal auf 0. Auf der Hardware-Seite ist der Fehler "Shutdown" ebenfalls realisiert, indem einfach die Stecker der Sensoren (außer Stromsensor) gezogen werden. In diesem Fall erhält sogar der Controller ein fehlerhaftes Signal. Zudem kann höhere Reibung umgesetzt werden durch Abbremsen des Motors mittels einer externen Kraft. Nachteile der "realen" Hardwarefehler sind, dass es schwierig ist den genauen Auftrittszeitpunkt der Fehler festzulegen, sowie eine Messung der Qualität der Störung durchzuführen (z.B. Reibungsmoment in $Nm$). Eine Liste der getesteten Fehler kann auch nachfolgender Tabelle entnommen werden.

Tabelle: Liste der am Gelenkprototypen getesteten Fehler mit Ort der Umsetzung. Hardwarefehler beeinflussen auch den Controller.

| | Realized in | |
|---|---|---|
| Fault | software | hardware |
| shutdown $q$ / $\theta_m$ / $\tau_J$ | ✓ | ✓ |
| shutdown $i_q$ | ✓ | - |
| amplify $q$ / $\theta_m$ / $\tau_J$ / $i_q$ | ✓ | - |
| offset $q$ / $\theta_m$ / $\tau_J$ / $i_q$ | ✓ | - |
| friction gain | - | ✓ |

**Ergebnisse der Versuche am Gelenkprototypen**

Versuche mit den FDI-Methoden am realen Gelenk, brachte ähnliche Ergebnisse wie zuvor die Simulation. Fehler, welche mithilfe von "Limit Checking" detektiert werden konnten, sind nachfolgender Tabelle aufgeführt. Plötzliche Änderungen der Positionen führen zu kurzfristigen Spitzen in den zugehörigen Geschwindigkeiten. Natürlich hängt die Detektion auch davon ab, wann der Fehler Auftritt. Zieht man beispielsweise den Stecker eines Positionssensors während das Gelenk bereits in seiner Nullposition ruht, wird selbstverständlich kein Fehler angezeigt.

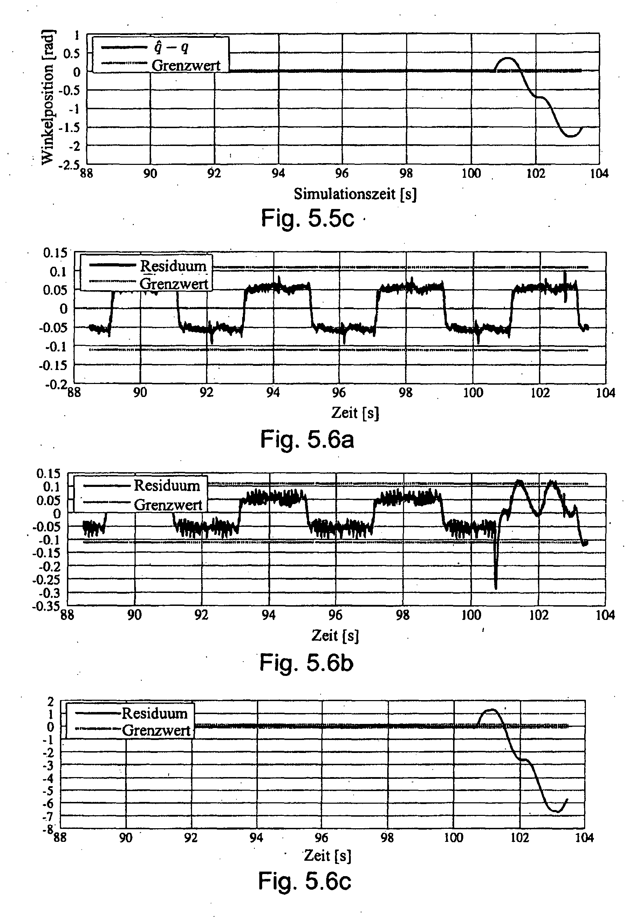

Was die Beobachter angeht, so konnte mit den Beobachtern des Motormoments und der Reibung keiner der getesteten Fehler erkannt werden. Eine Erhöhung der Reibung löste keinen Alarm beim zugehörigen Beobachter aus, da der Grenzwert sehr hoch gewählt war. Mit Hilfe des Beobachters des Dämpfungsmoments konnten alle Fehler der Positionssensoren detektiert werden. Das Selbe gilt für den Beobachter des externen Drehmoments, sowie die geschätzte Position $q^{\wedge}$ (bzw. $\Delta q = q'' - q$), mit dem einzigen Unterschied, dass mit Beobachtung des externen Moments anstelle des gezogenen Steckers von $\theta_m$ das Ziehen des Steckers von $\tau_J$ detektiert wird, und der Beobachter $q$ diese beiden Fälle erkennt. Die Signale der Beobachter vom Dämpfungsmoment $\tau_D$, externem Moment $\tau_{ext}$ und $\Delta q$ mit dem Fehler Ziehen des Steckers von Positionssensor $q$ sind in Fig. 5.5 dargestellt.

Wiedereinmal hat sich der Einsatz von Paritätsgleichungen, kombiniert mit Beobachtern, als am vielversprechensten gezeigt. Unter Verwendung von Gleichung 5.7 und den verfügbaren Sensorsignalen, war es möglich Shutdown und Offsetfehler der Positionssensoren $q$ und $\theta_m$ zu detektieren, sowie Verstärkungsfehler von $q$, $\theta_m$ und $i_q$. Zudem lösten erhöhte Reibung und das Ziehen der Sensoren $\theta_m$ und $\tau_J$ einen Alarm aus. Wie erwartet reagiert das Residuum mit isoliertem Positionssensor $q$ nicht auf Fehler dieses Sensors. Gleiches gilt für die Gleichung mit isoliertem $\theta_m$, welche ebenfalls nicht auf Fehler des Sensors $\theta_m$ reagiert. Ausgenommen ist hierbei allerdings der Fehler Abziehen ("unplug") des Sensors $\theta_m$, welcher es dem Controller unmöglich macht den Motor korrekt zu bestromen. Diese fehlerhaften Ströme lösen dann trotzdem einen Alarm aus. Eine Zusammenfassung der er- kannten Fehler für die verschiedenen Paritätsgleichungen ist Tab. 5.5 zu entnehmen. Die Residuen für den Fehler Ausstecken des Positionssensors $q$ in Abb. 5.6 dargestellt.

Tabelle: Liste detektierter Fehler am Robotergelenk durch Limit- Checking

| | Detektions-Methode: Limit check of | | | |
|---|---|---|---|---|
| Fault | $\dot{q}$ | $\dot{\theta}_m$ | $\tau_J$ | $i_q$ |
| shutdown $q$ | ✓* | - | - | - |
| shutdown $\theta_m$ | - | ✓* | - | - |
| shutdown $i_q$ | - | - | - | - |
| shutdown $\tau_J$ | - | - | - | - |
| amplify $q$ | ✓* | - | - | - |
| amplify $\theta_m$ | - | ✓* | - | - |
| amplify $i_q$ | - | - | - | - |
| amplify $\tau_J$ | - | - | - | - |
| offset $q$ | ✓* | - | - | - |
| offset $\theta_m$ | - | ✓* | - | - |
| offset $i_q$ | - | - | - | - |
| offset $\tau_J$ | - | - | - | - |
| unplug $q$ | ✓* | - | - | - |

(fortgesetzt)

| Fault | Detektions-Methode: Limit check of | | | |
|---|---|---|---|---|
| | $\dot{q}$ | $\dot{\theta}_m$ | $\tau_J$ | $i_q$ |
| unplug $\theta_m$ | - | ✓* | - | - |
| unplug $\tau_J$ | - | - | ✓ | - |
| friction gain | - | - | - | - |

✓* **Kurze Spitze, dann false negative**

Tabelle: Liste der detektierten Fehler am Robotergelenk durch Beobachter

| Fault | Detektions- Methode: Beobachter | | | | |
|---|---|---|---|---|---|
| | $\tau_m$ | $\tau_f$ | $\tau_D$ | $\tau_{ext}$ | $q$ |
| shutdown $q$ | - | - | ✓ | ✓ | ✓ |
| shutdown $\theta_m$ | - | - | ✓ | ✓ | ✓ |
| shutdown $i_q$ | - | - | - | - | - |
| shutdown $\tau_J$ | - | - | - | - | - |
| amplify $q$ | - | - | ✓ | ✓* | ✓ |
| amplify $\theta_m$ | - | - | ✓ | ✓ | ✓ |
| amplify $i_q$ | - | - | - | - | - |
| amplify $\tau_J$ | - | - | - | - | - |
| offset $q$ | - | - | ✓* | ✓* | ✓ |
| offset $\theta_m$ | - | - | ✓* | ✓* | ✓ |
| offset $i_q$ | - | - | - | - | - |
| offset $\tau_J$ | - | - | - | - | - |
| unplug $q$ | - | - | ✓ | ✓ | ✓ |
| unplug $\theta_m$ | - | - | ✓* | - | ✓ |
| unplug $\tau_J$ | - | - | - | ✓ | ✓ |
| friction gain | - | - | - | - | - |

✓* **Kurze Spitze, dann false negative**

Tabelle: Liste detektierter Fehler am Robotergelenk durch Paritätsgleichungen

| Fault | Detektions-Methode: Paritätsgleichung | | | |
|---|---|---|---|---|
| | no isolation | isolating $q$ | isolating $\theta_m$ | isolating $\tau_J$ |
| shutdown $q$ | ✓* | - | ✓ | ✓ |
| shutdown $\theta_m$ | ✓ | ✓ | | ✓ |
| shutdown $i_q$ | | - | | |
| shutdown $\tau_J$ | | - | | |
| amplify $q$ | ✓ | - | ✓ | ✓ |
| amplify $\theta_m$ | ✓ | ✓ | | ✓ |
| amplify $i_q$ | ✓ | ✓ | ✓ | ✓ |
| amplify $\tau_J$ | | - | | |
| offset $q$ | ✓* | - | ✓* | ✓ |
| offset $\theta_m$ | ✓* | ✓* | | ✓ |
| offset $i_q$ | | - | | |
| offset $\tau_J$ | | - | | |
| unplug $q$ | | - | ✓ | ✓ |
| unplug $\theta_m$ | ✓ | ✓ | ✓ | ✓ |
| unplug $\tau_J$ | ✓ | ✓ | ✓ | |

(fortgesetzt)

| Fault | Detektions-Methode: Paritätsgleichung | | | |
| --- | --- | --- | --- | --- |
| | no isolation | isolating $q$ | isolating $\theta_m$ | isolating $\tau_J$ |
| friction gain | ✓ | ✓ | ✓ | ✓ |

✓* **Kurze Spitze, dann false negative**

**Liste der Abkürzungen**

| | |
| --- | --- |
| **ADC** | Analog-zu-digital-Konverter |
| **BEMF** | gegenelektromotorische Kraft |
| **BLDC** | bürstenloser Gleichstrommotor |
| **DSP** | digitaler Signalprozessor |
| **FDI** | Fehlererkennung und -isolierung |
| **FFT** | Fast-Fourier-Transformation |
| **HD** | Harmonic Drive Getriebe |
| **IFAC** | International Federation of Automatic Control |
| **MOSFET** | Metall-Oxid-Halbleiter-Feldeffekttransistor |
| **MTBF** | Durchschnittszeit zwischen Ausfällen |
| **MTTR** | Durchschnittszeit zwischen Reparaturen |
| **RMS** | Effektivwert |
| **SAFEPROCESS** | Technical Committee on Fault Detection, Supervision and Safety for Technical Processes |

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:

| | |
| --- | --- |
| Figuren 1.1 | Schema der Fehlerdetektion, - diagnose und -Management |
| 1.2 | Schema eines Zustandsbeobachters |
| 1.3 | Schema eines Ausgangsbeobachter |
| 1.4 | Schema der Minimierung des Gleichungsfehlers |
| 1.5 | Schema der Minimierung des Ausgangsfehlers bei Parameterschätzung |
| 1.6 | Schema einer gestuften Anordnung von Bandpass-Filtern |
| 2.1 | Grafische Darstellung eines abrupten Fehlers |
| 2.2 | Grafische Darstellung eines driftenden Fehlers |
| 2.3 | Grafische Darstellung eines intermittierenden Fehlers |
| 2.4 | Quantisiertes Signal mit Quantisierungsrauschen |
| 2.5 | Einzelspitze |
| 2.6 | Rauschen eines Signals |
| 2.7 | Schematik eines Dreiphasen Inverters |
| 2.8 | Schematik verschiedener Inverter-Fehler |
| 3.1 | Schema eines flexiblen Robotergelenks |
| 3.2 | Allgemeiner Aufbau der Gelenkssimulation |
| 3.3 | Mögliche Schaltzustände des Wechselrichter |
| 3.4 | Physikalisches Model der Gelenkssimulation |
| 3.5 | Messung einer BEMF |
| 3.6 | Schema eines BLDC in Dreiecksschaltung |
| 3.7 | Messgeber-Signale und berechnete Position |
| 3.8 | Motor- und Koppelposition im Vergleich mit der Referenzposition (ohne Fehler) |
| 3.9 | Motor- und Koppelgeschwindigkeit (ohne Fehler) |
| 3.10 | Gelenksmoment (ohne Fehler) |
| 3.11 | Netzströme (ohne Fehler) |
| 3.12 | Schema der Signalmanipulation für allgemeine Sensorfehler |
| 3.13 | Signal-Flussdiagramm zu Manipulation von Sensormesswerten |

3.14    Gemessene Position $q$ und reale Position $q^*$ mit Fehler "Verstärkung"

3.15    Gemessene Position $q$ und reale Position $q^*$ mit Fehler Öffset"

3.16    Gemessene Position $q$ und reale Position $q^*$ mit Fehler "Rauschen"

3.17    Gemessene Position $q$ und reale Position $q^*$ mit Fehlern "Hold und Shutdown"

3.19    Schema zur Manipulation der Signale des Messwertgebers

3.18    Gemessene Position $q$ und reale Position $q^*$ mit Fehler Inkrement-Skip"

3.20    Gemessene Position $q$ und reale Position $q^*$ mit Fehler "Verlust von A"

3.21    Motormoment $\tau_m$ mit Fehler des Wechselrichters "Shutdown"

3.22    Phasenströme mit Fehler des Wechselrichters "Shutdown"

3.23    Koppelposition $q^*$ mit Fehler des Wechselrichters "Shutdown"

3.24    Motormoment $\tau_m$ mit Fehler des Wechselrichters "Single switch open"

3.25    Motormoment $\tau_m$ mit Fehler des Wechselrichters "Single switch closed"

3.26    Positionsabweichung $\Delta q = q^* - q_{id}$ mit Fehler des Wechselrichters "Single switch closed"

3.27    Phasenströme mit Fehler "Phasenbruch"

3.28    Gelenksmoment mit Fehler "Phasenbruch"

3.29    Phasenströme mit Fehler "Phasenschluss"

3.30    Motormoment $\tau_m$ mit Fehler "Phasenschluss"

3.31    Koppelposition $q^*$ mit Fehler "Phasenschluss"

3.32    Position $\theta^*$ und $q^*$ mit Getriebebruch

3.33    Gelenksmoment bei Getriebebruch

3.34    Position $\theta^*$ und $q^*$ mit blockiertem Gelenk

3.35    Drehmoment bei blockiertem Gelenk

3.36    Position $\theta^*$ und $q^*$ mit blockiertem Motor

3.37    Drehmoment des Gelenk mit blockiertem Motor

3.38    Position $q^*$ mit erhöhter Reibung

3.39    Reibungsmoment mit Drehmomentwelligkeit

4.1    Summe der Ströme mit Fehler "Shutdown" von $i_1$

4.2    Geschätzte Steifigkeit $\hat{K}$ ohne aktiven Fehler

4.3    Geschätzte Getriebeübersetzung $\hat{N}$ ohne aktiven Fehler

4.4    Residuum einer Paritätsgleichung ohne Isolierung von Sensorsignalen

4.5    Residuum einer Paritätsgleichung und aktivem Fehler (Isolierung von $i_1$)

4.6    Residuum der Paritätsgleichung mit isoliertem $\theta_m$ ohne aktivem Fehler

5.1    Aufbau des flexiblen Gelenkprototypen

5.2    Abtriebsseitige Position $q$ des Prototypen bei einem fehlerfreien Lauf nach einer Test-Trajektorie

5.3    Schema der Anbindung der FDI an den Versuchsaufbau

5.4    Residuum der Paritätsgleichung ohne Isolierung von Sensorsignalen, mit Fehler "Shutdown $i_q$"

5.5    Beobachtersignale mir Fehler "Ausstecken von Sensor $q_m$ Gelenksprototypen

5.6    Residuen der Paritätsgleichungen mit Fehler Äusstecken von Sensor $q_m$ Gelenksprototypen

6.1    schematisierter Verfahrensablauf eines vorgeschlagenen Verfahrens

6.2    schematisierter Aufbau einer vorgeschlagenen Vorrichtung

Die **Figuren 1.1** bis **5.6** wurden bereits in der vorstehenden Beschreibung erläutert.

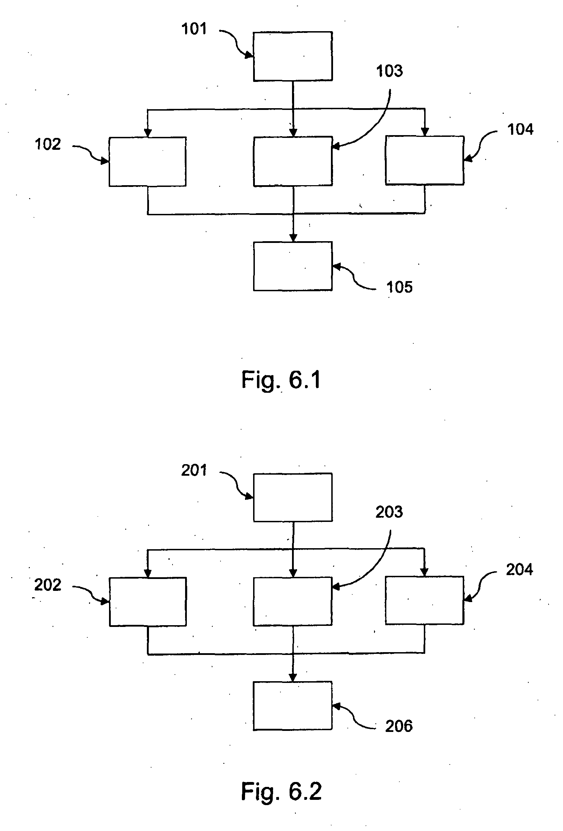

**Fig. 6.1** zeigt einen schematisierten Verfahrensablauf eines vorgeschlagenen Verfahrens zur Steuerung/Regelung eines mittels eines Elektromotors angetriebenen Robotergelenks, wobei das Robotergelenk einen Stromsensor mit einer ersten Sensorelektronik zur Erfassung eines ersten Betriebsstroms $i_{k,1}(t)$ des Elektromotors, mit k = 1, 2, ..., einen ersten Positionssensor zur Erfassung einer Antriebsposition $\theta_m(t)$ eines Antriebsstrangs des Robotergelenks, einen zweiten Positionssensor zur Erfassung einer Abtriebsposition $q(t)$ eines Abtriebsstrangs des Robotergelenks, und einen ersten Drehmomentsensor zur Erfassung eines Drehmoments $\tau_{J,1}(t)$ im Abtriebsstrang aufweist, wobei der Elektromotor auf Basis einer vorgegebenen Soll-Stellgröße $\tau_m(t)$ gesteuert/geregelt wird.

Das Verfahren umfasst folgende Schritte. In einem ersten Schritt **101** erfolgt ein Bereitstellen der Messwerte $\theta_m(t), i_{k,1}(t), \tau_J(t), q(t)$. In einem zweiten Schritt **102** erfolgt ein Prüfen auf Vorliegen eines Fehlers durch den ersten Fehlerdetektor, der das Vorliegen eines Fehlers dann detektiert, wenn die Messwerte $\theta_m(t), i_{k,1}(t), \tau_J(t), q(t)$ und/oder deren Zeitableitungen vorgegebene erste Grenzwertbedingungen nicht erfüllen. In einem dritten Schritt **103** erfolgt ein Prüfen auf Vorliegen eines Fehlers durch den zweiten Fehlerdetektor, der das Vorliegen eines Fehlers auf Basis der Messwerte $\theta_m(t), i_{k,1}(t), \tau_J(t), q(t)$ einer Prozessmodell-gestützten Methode ermittelt, wobei das Prozessmodell ein vorgegebenes mathematisches dynamisches Modell des Robotergelenks ist, und wobei ein Fehler dann detektiert wird, wenn Parameter des Modells, Residuen zwischen vom Prozessmodell rekonstruierten Größen und den Messgrößen und/oder Modell-intern ermittelte Parameter vorgegebene zweite Grenzwertbedingungen nicht erfüllen. In einem vierten Schritt **104** erfolgt ein Bereitstellen der Messwerte $\tau_J(t)$ an einen dritten Fehlerdetektor, der das Vorliegen eines Fehlers auf Basis einer Signal-gestützten Methode detektiert, wobei ein Fehler dann detektiert wird, wenn Amplituden und/oder charakteristische Frequenzen der Messwerte $\tau_J(t)$ vorgegebene dritte Grenzwertbedingungen nicht erfüllen. In einem fünften Schritt **105** Erfolgt, sofern von einem der vorhandenen Fehlerdetektoren ein Fehler detektiert wird, ein Erzeugen und optisch und akustisches Ausgeben eines Warnsignals sowie ein Ansteuern des Elektromotors mit Stellgrößen $\tau_m^F(t)$ , die das Robotergelenk in einen vorgegebenen Fehlerzustand FZ steuern.

**Fig. 6.2** zeigt einen schematisierten Aufbau einer vorgeschlagenen Vorrichtung zur Steuerung/Regelung eines mittels eines Elektromotors angetriebenen Robotergelenks, wobei das Robotergelenk einen Stromsensor mit einer ersten Sensorelektronik zur Erfassung eines ersten Betriebsstroms $i_{k,1}(t)$ des Elektromotors, mit k = 1, 2, ..., einen ersten Positionssensor zur Erfassung einer Antriebsposition $\theta_m(t)$ eines Antriebsstrangs des Robotergelenks, einen zweiten Positionssensor zur Erfassung einer Abtriebsposition $q(t)$ eines Abtriebsstrangs des Robotergelenks, und einen ersten Drehmomentsensor zur Erfassung eines Drehmoments $\tau_{J,1}(t)$ im Abtriebsstrang aufweist, wobei der Elektromotor von einer Steuer- und Regeleinheit **206** auf Basis einer vorgegebenen Soll-Stellgröße $\tau_m(t)$ gesteuert/geregelt wird. Die Vorrichtung umfasst eine Schnittstelle **201** zum Bereitstellen der Messwerte $\theta_m(t), i_{k,1}(t), \tau_J(t), q(t)$ ; einen ersten Fehlerdetektor **202** zum Prüfen auf Vorliegen eines Fehlers, wobei der erste Fehlerdetektor **202** derart ausgelegt ist, dass das Vorliegen eines Fehlers dann detektiert wird, wenn die Messwerte $\theta_m(t), i_{k,1}(t), \tau_J(t), q(t)$ und/oder deren Zeitableitungen vorgegebene erste Grenzwertbedingungen nicht erfüllen; und einen zweiten Fehlerdetektor **203** zum Prüfen auf Vorliegen eines Fehlers, wobei der der zweite Fehlerdetektor **203** derart ausgelegt ist, dass das Vorliegen eines Fehlers auf Basis der Messwerte $\theta_m(t), i_{k,1}(t), \tau_J(t), q(t)$ und einer Prozessmodell-gestützten Methode ermittelt wird, wobei das Prozessmodell ein vorgegebenes mathematisches dynamisches Modell des Robotergelenks ist, und wobei ein Fehler dann detektiert wird, wenn Parameter des Modells, Residuen zwischen vom Prozessmodell rekonstruierten Größen und den Messgrößen $\theta_m(t), i_{k,1}(t), \tau_J(t), q(t)$ und/oder Modell-intern ermittelte Parameter vorgegebene zweite Grenzwertbedingungen nicht erfüllen; und einen dritten Fehlerdetektor **204** zum Prüfen auf Vorliegen eines Fehlers, wobei der dritte Fehlerdetektor **204** derart ausgelegt ist, dass das Vorliegen eines Fehlers auf Basis der Messwerte $\tau_J(t)$ und einer Signal-gestützten Methode ermittelt wird, wobei ein Fehler dann detektiert wird, wenn Signalgrößen, wie Amplituden und/oder charakteristische Frequenzen, der Messwerte $\tau_J(t)$ vorgegebene dritte Grenzwertbedingungen nicht erfüllen. Die Steuer- und Regeleinheit **206** ist derart ausgeführt, dass sofern von einem der vorhandenen Fehlerdetektoren **202-204** ein Fehler detektiert wird, ein Warnsignal erzeugt und mittels einer Ausgabeeinheit optisch und akustisch ausgegeben wird und der Elektromotor mit Stellgrößen $\tau_m^F(t)$ angesteuert wird, die das Robotergelenk in einen vorgegebenen Fehlerzustand FZ steuern.

**Patentansprüche**

1. Verfahren zur Steuerung/Regelung eines mittels eines Elektromotors angetriebenen Robotergelenks, wobei das Robotergelenk einen Stromsensor mit einer ersten Sensorelektronik zur Erfassung eines ersten Betriebsstroms $i_{k,1}(t)$ des Elektromotors, mit k = 1, 2, ..., einen ersten Positionssensor zur Erfassung einer Antriebsposition $\theta_m(t)$ eines Antriebsstrangs des Robotergelenks, einen zweiten Positionssensor zur Erfassung einer Abtriebsposition $q(t)$ eines Abtriebsstrangs des Robotergelenks, und einen ersten Drehmomentsensor zur Erfassung eines Drehmoments $\tau_{J,1}(t)$ im Abtriebsstrang aufweist, wobei der Elektromotor auf Basis einer vorgegebenen Soll-Stellgröße $\tau_m(t)$ gesteuert/geregelt wird, mit folgenden Schritten:

   - Bereitstellen (101) der Messwerte $\theta_m(t), i_{k,1}(t), \tau_J(t), q(t)$,
   - Prüfen (102) auf Vorliegen eines Fehlers durch den ersten Fehlerdetektor, der das Vorliegen eines Fehlers dann detektiert, wenn die Messwerte $\theta_m(t), i_{k,1}(t), \tau_J(t), q(t)$ und/oder deren Zeitableitungen vorgegebene erste Grenzwertbedingungen nicht erfüllen, und
   - Prüfen (103) auf Vorliegen eines Fehlers durch den zweiten Fehlerdetektor, der das Vorliegen eines Fehlers auf Basis der Messwerte $\theta_m(t), i_{k,1}(t), \tau_J(t), q(t)$ einer Prozessmodell-gestützten Methode ermittelt, wobei das Prozessmodell ein vorgegebenes mathematisches dynamisches Modell des Robotergelenks ist, und wobei ein Fehler dann detektiert wird, wenn Parameter des Modells, Residuen zwischen vom Prozessmodell rekonstruierten Größen und den Messgrößen und/oder Modell-intern ermittelte Parameter vorgegebene zweite Grenzwertbedingungen nicht erfüllen, und

- entweder Bereitstellen (104a) der Messwerte $\tau_J(t)$ an einen dritten Fehlerdetektor, der das Vorliegen eines Fehlers auf Basis einer Signal-gestützten Methode detektiert, wobei ein Fehler dann detektiert wird, wenn Signalgrößen, wie beispielsweise Amplituden und/oder charakteristische Frequenzen, der Messwerte $\tau_J(t)$ vorgegebene dritte Grenzwertbedingungen nicht erfüllen, oder

Ermitteln (104b) eines Drehmoments $\tau_{J,2}(t)$ im Abtriebsstrang mit einem zweiten Drehmomentsensor oder mit einer redundant ausgelegten Sensorelektronik des ersten Drehmomentsensors und Detektieren eines Fehlers durch einen vierten Fehlerdetektor dann, wenn ein Vergleich von $\tau_{J,1}(t)$ und $\tau_{J,2}(t)$ vierten Grenzwertbedingungen nicht genügt, und

- sofern von einem der vorhandenen Fehlerdetektoren ein Fehler detektiert wird, Erzeugen (105a) eines Warnsignals und/oder Ansteuern (105b) des Elektromotors mit Stellgrößen $\tau_m^F(t)$, die das Robotergelenk in einen vorgegebenen Fehlerzustand FZ steuern, und/oder Aktivieren (105c) eines mechanischen Mechanismus zum Bremsen einer Bewegung des Robotergelenks.

2. Verfahren nach Anspruch 1,
bei dem das Warnsignal optisch und/oder akustisch ausgegeben wird.

3. Verfahren nach Anspruch 1 oder 2,
bei dem durch den ersten Fehlerdetektor und den zweiten Fehlerdetektor jeweils eine Art des jeweils detektierten Fehlers ermittelt wird.

4. Verfahren nach einem der Ansprüche 1 bis 3,
bei dem die Stellgrößen $\tau_m^F(t)$ und/oder der Fehlerzustand FZ von der Art des detektierten Fehlers abhängen.

5. Verfahren nach einem der Ansprüche 1 bis 4,
bei dem der zweite Fehlerdetektor zur Fehlerdetektion eine Parameterschätzung auf Basis des Modells und/oder einen Zustandsgrößenbeobachter und/oder einen Kalmanfilter und/oder eine Fehlerdetektion auf Basis von Paritätsgleichungen nutzt.

6. Verfahren nach einem der Ansprüche 1 bis 5,
bei dem der dritte Fehlerdetektor zur Fehlerdetektion eine Fast Fourier Transformation und/oder ein Leistungsdichtespektrum und/oder eine Modalanalyse und/oder Korrelationsanalyse und/oder ein neuronales Netz und/oder einen statistischen Schätzer nutzt.

7. Verfahren nach einem der Ansprüche 1 bis 5,
bei dem der erste Stromsensor eine zur ersten Sensorelektronik redundante zweite Sensorelektronik zur Ermittlung eines zweiten Betriebsstroms $i_{k,2}(t)$ des Elektromotors aufweist, mit k = 1, 2, ..., wobei durch einen fünften Fehlerdetektor ein Fehler dann detektiert wird, wenn ein Vergleich von $i_{k,1}(t)$ und $i_{k,2}(t)$ fünften Grenzwertbedingungen nicht genügt.

8. Digitales Speichermedium mit elektronisch auslesbaren Steuersignalen, wobei die Steuersignale so mit einem programmierbaren Computersystem zusammenwirken können, dass ein Verfahren nach einem der vorhergehenden Ansprüche ausgeführt wird.

9. Computer-Programm-Produkt mit auf einem maschinenlesbaren Träger gespeicherten Programmcode zur Durchführung des Verfahrens nach einem der vorhergehenden Ansprüche 1 - 7, wenn der Programmcode auf einer Datenverarbeitungsvorrichtung ausgeführt wird.

10. Computer-Programm mit Programmcodes zur Durchführung des Verfahrens nach einem der vorhergehenden Ansprüche, 1 - 7 wenn das Programm auf einer Datenverarbeitungsvorrichtung abläuft.

11. Vorrichtung zur Steuerung/Regelung eines mittels eines Elektromotors angetriebenen Robotergelenks, wobei das Robotergelenk einen Stromsensor mit einer ersten Sensorelektronik zur Erfassung eines ersten Betriebsstroms $i_{k,1}(t)$ des Elektromotors, mit k = 1, 2, ..., einen ersten Positionssensor zur Erfassung einer Antriebsposition $\theta_m(t)$ eines Antriebsstrangs des Robotergelenks, einen zweiten Positionssensor zur Erfassung einer Abtriebsposition $q(t)$ eines Abtriebsstrangs des Robotergelenks, und einen ersten Drehmomentsensor zur Erfassung eines Drehmoments $\tau_{J,1}(t)$ im Abtriebsstrang aufweist, wobei der Elektromotor von einer Steuer- und Regeleinheit (206) auf Basis einer

vorgegebenen Soll-Stellgröße $\tau_m(t)$ gesteuert/geregelt wird, umfassend:

- eine Schnittstelle (201) zum Bereitstellen der Messwerte $\theta_m(t), i_{k,1}(t), \tau_J(t), q(t)$ ;
- einen ersten Fehlerdetektor (202) zum Prüfen auf Vorliegen eines Fehlers, wobei der erste Fehlerdetektor derart ausgelegt ist, dass das Vorliegen eines Fehlers dann detektiert wird, wenn die Messwerte $\theta_m(t), i_{k,1}(t), \tau_J(t), q(t)$ und/oder deren Zeitableitungen vorgegebene erste Grenzwertbedingungen nicht erfüllen; und
- einen zweiten Fehlerdetektor (203) zum Prüfen auf Vorliegen eines Fehlers, wobei der der zweite Fehlerdetektor derart ausgelegt ist, dass das Vorliegen eines Fehlers auf Basis der Messwerte $\theta_m(t), i_{k,1}(t), \tau_J(t), q(t)$ und einer Prozessmodell-gestützten Methode ermittelt wird, wobei das Prozessmodell ein vorgegebenes mathematisches dynamisches Modell des Robotergelenks ist, und wobei ein Fehler dann detektiert wird, wenn Parameter des Modells, Residuen zwischen vom Prozessmodell rekonstruierten Größen und den Messgrößen $\theta_m(t), i_{k,1}(t), \tau_J(t), q(t)$ und/oder Modell-intern ermittelte Parameter vorgegebene zweite Grenzwertbedingungen nicht erfüllen; und
- entweder einen dritten Fehlerdetektor (204) zum Prüfen auf Vorliegen eines Fehlers, wobei der dritte Fehlerdetektor derart ausgelegt ist, dass das Vorliegen eines Fehlers auf Basis der Messwerte $\tau_J(t)$ und einer Signalgestützten Methode ermittelt wird, wobei ein Fehler dann detektiert wird, wenn Signalgrößen, wie beispielsweise Amplituden und/oder charakteristische Frequenzen, der Messwerte $\tau_J(t)$ vorgegebene dritte Grenzwertbedingungen nicht erfüllen, oder

einen zweiten Drehmomentsensor zum Erfassen eines Drehmoments $\tau_{J,2}(t)$ im Abtriebsstrang oder eine redundant ausgelegte Sensorelektronik des ersten Drehmomentsensors zum Erfassen eines Drehmoments $\tau_{J,2}(t)$ und einen vierten Fehlerdetektor zum Prüfen auf Vorliegen eines Fehlers, wobei der vierte Fehlerdetektor (205) derart ausgelegt ist, dass das Vorliegen eines Fehler auf Basis der Messwerte $\tau_{J,1}(t)$ und $\tau_{J,2}(t)$ ermittelt wird, wobei ein Fehler dann detektiert wird wenn ein Vergleich von $\tau_{J,1}(t)$ und $\tau_{J,2}(t)$ vierten Grenzwertbedingungen nicht genügt, und

wobei die Steuer- und Regeleinheit (206) derart ausgeführt ist, dass sofern von einem der vorhandenen Fehlerdetektoren ein Fehler detektiert wird, ein Warnsignal erzeugt wird und/oder der Elektromotor Stellgrößen $\tau_m^F(t)$ angesteuert wird, die das Robotergelenk in einen vorgegebenen Fehlerzustand FZ steuern, und/oder ein am Robotergelenk vorhandener mechanischer Mechanismus zum Bremsen einer Bewegung des Robotergelenks aktiviert wird.

**12.** Robotermanipulator mit einer Vorrichtung nach Anspruch 11.

**13.** Roboter mit einer Vorrichtung nach Anspruch 11.

**Claims**

**1.** Method for open-loop/closed-loop control of a robot joint driven by means of an electric motor, wherein the robot joint has a current sensor with first sensor electronics for detecting a first operating current $i_{k,1}(t)$ of the electric motor, with k = 1, 2, ..., a first position sensor for detecting a drive position $\theta_m(t)$ of a drive train of the robot joint, a second position sensor for detecting a drive position $q(t)$ of a drive train of the robot joint, and a first torque sensor for detecting a torque $\tau_{J,1}(t)$ in the drive train, wherein the electric motor is controlled in an open-loop/closed-loop manner based on a predetermined setpoint manipulated variable $\tau_m(t)$, having the following steps:

- providing (101) the measured values $\theta_m(t), i_{k,1}(t), \tau_J(t), q(t)$,
- checking (102) for the presence of an error by the first error detector, which detects the presence of an error if the measured values $\theta_m(t), i_{k,1}(t), \tau_J(t), q(t)$ and/or their time derivatives do not meet predetermined first threshold conditions, and
- checking (103) for the presence of an error by the second error detector, which determines the presence of an error based on the measured values $\theta_m(t), i_{k,1}(t), \tau_J(t), q(t)$ of a process model-supported method, wherein the process model is a predetermined mathematical dynamic model of the robot joint, and wherein an error is detected when parameters of the model, residuals between variables reconstructed by the process model and the measured variables and/or parameters determined internally in the model do not meet predetermined second threshold conditions, and
- either providing (104a) the measured values $\tau_J(t)$ to a third error detector, which detects the presence of an error based on a signal-supported method, wherein an error is detected if signal variables, such as amplitudes and/or characteristic frequencies, of the measured values $\tau_J(t)$ do not meet predetermined third threshold conditions, or

- determining (104b) a torque $\tau_{J,2}(t)$ in the drive train with a second torque sensor or with redundantly designed sensor electronics of the first torque sensor and detecting an error by a fourth error detector if a comparison of $\tau_{J,1}(t)$ and $\tau_{J,2}(t)$ does not satisfy fourth threshold conditions, and

- if an error is detected by one of the available error detectors, producing (105a) a warning signal and/or controlling (105b) the electric motor with manipulated variables $\tau_m^F(t)$ , which move the robot joint to a predetermined error state FZ, and/or activating (105c) a mechanic mechanism for braking a movement of the robot joint.

2. Method according to Claim 1,
   in which the warning signal is output visually and/or acoustically.

3. Method according to Claim 1 or 2,
   in which respectively a type of the respectively detected error is determined by the first error detector and the second error detector.

4. Method according to one of Claims 1 to 3,
   in which the manipulated variables $\tau_m^F(t)$ and/or the error state FZ depend on the type of the detected error.

5. Method according to one of Claims 1 to 4,
   in which the second error detector uses, for the purpose of error detection, parameter estimation based on the model and/or a state variable observer and/or a Kalman filter and/or error detection based on parity equations.

6. Method according to one of Claims 1 to 5,
   in which the third error detector uses, for the purpose of error detection, a fast Fourier transform and/or a power density spectrum and/or a modal analysis and/or a correlation analysis and/or a neural network and/or a statistical estimator.

7. Method according to one of Claims 1 to 5,
   in which the first current sensor has second sensor electronics redundant to the first sensor electronics for determining a second operating current $i_{k,2}(t)$ of the electric motor, with k = 1, 2, ..., wherein an error is detected by a fifth error detector if a comparison of $i_{k,1}(t)$ and $i_{k,2}(t)$ does not satisfy fifth threshold conditions.

8. Digital storage medium with electronically readable control signals, wherein the control signals can interact with a programmable computer system such that a method according to one of the preceding claims is carried out.

9. Computer program product having program code stored on a machine-readable medium for carrying out the method according to one of the preceding claims 1 to 7 if the program code is executed on a data processing device.

10. Computer program with program code for carrying out the method according to one of the preceding claims 1 to 7 if the program runs on a data processing device.

11. Device for open-loop/closed-loop control of a robot joint driven by means of an electric motor, wherein the robot joint has a current sensor with first sensor electronics for detecting a first operating current $i_{k,1}(t)$ of the electric motor, with k = 1, 2, ..., a first position sensor for detecting a drive position $\theta_m(t)$ of a drive train of the robot joint, a second position sensor for detecting a drive position $q(t)$ of a drive train of the robot joint, and a first torque sensor for detecting a torque $\tau_{J,1}(t)$ in the drive train, wherein the electric motor is controlled in an open-loop/closed-loop manner by an open-loop and closed-loop control unit (206) based on a predetermined setpoint manipulated variable $\tau_m(t)$, comprising:

- an interface (201) for providing the measured values $\theta_m(t), i_{k,1}(t), \tau_J(t), q(t)$;
- a first error detector (202) for checking for the presence of an error, wherein the first error detector is designed in such a way that the presence of an error is detected if the measured values $\theta_m(t), i_{k,1}(t), \tau_J(t), q(t)$ and/or their time derivatives do not meet predetermined first threshold conditions; and
- a second error detector (203) for checking for the presence of an error, wherein the second error detector is designed in such a way that the presence of an error is determined based on the measured values $\theta_m(t), i_{k,1}(t), \tau_J(t), q(t)$ and a process model-supported method, wherein the process model is a predetermined mathematical dynamic model of the robot joint, and wherein an error is detected when parameters of the model, residuals between variables reconstructed by the process model and the measured variables $\theta_m(t), i_{k,1}(t), \tau_J(t), q(t)$ and/or parameters determined internally in the model do not meet predetermined second threshold conditions; and

- either a third error detector (204) for checking for the presence of an error, wherein the third error detector is designed in such a way that the presence of an error is determined based on the measured values $\tau_J(t)$ and a signal-supported method, wherein an error is detected if signal variables, such as amplitudes and/or characteristic frequencies, of the measured values $\tau_J(t)$ do not meet predetermined third threshold conditions, or

a second torque sensor for detecting a torque $\tau_{J,2}(t)$ in the drive train or redundantly designed sensor electronics of the first torque sensor for detecting a torque $\tau_{J,2}(t)$ and a fourth error detector for checking for the presence of an error, wherein the fourth error detector (205) is designed in such a way that the presence of an error is determined based on the measured values $\tau_{J,1}(t)$ and $\tau_{J,2}(t)$, wherein an error is detected if a comparison of $\tau_{J,1}(t)$ and $\tau_{J,2}(t)$ does not satisfy fourth threshold conditions, and

wherein the open-loop and closed-loop control unit (206) is designed in such a way that if an error is detected by one of the available error detectors, a warning signal is produced and/or the electric motor is controlled with manipulated variables $\tau_m^F(t)$, which move the robot joint to a predetermined error state FZ, and/or a mechanic mechanism present on the robot joint is activated for braking a movement of the robot joint.

**12.** Robotic manipulator having a device according to Claim 11.

**13.** Robot having a device according to Claim 11.

**Revendications**

**1.** Procédé, destiné à commander/réguler une articulation de robot entraînée au moyen d'un moteur électrique, l'articulation de robot comportant un capteur de courant doté d'une première électronique de capteur pour la détection d'un premier courant de service $i_{k,1}(t)$ du moteur électrique, avec k = 1, 2, ... , un premier capteur de position pour la détection d'une position d'entraînement $\theta_m(t)$ d'une ligne d'entraînement de l'articulation de robot, un deuxième capteur de position pour la détection d'une position de sortie $q(t)$ d'une ligne de sortie de l'articulation de robot, et un premier capteur de couple pour la détection d'un couple $\tau_{J,1}(t)$ dans la ligne de sortie, le moteur électrique étant commandé/régulé sur la base d'une grandeur de réglage de consigne $\tau_m(t)$ prédéfinie, comportant les étapes suivantes, consistant à :

- mettre à disposition (101) les valeurs de mesure $\theta_m(t), i_{k,1}(t), \tau_J(t), q(t)$,
- vérifier (102) la présence d'un défaut par le premier détecteur de défaut, qui détecte la présence d'un défaut si les valeurs de mesure $\theta_m(t), i_{k,1}(t), \tau_J(t), q(t)$ et/ou leurs dérivées temporelles ne satisfont pas à des premières conditions de valeurs limites prédéfinies, et
- vérifier (103) la présence d'un défaut par le deuxième détecteur de défaut, qui détecte la présence d'un défaut sur la base des valeurs de mesure $\theta_m(t), i_{k,1}(t), \tau_J(t), q(t)$ d'une méthode assistée par modèle de processus, le modèle de processus étant un modèle mathématique dynamique prédéfini de l'articulation de robot, et un défaut étant détecté si des paramètres du modèle, des résidus entre des grandeurs reconstruites par le modèle de processus et les valeurs de mesure et/ou des paramètres déterminés en interne du modèle ne satisfont pas à des deuxièmes conditions de valeurs limites prédéfinies, et
- soit mettre (104a) les valeurs de mesure $\tau_J(t)$ à disposition d'un troisième détecteur de défaut, qui détecte la présence d'un défaut sur la base d'une méthode assistée par signal, un défaut étant détecté si des grandeurs de signal, comme par exemple des amplitudes et/ou des fréquences caractéristiques des valeurs de mesure $\tau_J(t)$ ne satisfont pas à des troisièmes conditions de valeurs limites prédéfinies, ou
- déterminer (104b) un couple $\tau_{J,2}(t)$ dans la ligne de sortie à l'aide d'un deuxième capteur de couple ou à l'aide d'une électronique de capteur de conception redondante du premier capteur de couple et détecter un défaut par un quatrième détecteur de défaut si une comparaison de $\tau_{J,1}(t)$ et $\tau_{J,2}(t)$ ne satisfait pas à des quatrièmes conditions de valeurs limites, et
- si un défaut est détecté par l'un des détecteurs de défaut présents, générer (105a) un signal d'alerte et/ou actionner (105b) le moteur électrique avec des grandeurs de réglage $\tau_m^F(t)$, qui commandent l'articulation de robot dans un état de défaut FZ prédéfini, et/ou activer (105c) un mécanisme mécanique destiné à freiner un déplacement de l'articulation de robot.

2.  Procédé selon la revendication 1,
    lors duquel le signal d'alerte est délivré par voie optique et/ou acoustique.

3.  Procédé selon la revendication 1 ou 2,
    lors duquel le premier détecteur de défaut et le deuxième détecteur de défaut détectent chacun un type du défaut respectivement détecté.

4.  Procédé selon l'une quelconque des revendications 1 à 3,
    lors duquel les grandeurs de réglage $\tau_m^F(t)$ et/ou l'état de défaut FZ dépendent du type de défaut détecté.

5.  Procédé selon l'une quelconque des revendications 1 à 4,
    lors duquel pour la détection d'un défaut, le deuxième détecteur de défaut utilise une estimation de paramètres sur la base du modèle et/ou un observateur de grandeurs d'état et/ou un filtre de Kalman et/ou une détection de défaut basée sur des équations paritaires.

6.  Procédé selon l'une quelconque des revendications 1 à 5,
    lors duquel pour la détection d'un défaut, le troisième détecteur de défaut utilise une transformation de Fourier rapide et/ou un spectre de densité de puissance et/ou une analyse modale et/ou une analyse des corrélations et/ou un réseau neuronal et/ou un évaluateur statistique.

7.  Procédé selon l'une quelconque des revendications 1 à 5,
    lors duquel le premier capteur de courant comporte une deuxième électronique de capteur, redondante par rapport à la première électronique de capteur pour déterminer un deuxième courant de service $i_{k,2}(t)$ du moteur électrique, avec k = 1, 2, ..., par un cinquième détecteur de défaut, un défaut étant détecté si une comparaison de $i_{k,1}(t)$ et $i_{k,2}(t)$ ne satisfait pas à des cinquièmes conditions de valeurs limites.

8.  Support de mémoire numérique, avec des signaux de commande lisibles par voie électronique, les signaux de commande étant susceptibles d'interagir avec une système informatique programmable par réalisation d'un procédé selon l'une quelconque des revendications précédentes.

9.  Produit de programme informatique, pourvu d'un code programme mémorisé sur un support lisible par machine, pour réaliser le procédé selon l'une quelconque des revendications 1 à 7 précédentes, lorsque le code programme est exécuté sur un dispositif de traitement de données.

10. Programme informatique pourvu de codes programme, pour la réalisation du procédé selon l'une quelconque des revendications 1 à 7 précédentes, lorsque le code programme est exécuté sur un dispositif de traitement de données.

11. Dispositif, destiné à commander/réguler une articulation de robot entraînée au moyen d'un moteur électrique, l'articulation de robot comportant un capteur de courant doté d'une première électronique de capteur pour la détection d'un premier courant de service $i_{k,1}(t)$ du moteur électrique, avec k = 1, 2, un premier capteur de position pour la détection d'une position d'entraînement $\theta_m(t)$ d'une ligne d'entraînement de l'articulation de robot, un deuxième capteur de position pour la détection d'une position de sortie $q(t)$ d'une ligne de sortie de l'articulation de robot, et un premier capteur de couple pour la détection d'un couple $\tau_{j,1}(t)$ dans la ligne de sortie t, le moteur électrique étant commandé/régulé par une unité de commande et de régulation (206) sur la base d'une grandeur de réglage de consigne $\tau_m(t)$ prédéfinie, comprenant :

    - une interface (201) destinée à mettre à disposition des valeurs de mesure $\theta_m(t), i_{k,1}(t), \tau_J(t), q(t)$;
    - un premier détecteur de défaut (202), destiné à vérifier la présence d'un défaut, le premier détecteur de défaut étant conçu de sorte que la présence d'un défaut soit détectée si les valeurs de mesure $\theta_m(t), i_{k,1}(t), \tau_J(t), q(t)$, et/ou leurs dérivées temporelles ne satisfont pas à des premières conditions de valeurs limites prédéfinies ; et
    - un deuxième détecteur de défaut (203), destiné à vérifier la présence d'un défaut, le deuxième détecteur de défaut étant conçu de sorte que la présence d'un défaut soit déterminée sur la base des valeurs de mesure

$\theta_m(t), i_{k,1}(t), \tau_J(t), q(t)$ et d'une méthode assistée par modèle de processus, le modèle de processus étant un modèle mathématique dynamique de l'articulation de robot, et un défaut étant détecté si des paramètres du modèle, des résidus entre des grandeurs reconstruites par le modèle de processus et les valeurs de mesure $0\theta_m(t), i_{k,1}(t), \tau_J(t), q(t)$ et/ou des paramètres déterminés en interne du modèle ne satisfont pas à des deuxièmes conditions de valeurs limites prédéfinies ; et

- soit un troisième détecteur de défaut (204), destiné à vérifier la présence d'un défaut, le troisième détecteur de défaut étant conçu de sorte à déterminer la présence d'un défaut sur la base des valeurs de mesure $\tau_j(t)$ et d'une méthode assistée par signal, un défaut étant détecté si des grandeurs de signal, comme par exemple des amplitudes et/ou des fréquences caractéristiques, des valeurs de mesure $\tau_j(t)$ ne satisfont pas à des troisièmes conditions de valeurs limites prédéfinies, ou

un deuxième capteur de couple, destiné à détecter un couple $\tau_{j,2}(t)$ dans la ligne de sortie ou une électronique de capteur conçue en redondance du premier capteur de couple, destinée à détecter un couple $\tau_{j,2}(t)$ et un quatrième détecteur de défaut, destiné à vérifier un défaut, le quatrième détecteur de défaut (205) étant conçu de sorte à déterminer la présence d'un défaut sur la base des valeurs de mesure $\tau_{j,1}(t)$ et $\tau_{j,2}(t)$, un défaut étant détecté si une comparaison de $\tau_{j,1}(t)$ et $\tau_{j,2}(t)$ ne satisfait pas à des quatrièmes conditions de valeurs limites, et

l'unité de commande et de régulation (206) étant réalisée de sorte que lorsqu'un défaut est détecté par l'un des détecteurs de défaut présents, un signal d'alerte soit généré et/ou le moteur électrique soit actionné par des grandeurs de réglage $\tau_m^F(t)$ qui commandent l'articulation de robot dans un état de défaut FZ prédéfini, et/ou un mécanisme mécanique présent sur l'articulation de robot destiné à freiner un déplacement de l'articulation de robot soit activé.

12. Manipulateur de robot, doté d'un dispositif selon la revendication 11.

13. Robot, doté d'un dispositif selon la revendication 11.

Fig. 1.1

Fig. 1.2

$$u(t) \longrightarrow \boxed{\begin{array}{l} \dot{\mathbf{x}}(t) = \mathbf{A}\mathbf{x}(t) + \mathbf{B}\mathbf{u}(t) \\ \mathbf{y}(t) = \mathbf{C}\mathbf{x}(t) \end{array}} \longrightarrow y(t)$$

$$\boxed{\mathbf{H_\xi}}$$

$$\boxed{\mathbf{T_2}}$$

$$\boxed{\mathbf{B_\xi}} \quad \hat{\dot{\xi}}(t) \quad \oplus \quad \boxed{\int} \quad \hat{\xi} \quad \boxed{\mathbf{C_\xi}} \quad \oplus \quad r$$

$$\boxed{\mathbf{A_\xi}}$$

**Fig. 1.3**

$$u \longrightarrow \boxed{\dfrac{B(s)}{A(s)}} \longleftarrow y$$

$$\boxed{\hat{B}(s)} \longrightarrow \oplus \longleftarrow \boxed{\hat{A}(s)}$$

$$\hat{\Theta}_b \qquad e \qquad \hat{\Theta}_a$$

$$\boxed{\begin{array}{c} \text{Parameter} \\ \text{Schätzung} \end{array}}$$

**Fig. 1.4**

Fig.1.5

Fig. 1.6

Fig. 2.1

Fig. 2.2

Fig. 2.3

Fig. 2.4

Fig. 2.5

Fig. 2.6

Fig. 2.7

Fig. 2.8 a-e

Fig. 3.1

Fig. 3.2

Fig. 3.3

Fig. 3.4

Fig. 3.5

Fig. 3.6

Fig. 3.7

Fig. 3.8

Fig. 3.9

Fig. 3.10

Fig. 3.11

Fig. 3.12

Fig. 3.13

Fig. 3.14

Fig. 3.15

Fig. 3.16

Fig. 3.17

Fig. 3.19

Fig. 3.18

Fig. 3.20

Fig. 3.21

Fig. 3.22

Fig. 3.23

Fig. 3.24

Fig. 3.25

Fig. 3.26

Fig. 3.27

Fig. 3.28

Fig. 3.29

Fig. 3.30

Fig. 3.31

Fig. 3.32

Fig. 3.33

Fig. 3.34

Fig. 3.35

Fig. 3.36

Fig. 3.37

Fig. 3.38

Fig. 3.39

Fig. 4.1

Fig. 4.2

Fig. 4.3

Fig. 4.4

Fig. 4.5

Fig. 4.6

POSITIONS
SENSOR
$\theta_m$

POSITIONS
SENSOR
$q$

BLDC

HD MIT
DREHMOMENT SENSOR
$\tau_J$

LAST

## Fig. 5.1

## Fig. 5.2

Abbildung 5.3: Schema der Anbindung der FDI an den Ver-
----hsaufbau

## Fig. 5.3

## Fig. 5.4

Fig. 5.5a

Fig. 5.5b

Fig. 5.5c

Fig. 5.6a

Fig. 5.6b

Fig. 5.6c

Fig. 6.1

Fig. 6.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016184451 A1
- US 20140201571 A1
- EP 1600833 A2
- WO 2014036138 A1